# EUROPEAN PATENT SPECIFICATION

(11) **EP 3 005 668 B1**
(45) Date of publication and mention of the grant of the patent: **19.12.2018**
(21) Application number: 14737379.9
(22) Date of filing: 05.06.2014
(51) Int. Cl.: H04M 1/60, H04M 1/725

(54) **APPLICATION GATEWAY FOR PROVIDING DIFFERENT USER INTERFACES FOR LIMITED DISTRACTION AND NON-LIMITED DISTRACTION CONTEXTS**
ANWENDUNGSGATEWAY ZUR BEREITSTELLUNG VERSCHIEDENER BENUTZEROBERFLÄCHEN FÜR KONTEXTE MIT BEGRENZTER DISTRAKTION UND UNBEGRENZTER DISTRAKTION
PASSERELLE D'APPLICATION SERVANT À FOURNIR DIFFÉRENTES INTERFACES UTILISATEURS POUR DES CONTEXTES DE DISTRACTION LIMITÉE ET DE DISTRACTION NON LIMITÉE

(30) Priority: 08.06.2013 US 201313913428
(43) Date of publication of application: 13.04.2016
(73) Proprietor: Apple Inc., Cupertino CA 95014 (US)
(72) Inventor: SCHUBERT, Emily, Clark, Cupertino, CA 95014 (US); SADDLER, Harry, J., Cupertino, CA 95014 (US); NAPOLITANO, Lia, T., Cupertino, CA 95014 (US); GRUBER, Thomas, R., Cupertino, CA 95014 (US)
(74) Representative: Gillard, Matthew Paul
(86) International application number: PCT/US2014/041159
(87) International publication number: WO 2014/197730

(56) References cited:
- WO-A1-2011/116309
- WO-A1-2013/048880

## Description

### FIELD OF THE INVENTION

The present invention relates to multimodal user interfaces, and more specifically to user interfaces that adapt to different limited and non-limited distraction contexts.

### BACKGROUND OF THE INVENTION

As electronic multifunction devices have become increasingly relied upon for personal, business and social tasks, many users of electronic multifunction devices find that it is difficult to utilize the various functions of these devices while experiencing a "distracting" situation, such as driving a vehicle, running on a treadmill or attending a class. Attempting to use such multifunction devices while the user is in a distracting context can pose dangerous risks for the user to perform as well as other people. One example of an existing tool, to allow a user to perform some of the functions of these devices while experiencing a distracting situation, is a vehicle system that uses Bluetooth® technology to allow the user to receive a phone call without needing to hold or look at a cell phone device. Another example is using wired headphones equipped with controls to start or stop playback of music on a portable music player device. However, the various tools that exist to alleviate the problem of using electronic multifunction devices in a highly distracting situation, fail to provide a comprehensive solution across limited and non-limited distraction contexts.

WO2013/048880A1 describes a portable electronic device that can detect a hands-free context from user input, connection/disconnection of a peripheral, current location and current speed.

### SUMMARY

The invention is defined by the appended claims, to which reference should now be made. The paragraphs below set out details of some embodiments of the invention.

The embodiments and/or examples of the following description which are not covered by the appended claims are considered as not being part of the present invention.

Accordingly, there is a need for an electronic multifunction device that can determine whether it is or is not being operated in a limited-distraction context, and provide an appropriate user interface. An example of a limited distraction context is one where the device is connected to a vehicle information presentation system (e.g., a presentation system for entertainment and/or navigation information) and the vehicle is either moving or is determined to be in a state consistent with moving (e.g., where the transmission is in any mode consistent with driving the vehicle).

According to various embodiments of the present invention, an electronic multifunction device receives a first input that corresponds to a request to open a respective
application. In response to receiving that first input, a determination is made whether or not the device is being operated in a limited-distraction context. If the device is being operated in a limited-distraction context, a limited-distraction user interface is provided, but if the device is not being operated in a limited-distraction context, the non-limited user interface is provided. For example, an electronic device receives a first input from a user that corresponds to a request to open the email application, and in response to that input a determination is made that the device is being operated in a limited-distraction context (e.g., in a moving vehicle). The device then provides the limited-distraction user interface for the email application.

In accordance with some embodiments, while displaying the limited-distraction user interface, the device receives a second input that corresponds to a request to dismiss the limited-distraction user interface. In response to receiving the second input, the non-limited user interface for the respective application is displayed. For example, while the device is displaying the limited-distraction user interface (on the device itself, or another display), it receives a second input that corresponds to a request to dismiss the limited-distraction user interface (e.g., if the user is a passenger in a moving vehicle), and in response to the second input, the non-limited user interface is displayed.

In accordance with some embodiments, providing the limited-distraction user interface for a respective application includes providing audible prompts that describe options for interacting with the limited-distraction user interface, and performing one or more operations in response to receiving one or more spoken commands. For example, the limited-distraction user interface for a text messaging application provides audible prompts to reply to a text message, compose a new text message, read the last text message or compose and send a text message at a later time.

In accordance with some embodiments, providing the limited-distraction user interface of a respective application includes making a determination that one or more new notifications related to the respective application have been received within a respective time period. For example, while providing the limited-user interface for the email application, a determination is made whether or not one or more new emails were received in the last 30 minutes. In accordance with a determination that one or more new notifications related to the respective application have been received within a respective time period, the user is provided with a first option to review one or more new notifications and a second option to perform a predefined operation associated with the respective application. As in the prior example, if one or more new emails have been received within the last 30 minutes, the user is presented with the first option to listen to a text-to-speech translation of the one or more new emails, and a second option to compose a new email. In accordance with a determination that no new notifications related to the respective application have been received within a respective time period, the user is provided with the second option to compose an email.

In accordance with some embodiments, while providing the limited-distraction user interface, a second input is received that corresponds to a request to listen to audio corresponding to a respective communication (e.g., a text-to-speech translation of a text message), the audio corresponding to the respective communication is played, then an audible description of a plurality of options of spoken commands for responding to the respective communication is provided (e.g., reply to text message, forward text message, delete text message).

In accordance with some embodiments, the electronic device is a portable device that is connected to a vehicle information presentation system, and providing the limited-distraction user interface includes sending instructions to the vehicle information presentation system to output information that corresponds to the limited-distraction user interface. In accordance with some embodiments, the electronic device is a portable device that is connected to a vehicle information presentation system and providing the non-limited user interface includes sending instructions to the vehicle information presentation system to output information that corresponds to the non-limited user interface.

In accordance with some embodiments, the non-limited user interface includes a displayed user interface for performing a respective operation (e.g., the non-limited user interface for the voice communications application displays a keypad). The limited-distraction user interface does not include a displayed user interface for performing the respective operation (e.g., the limited-user interface for the voice communications application does not display a keypad). While providing the limited-distraction user interface, a spoken command to perform the respective operation is received (e.g., the user verbally states the phone number to call). In response to receiving the spoken command, the respective operation is performed (e.g., the call is placed).

In accordance with some embodiments, the device receives a request to provide text of a message. In response to the request, the text of the message is provided to the user. When the limited-distraction user interface is being provided, providing the text of the message to the user includes reading the text of the message to the user without displaying the text. When the non-limited user interface is being provided, providing the text of the message to the user includes displaying the text of the message on a display (e.g., a display on the device, a vehicle information presentation system or the display on a treadmill).

In accordance with some embodiments, providing the limited-distraction user interface includes displaying a first affordance for performing a respective operation in the respective application, wherein the first affordance has a size larger than a respective size (e.g., the limited-distraction user interface for the voice communications application includes providing a button to place a call, that has a size larger than a respective size for such a button). Providing the non-limited user interface includes displaying a second affordance for performing the respective operation in the respective application, wherein the second affordance has a size equal to or smaller than the respective size (e.g., the non-limited user interface for the voice communications application allows for multiple affordances to allow the user to directly call favorite contacts, whereby the affordances are smaller than a respective size).

In accordance with some embodiments, while the limited-distraction user interface is being provided, a first operation is performed in the respective application in response to user inputs (e.g., placing a phone call or sending a new text message). After performing the first operation, while the non-limited user interface is being provided, a second input is detected. In response to detecting the second input, an indication that the first operation was performed, is displayed (e.g., the device displays a recent calls list or a messaging conversation that shows that the call or message was sent while the device was operating in the limited-distraction context). The device may display the information on a display on the device, or an external display such as a vehicle information presentation system.

### BRIEF DESCRIPTION OF THE DRAWINGS

Fig. 1 is a screen shot illustrating an example of a hands-on interface for reading a text message, according to the prior art.
Fig. 2 is a screen shot illustrating an example of an interface for responding to a text message.
Figs. 3A and 3B are a sequence of screen shots illustrating an example wherein a voice dictation interface is used to reply to a text message.
Fig. 4 is a screen shot illustrating an example of an interface for receiving a text message, according to one embodiment.
Figs. 5A through 5D are a series of screen shots illustrating an example of operation of a multimodal virtual assistant according to an embodiment of the present invention, wherein the user receives and replies to a text message in a hands-free context.
Figs. 6A through 6C are a series of screen shots illustrating an example of operation of a multimodal virtual assistant according to an embodiment of the present invention, wherein the user revises a text message in a hands-free context.
Figs. 7A-7D are flow diagrams of methods of adapting a user interface, according to some embodiments.
Fig. 7E is a flow diagram depicting methods of operation of a virtual assistant that supports dynamic detection of and adaptation to a hands-free context, according to one embodiment.
Fig. 8 is a block diagram depicting an example of a virtual assistant system according to one embodiment.
Fig. 9 is a block diagram depicting a computing device suitable for implementing at least a portion of a virtual assistant according to at least one embodiment.
Fig. 10 is a block diagram depicting an architecture for implementing at least a portion of a virtual assistant on a standalone computing system, according to at least one embodiment.
Fig. 11 is a block diagram depicting an architecture for implementing at least a portion of a virtual assistant on a distributed computing network, according to at least one embodiment.
Fig. 12 is a block diagram depicting a system architecture illustrating several different types of clients and modes of operation.
Fig. 13 is a block diagram depicting a client and a server, which communicate with each other to implement the present invention according to one embodiment.
Figs. 14A-14L is a flow diagram depicting a method of operation of a virtual assistant that provides hands-free list reading according some embodiments.
Figure 15A is a block diagram illustrating a portable multifunction device with a touch-sensitive display in accordance with some embodiments.
Figure 15B is a block diagram illustrating exemplary components for event handling in accordance with some embodiments.
Figure 15C is a block diagram illustrating an operating environment in accordance with some embodiments.
Figures 16A-16F illustrate a flowchart of a method of operating an electronic device, optionally in conjunction with an external information processing system, in a limited-distraction context.

### DETAILED DESCRIPTION OF THE EMBODIMENTS

The use of multifunctional electronic devices, such as smart phones (sometimes called cell phones) is prevalent in society. It is sometimes necessary or desirable to use such devices under highly distracting conditions. Because a user may decide to check email while driving a car or wish to listen to a voicemail message while running on a treadmill, a device that can provide one user interface for use in a distracting context and a different user interface for use in a non-distracting context, can provide convenience, flexibility and safety.

The methods, devices and user interfaces described herein provide for a limited-distraction user interface for a respective application, in accordance with a determination that the device is being operated in a limited-distraction context (e.g., while the device is connected to a vehicle information presentation system), and a non-limited user interface for a respective application in accordance with a determination that the device is not being operated in a limited-distraction context.

According to various embodiments of the present invention, a hands-free context is detected in connection with operations of a virtual assistant, and the user interface of the virtual assistant is adjusted accordingly, so as to enable the user to interact with the assistant meaningfully in the hands-free context.

For purposes of the description, the term "virtual assistant" is equivalent to the term "intelligent automated assistant", both referring to any information processing system that performs one or more of the functions of:
- interpreting human language input, in spoken and/or text form;
- operationalizing a representation of user intent into a form that can be executed, such as a representation of a task with steps and/or parameters;
- executing task representations, by invoking programs, methods, services, APIs, or the like; and
- generating output responses to the user in language and/or graphical form.

An example of such a virtual assistant is described in related U.S. Utility Application Serial No. 12/987,982 for "Intelligent Automated Assistant", filed January 10, 2011.

Various techniques will now be described in detail with reference to example embodiments as illustrated in the accompanying drawings. In the following description, numerous specific details are set forth in order to provide a thorough understanding of one or more aspects and/or features described or reference herein. It will be apparent, however, to one skilled in the art, that one or more aspects and/or features described or reference herein may be practiced without some or all of these specific details. In other instances, well known process steps and/or structures have not been described in detail in order to not obscure some of the aspects and/or features described or reference herein.

One or more different inventions may be described in the present application. Further, for one or more of the invention(s) described herein, numerous embodiments may be described in this patent application, and are presented for illustrative purposes only. The described embodiments are not intended to be limiting in any sense. One or more of the invention(s) may be widely applicable to numerous embodiments, as is readily apparent from the disclosure. These embodiments are described in sufficient detail to enable those skilled in the art to practice one or more of the invention(s), and it is to be understood that other embodiments may be utilized and that structural, logical, software, electrical and other changes may be made without departing from the scope of the one or more of the invention(s). Accordingly, those skilled in the art will recognize that the one or more of the invention(s) may be practiced with various modifications and alterations. Particular features of one or more of the invention(s) may be described with reference to one or more particular embodiments or figures that form a part of the present disclosure, and in which are shown, by way of illustration, specific embodiments of one or more of the invention(s). It should be understood, however, that such features are not limited to usage in the one or more particular embodiments or figures with reference to which they are described. The present disclosure is neither a literal description of all embodiments of one or more of the invention(s) nor a listing of features of one or more of the invention(s) that must be present in all embodiments.

Headings of sections provided in this patent application and the title of this patent application are for convenience only, and are not to be taken as limiting the disclosure in any way.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. To the contrary, a variety of optional components are described to illustrate the wide variety of possible embodiments of one or more of the invention(s).

Further, although process steps, method steps, algorithms or the like may be described in a sequential order, such processes, methods and algorithms may be configured to work in any suitable order. In other words, any sequence or order of steps that may be described in this patent application does not, in and of itself, indicate a requirement that the steps be performed in that order. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred.

When a single device or article is described, it will be readily apparent that more than one device/article (whether or not they cooperate) may be used in place of single device/article. Similarly, where more than one device or article is described (whether or not they cooperate), it will be readily apparent that a single device/article may be used in place of the more than one device or article.

The functionality and/or the features of a device may be alternatively embodied by one or more other devices that are not explicitly described as having such functionality/features. Thus, other embodiments of one or more of the invention(s) need not include the device itself.

Techniques and mechanisms described or reference herein will sometimes be described in singular form for clarity. However, it should be noted that particular embodiments include multiple iterations of a technique or multiple instantiations of a mechanism unless noted otherwise.

Although described within the context of technology for implementing an intelligent automated assistant, also known as a virtual assistant, it may be understood that the various aspects and techniques described herein may also be deployed and/or applied in other fields of technology involving human and/or computerized interaction with software.

Other aspects relating to virtual assistant technology (e.g., which may be utilized by, provided by, and/or implemented at one or more virtual assistant system embodiments described herein) are disclosed in one or more of the following:
- U.S. Utility Application Serial No. 12/987,982 for ⁻Intelligent Automated Assistant", filed January 10, 2011;
- U.S. Provisional Patent Application Serial No. 61/295,774 for "Intelligent Automated Assistant", filed January 18, 2010;
- U.S. Utility Application Serial No. 13/250,854, entitled "Using Context Information to Facilitate Processing of Commands in a Virtual Assistant", filed September 30, 2011;
- U.S. Patent Application Serial No. 11/518,292 for "Method And Apparatus for Building an Intelligent Automated Assistant", filed September 8, 2006;
- U.S. Provisional Patent Application Serial No. 61/186,414 for "System and Method for Semantic Auto-Completion", filed June 12, 2009.

### Hardware Architecture

Generally, the virtual assistant techniques disclosed herein may be implemented on hardware or a combination of software and hardware. For example, they may be implemented in an operating system kernel, in a separate user process, in a library package bound into network applications, on a specially constructed machine, and/or on a network interface card. In a specific embodiment, the techniques disclosed herein may be implemented in software such as an operating system or in an application running on an operating system.

Software/hardware hybrid implementation(s) of at least some of the virtual assistant embodiments) disclosed herein may be implemented on a programmable machine selectively activated or reconfigured by a computer program stored in memory. Such network devices may have multiple network interfaces which may be configured or designed to utilize different types of network communication protocols. A general architecture for some of these machines may appear from the descriptions disclosed herein. According to specific embodiments, at least some of the features and/or functionalities of the various virtual assistant embodiments disclosed herein may be implemented on one or more general-purpose network host machines such as an end-user computer system, computer, network server or server system, mobile computing device (e.g., personal digital assistant, mobile phone, smartphone, laptop, tablet computer, or the like), consumer electronic device, music player, or any other suitable electronic device, router, switch, or the like, or any combination thereof. In at least some embodiments, at least some of the features and/or functionalities of the various virtual assistant embodiments disclosed herein may be implemented in one or more virtualized computing environments (e.g., network computing clouds, or the like).

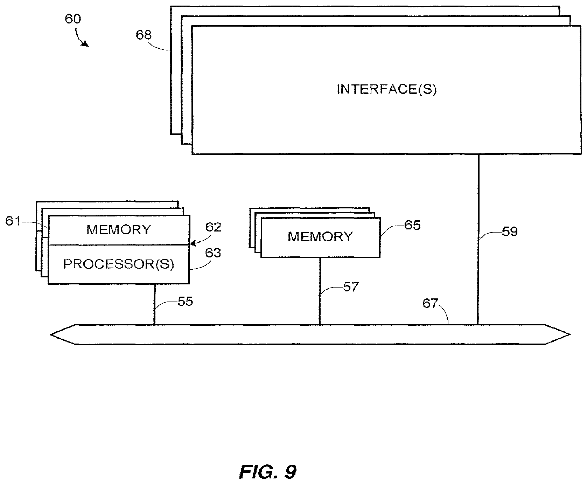

Referring now to Fig. 9, there is shown a block diagram depicting a computing device 60 suitable for implementing at least a portion of the virtual assistant features and/or functionalities disclosed herein. Computing device 60 may be, for example, an end-user computer system, network server or server system, mobile computing device (e.g., personal digital assistant, mobile phone, smartphone, laptop, tablet computer, or the like), consumer electronic device, music player, or any other suitable electronic device, or any combination or portion thereof. Computing device 60 may be adapted to communicate with other computing devices, such as clients and/or servers, over a communications network such as the Internet, using known protocols for such communication, whether wireless or wired.

In one embodiment, computing device 60 includes central processing unit (CPU) 62, interfaces 68, and a bus 67 (such as a peripheral component interconnect (PCI) bus). When acting under the control of appropriate software or firmware, CPU 62 may be responsible for implementing specific functions associated with the functions of a specifically configured computing device or machine. For example, in at least one embodiment, a user's personal digital assistant (PDA) or smartphone may be configured or designed to function as a virtual assistant system utilizing CPU 62, memory 61, 65, and interface(s) 68. In at least one embodiment, the CPU 62 may be caused to perform one or more of the different types of virtual assistant functions and/or operations under the control of software modules/components, which for example, may include an operating system and any appropriate applications software, drivers, and the like.

CPU 62 may include one or more processor(s) 63 such as, for example, a processor from the Motorola or Intel family of microprocessors or the MIPS family of microprocessors. In some embodiments, processor(s) 63 may include specially designed hardware (e.g., application-specific integrated circuits (ASICs), electrically erasable programmable read-only memories (EEPROMs), field-programmable gate arrays (FPGAs), and the like) for controlling the operations of computing device 60. In a specific embodiment, a memory 61 (such as non-volatile random access memory (RAM) and/or read-only memory (ROM)) also forms part of CPU 62. However, there are many different ways in which memory may be coupled to the system. Memory block 61 may be used for a variety of purposes such as, for example, caching and/or storing data, programming instructions, and the like.

As used herein, the term "processor" is not limited merely to those integrated circuits referred to in the art as a processor, but broadly refers to a microcontroller, a microcomputer, a programmable logic controller, an application-specific integrated circuit, and any other programmable circuit.

In one embodiment, interfaces 68 are provided as interface cards (sometimes referred to as "line cards"). Generally, they control the sending and receiving of data packets over a computing network and sometimes support other peripherals used with computing device 60. Among the interfaces that may be provided are Ethernet interfaces, frame relay interfaces, cable interfaces, DSL interfaces, token ring interfaces, and the like. In addition, various types of interfaces may be provided such as, for example, universal serial bus (USB), Serial, Ethernet, Firewire, PCI, parallel, radio frequency (RF), Bluetooth™, near-field communications (e.g., using near-field magnetics), 802.11 (WiFi), frame relay, TCP/IP, ISDN, fast Ethernet interfaces, Gigabit Ethernet interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces 68 may include ports appropriate for communication with the appropriate media. In some cases, they may also include an independent processor and, in some instances, volatile and/or non-volatile memory (e.g., RAM).

Although the system shown in Fig. 9 illustrates one specific architecture for a computing device 60 for implementing the techniques of the invention described herein, it is by no means the only device architecture on which at least a portion of the features and techniques described herein may be implemented. For example, architectures having one or any number of processors 63 can be used, and such processors 63 can be present in a single device or distributed among any number of devices. In one embodiment, a single processor 63 handles communications as well as routing computations. In various embodiments, different types of virtual assistant features and/or functionalities may be implemented in a virtual assistant system which includes a client device (such as a personal digital assistant or smartphone running client software) and server system(s) (such as a server system described in more detail below).

Regardless of network device configuration, the system of the present invention may employ one or more memories or memory modules (such as, for example, memory block 65) configured to store data, program instructions for the general-purpose network operations and/or other information relating to the functionality of the virtual assistant techniques described herein. The program instructions may control the operation of an operating system and/or one or more applications, for example. The memory or memories may also be configured to store data structures, keyword taxonomy information, advertisement information, user click and impression information, and/or other specific non-program information described herein.

Because such information and program instructions may be employed to implement the systems/methods described herein, at least some network device embodiments may include nontransitory machine-readable storage media, which, for example, may be configured or designed to store program instructions, state information, and the like for performing various operations described herein. Examples of such nontransitory machine-readable storage media include, but are not limited to, magnetic media such as hard disks, floppy disks, and magnetic tape; optical media such as CD-ROM disks; magneto-optical media such as floptical disks, and hardware devices that are specially configured to store and perform program instructions, such as read-only memory devices (ROM), flash memory, memristor memory, random access memory (RAM), and the like. Examples of program instructions include both machine code, such as produced by a compiler, and files containing higher level code that may be executed by the computer using an interpreter.

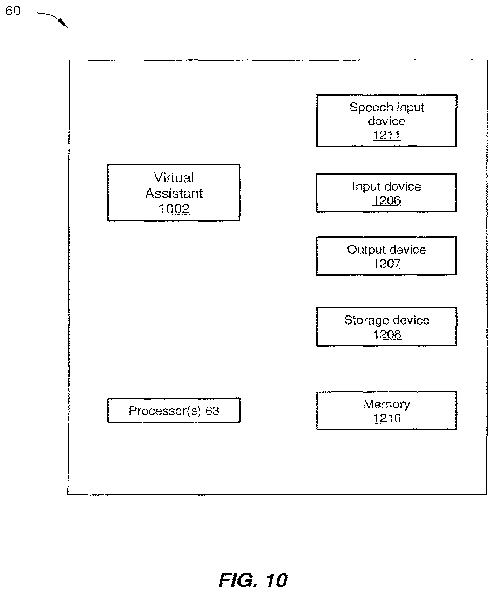

In one embodiment, the system of the present invention is implemented on a standalone computing system. Referring now to Fig. 10, there is shown a block diagram depicting an architecture for implementing at least a portion of a virtual assistant on a standalone computing system, according to at least one embodiment. Computing device 60 includes processor(s) 63 which run software for implementing multimodal virtual assistant 1002. Input device 1206 can be of any type suitable for receiving user input, including for example a keyboard, touchscreen, mouse, touchpad, trackball, five-way switch, joystick, and/or any combination thereof. Device 60 can also include speech input device 1211, such as for example a microphone. Output device 1207 can be a screen, speaker, printer, and/or any combination thereof. Memory 1210 can be random-access memory having a structure and architecture as are known in the art, for use by processor(s) 63 in the course of running software. Storage device 1208 can be any magnetic, optical, and/or electrical storage device for storage of data in digital form; examples include flash memory, magnetic hard drive, CD-ROM, and/or the like.

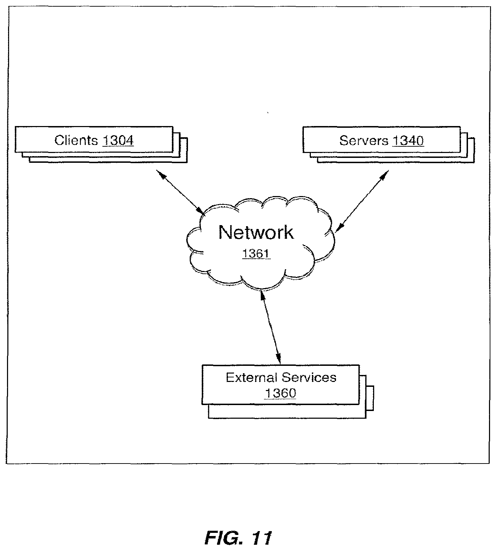

In another embodiment, the system of the present invention is implemented on a distributed computing network, such as one having any number of clients and/or servers. Referring now to Fig. 11, there is shown a block diagram depicting an architecture for implementing at least a portion of a virtual assistant on a distributed computing network, according to at least one embodiment.

In the arrangement shown in Fig. 11, any number of clients 1304 are provided; each client 1304 may run software for implementing client-side portions of the present invention. In addition, any number of servers 1340 can be provided for handling requests received from clients 1304. Clients 1304 and servers 1340 can communicate with one another via electronic network 1361, such as the Internet. Network 1361 may be implemented using any known network protocols, including for example wired and/or wireless protocols.

In addition, in one embodiment, servers 1340 can call external services 1360 when needed to obtain additional information or refer to store data concerning previous interactions with particular users. Communications with external services 1360 can take place, for example, via network 1361. In various embodiments, external services 1360 include web-enabled services and/or functionality related to or installed on the hardware device itself. For example, in an embodiment where assistant 1002 is implemented on a smartphone or other electronic device, assistant 1002 can obtain information stored in a calendar application ("app"), contacts, and/or other sources.

In various embodiments, assistant 1002 can control many features and operations of an electronic device on which it is installed. For example, assistant 1002 can call external services 1360 that interface with functionality and applications on a device via APIs or by other means, to perform functions and operations that might otherwise be initiated using a conventional user interface on the device. Such functions and operations may include, for example, setting an alarm, making a telephone call, sending a text message or email message, adding a calendar event, and the like. Such functions and operations may be performed as add-on functions in the context of a conversational dialog between a user and assistant 1002. Such functions and operations can be specified by the user in the context of such a dialog, or they may be automatically performed based on the context of the dialog. One skilled in the art will recognize that assistant 1002 can thereby be used as a control mechanism for initiating and controlling various operations on the electronic device, which may be used as an alternative to conventional mechanisms such as buttons or graphical user interfaces.

For example, the user may provide input to assistant 1002 such as "I need to wake tomorrow at 8am". Once assistant 1002 has determined the user's intent, using the techniques described herein, assistant 1002 can call external services 1340 to interface with an alarm clock function or application on the device. Assistant 1002 sets the alarm on behalf of the user. In this manner, the user can use assistant 1002 as a replacement for conventional mechanisms for setting the alarm or performing other functions on the device. If the user's requests are ambiguous or need further clarification, assistant 1002 can use the various techniques described herein, including active elicitation, paraphrasing, suggestions, and the like, and which may be adapted to a hands-free context, so that the correct services 1340 are called and the intended action taken. In one embodiment, assistant 1002 may prompt the user for confirmation and/or request additional context information from any suitable source before calling a service 1340 to perform a function. In one embodiment, a user can selectively disable assistant's 1002 ability to call particular services 1340, or can disable all such service-calling if desired.

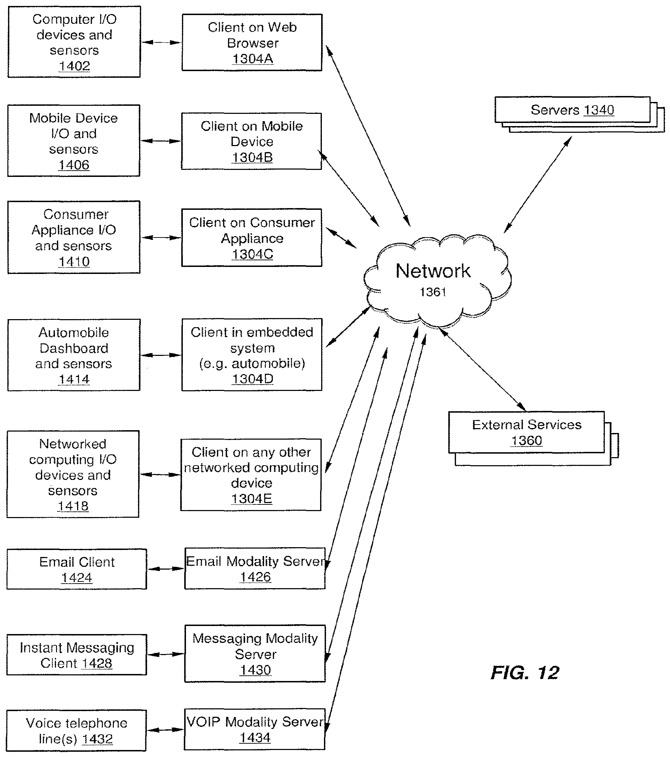

The system of the present invention can be implemented with any of a number of different types of clients 1304 and modes of operation. Referring now to Fig. 12, there is shown a block diagram depicting a system architecture illustrating several different types of clients 1304 and modes of operation. One skilled in the art will recognize that the various types of clients 1304 and modes of operation shown in Fig. 12 are merely exemplary, and that the system of the present invention can be implemented using clients 1304 and/or modes of operation other than those depicted. Additionally, the system can include any or all of such clients 1304 and/or modes of operation, alone or in any combination. Depicted examples include:
- Computer devices with input/output devices and/or sensors 1402. A client component may be deployed on any such computer device 1402. At least one embodiment may be implemented using a web browser 1304A or other software application for enabling communication with servers 1340 via network 1361.
- Input and output channels may of any type, including for example visual and/or auditory channels. For example, in one embodiment, the system of the invention can be implemented using voice-based communication methods, allowing for an embodiment of the assistant for the blind whose equivalent of a web browser is driven by speech and uses speech for output.
- Mobile Devices with I/O and sensors 1406, for which the client may be implemented as an application on the mobile device 1304B. This includes, but is not limited to, mobile phones, smartphones, personal digital assistants, tablet devices, networked game consoles, and the like.
- Consumer Appliances with I/O and sensors 1410, for which the client may be implemented as an embedded application on the appliance 1304C.
- Automobiles and other vehicles with dashboard interfaces and sensors 1414, for which the client may be implemented as an embedded system application 1304D. This includes, but is not limited to, car navigation systems, voice control systems, in-car entertainment systems, and the like.
- Networked computing devices such as routers 1418 or any other device that resides on or interfaces with a network, for which the client may be implemented as a device-resident application 1304E.
- Email clients 1424, for which an embodiment of the assistant is connected via an Email Modality Server 1426. Email Modality server 1426 acts as a communication bridge, for example taking input from the user as email messages sent to the assistant and sending output from the assistant to the user as replies.
- Instant messaging clients 1428, for which an embodiment of the assistant is connected via a Messaging Modality Server 1430. Messaging Modality server 1430 acts as a communication bridge, taking input from the user as messages sent to the assistant and sending output from the assistant to the user as messages in reply.
- Voice telephones 1432, for which an embodiment of the assistant is connected via a Voice over Internet Protocol (VoIP) Modality Server 1434. VoIP Modality server 1434 acts as a communication bridge, taking input from the user as voice spoken to the assistant and sending output from the assistant to the user, for example as synthesized speech, in reply.

For messaging platforms including but not limited to email, instant messaging, discussion forums, group chat sessions, live help or customer support sessions and the like, assistant 1002 may act as a participant in the conversations. Assistant 1002 may monitor the conversation and reply to individuals or the group using one or more the techniques and methods described herein for one-to-one interactions.

In various embodiments, functionality for implementing the techniques of the present invention can be distributed among any number of client and/or server components. For example, various software modules can be implemented for performing various functions in connection with the present invention, and such modules can be variously implemented to run on server and/or client components. Further details for such an arrangement are provided in related U.S. Utility Application Serial No. 12/987,982 for "Intelligent Automated Assistant", filed January 10, 2011.

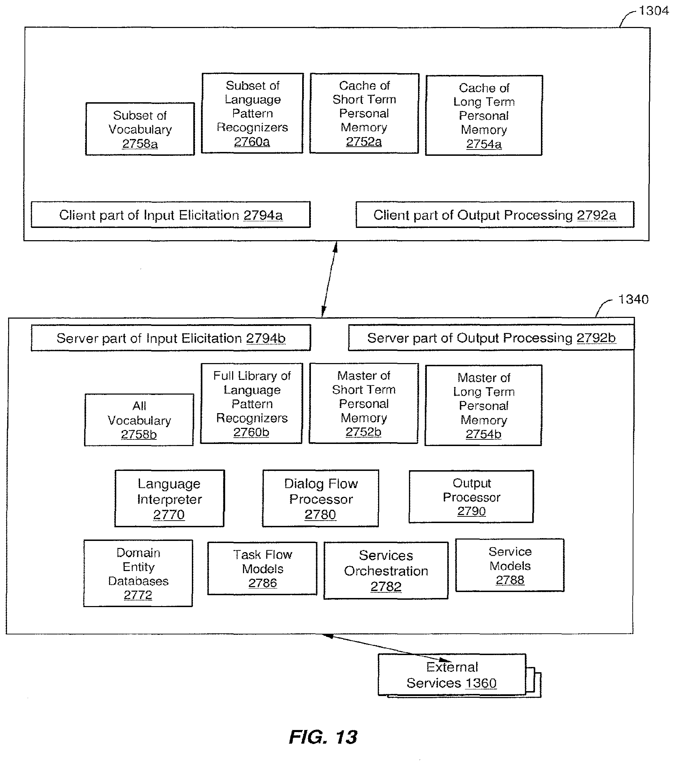

In the example of Fig. 13, input elicitation functionality and output processing functionality are distributed among client 1304 and server 1340, with client part of input elicitation 2794a and client part of output processing 2792a located at client 1304, and server part of input elicitation 2794b and server part of output processing 2792b located at server 1340. The following components are located at server 1340:
- complete vocabulary 2758b;
- complete library of language pattern recognizers 2760b;
- master version of short term personal memory 2752b;
- master version of long term personal memory 2754b.

In one embodiment, client 1304 maintains subsets and/or portions of these components locally, to improve responsiveness and reduce dependence on network communications. Such subsets and/or portions can be maintained and updated according to well known cache management techniques. Such subsets and/or portions include, for example:
- subset of vocabulary 2758a;
- subset of library of language pattern recognizers 2760a;
- cache of short term personal memory 2752a;
- cache of long term personal memory 2754a.

Additional components may be implemented as part of server 130, including for example:
- language interpreter 2770;
- dialog flow processor 2780;
- output processor 2790;
- domain entity databases 2772;
- task flow models 2786;
- services orchestration 2782;
- service capability models 2788 .

Server 1340 obtains additional information by interfacing with external services 1360 when needed.

### Conceptual Architecture

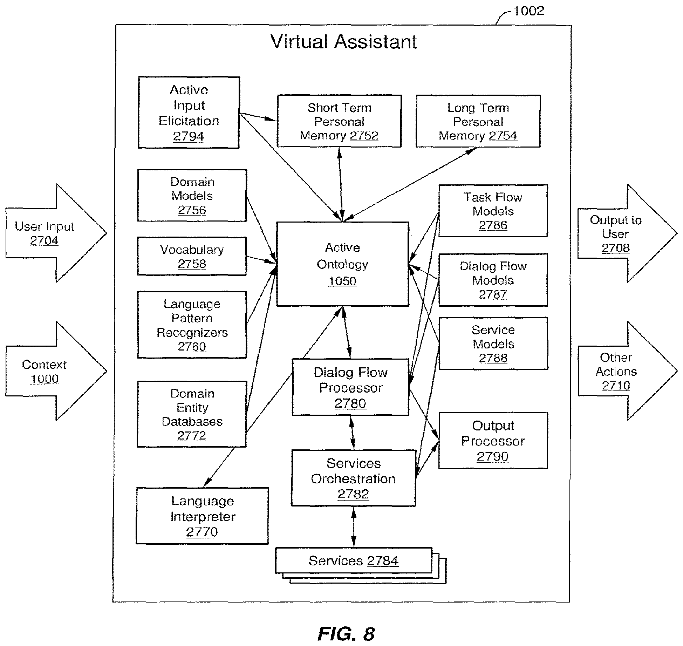

Referring now to Fig. 8, there is shown a simplified block diagram of a specific example embodiment of multimodal virtual assistant 1002. As described in greater detail in related U.S. utility applications referenced above, different embodiments of multimodal virtual assistant 1002 may be configured, designed, and/or operable to provide various different types of operations, functionalities, and/or features generally relating to virtual assistant technology. Further, as described in greater detail herein, many of the various operations, functionalities, and/or features of multimodal virtual assistant 1002 disclosed herein may enable or provide different types of advantages and/or benefits to different entities interacting with multimodal virtual assistant 1002. The embodiment shown in Fig. 8 may be implemented using any of the hardware architectures described above, or using a different type of hardware architecture.

For example, according to different embodiments, multimodal virtual assistant 1002 may be configured, designed, and/or operable to provide various different types of operations, functionalities, and/or features, such as, for example, one or more of the following (or combinations thereof):
- automate the application of data and services available over the Internet to discover, find, choose among, purchase, reserve, or order products and services. In addition to automating the process of using these data and services, multimodal virtual assistant 1002 may also enable the combined use of several sources of data and services at once. For example, it may combine information about products from several review sites, check prices and availability from multiple distributors, and check their locations and time constraints, and help a user find a personalized solution to their problem.
- automate the use of data and services available over the Internet to discover, investigate, select among, reserve, and otherwise learn about things to do (including but not limited to movies, events, performances, exhibits, shows and attractions); places to go (including but not limited to travel destinations, hotels and other places to stay, landmarks and other sites of interest, and the like); places to eat or drink (such as restaurants and bars), times and places to meet others, and any other source of entertainment or social interaction that may be found on the Internet.
- enable the operation of applications and services via natural language dialog that are otherwise provided by dedicated applications with graphical user interfaces including search (including location-based search); navigation (maps and directions); database lookup (such as finding businesses or people by name or other properties); getting weather conditions and forecasts, checking the price of market items or status of financial transactions; monitoring traffic or the status of flights; accessing and updating calendars and schedules; managing reminders, alerts, tasks and projects; communicating over email or other messaging platforms; and operating devices locally or remotely (e.g., dialing telephones, controlling light and temperature, controlling home security devices, playing music or video, and the like). In one embodiment, multimodal virtual assistant 1002 can be used to initiate, operate, and control many functions and apps available on the device.
- offer personal recommendations for activities, products, services, source of entertainment, time management, or any other kind of recommendation service that benefits from an interactive dialog in natural language and automated access to data and services.

According to different embodiments, at least a portion of the various types of functions, operations, actions, and/or other features provided by multimodal virtual assistant 1002 may be implemented at one or more client systems(s), at one or more server system(s), and/or combinations thereof.

According to different embodiments, at least a portion of the various types of functions, operations, actions, and/or other features provided by multimodal virtual assistant 1002 may use contextual information in interpreting and operationalizing user input, as described in more detail herein.

For example, in at least one embodiment, multimodal virtual assistant 1002 may be operable to utilize and/or generate various different types of data and/or other types of information when performing specific tasks and/or operations. This may include, for example, input data/information and/or output data/information. For example, in at least one embodiment, multimodal virtual assistant 1002 may be operable to access, process, and/or otherwise utilize information from one or more different types of sources, such as, for example, one or more local and/or remote memories, devices and/or systems. Additionally, in at least one embodiment, multimodal virtual assistant 1002 may be operable to generate one or more different types of output data/information, which, for example, may be stored in memory of one or more local and/or remote devices and/or systems.

Examples of different types of input data/information which may be accessed and/or utilized by multimodal virtual assistant 1002 may include, but are not limited to, one or more of the following (or combinations thereof):
- Voice input: from mobile devices such as mobile telephones and tablets, computers with microphones, Bluetooth headsets, automobile voice control systems, over the telephone system, recordings on answering services, audio voicemail on integrated messaging services, consumer applications with voice input such as clock radios, telephone station, home entertainment control systems, and game consoles.
- Text input from keyboards on computers or mobile devices, keypads on remote controls or other consumer electronics devices, email messages sent to the assistant, instant messages or similar short messages sent to the assistant, text received from players in multi user game environments, and text streamed in message feeds.
- Location information coming from sensors or location-based systems. Examples include Global Positioning System (GPS) and Assisted GPS (A-GPS) on mobile phones. In one embodiment, location information is combined with explicit user input. In one embodiment, the system of the present invention is able to detect when a user is at home, based on known address information and current location determination. In this manner, certain inferences may be made about the type of information the user might be interested in when at home as opposed to outside the home, as well as the type of services and actions that should be invoked on behalf of the user depending on whether or not he or she is at home.

- Time information from clocks on client devices. This may include, for example, time from telephones or other client devices indicating the local time and time zone. In addition, time may be used in the context of user requests, such as for instance, to interpret phrases such as "in an hour" and "tonight".
- Compass, accelerometer, gyroscope, and/or travel velocity data, as well as other sensor data from mobile or handheld devices or embedded systems such as automobile control systems. This may also include device positioning data from remote controls to appliances and game consoles.
- Clicking and menu selection and other events from a graphical user interface (GUI) on any device having a GUI. Further examples include touches to a touch screen.
- Events from sensors and other data-driven triggers, such as alarm clocks, calendar alerts, price change triggers, location triggers, push notification onto a device from servers, and the like.

The input to the embodiments described herein also includes the context of the user interaction history, including dialog and request history.

As described in the related U.S. utility applications referenced above, many different types of output data/information may be generated by multimodal virtual assistant 1002. These may include, but are not limited to, one or more of the following (or combinations thereof):
- Text output sent directly to an output device and/or to the user interface of a device;
- Text and graphics sent to a user over email;
- Text and graphics send to a user over a messaging service;
- Speech output, which may include one or more of the following (or combinations thereof):
   ∘ Synthesized speech;
   ∘ Sampled speech;
   ∘ Recorded messages;
- Graphical layout of information with photos, rich text, videos, sounds, and hyperlinks (for instance, the content rendered in a web browser);
- Actuator output to control physical actions on a device, such as causing it to turn on or off, make a sound, change color, vibrate, control a light, or the like;
- Invoking other applications on a device, such as calling a mapping application, voice dialing a telephone, sending an email or instant message, playing media, making entries in calendars, task managers, and note applications, and other applications;
- Actuator output to control physical actions to devices attached or controlled by a device, such as operating a remote camera, controlling a wheelchair, playing music on remote speakers, playing videos on remote displays, and the like.

It may be appreciated that the multimodal virtual assistant 1002 of Fig. 8 is but one example from a wide range of virtual assistant system embodiments which may be implemented. Other embodiments of the virtual assistant system (not shown) may include additional, fewer and/or different components/features than those illustrated, for example, in the example virtual assistant system embodiment of Fig. 8.

Multimodal virtual assistant 1002 may include a plurality of different types of components, devices, modules, processes, systems, and the like, which, for example, may be implemented and/or instantiated via the use of hardware and/or combinations of hardware and software. For example, as illustrated in the example embodiment of Fig. 8, assistant 1002 may include one or more of the following types of systems, components, devices, processes, and the like (or combinations thereof):
- One or more active ontologies 1050;
- Active input elicitation component(s) 2794 (may include client part 2794a and server part 2794b);
- Short term personal memory component(s) 2752 (may include master version 2752b and cache 2752a);
- Long-term personal memory component(s) 2754 (may include master version 2754b and cache 2754a);
- Domain models component(s) 2756;
- Vocabulary component(s) 2758 (may include complete vocabulary 2758b and subset 2758a);
- Language pattern recognizer(s) component(s) 2760 (may include full library 2760b and subset 2760a);
- Language interpreter component(s) 2770;
- Domain entity database(s) 2772;
- Dialog flow processor component(s) 2780;
- Services orchestration component(s) 2782;
- Services component(s) 2784;
- Task flow models component(s) 2786;
- Dialog flow models component(s) 2787;
- Service models component(s) 2788;
- Output processor component(s) 2790.

In certain client/server-based embodiments, some or all of these components may be distributed between client 1304 and server 1340. Such components are further described in the related U.S. utility applications referenced above.

In one embodiment, virtual assistant 1002 receives user input 2704 via any suitable input modality, including for example touchscreen input, keyboard input, spoken input, and/or any combination thereof. In one embodiment, assistant 1002 also receives context information 1000, which may include event context, application context, personal acoustic context, and/or other forms of context, as described in related U.S. Utility Application Serial No. 13/250,854, entitled "Using Context Information to Facilitate Processing of Commands in a Virtual Assistant", filed September 30, 2011. Context information 1000 also includes a hands-free context, if applicable, which can be used to adapt the user interface according to techniques described herein.

Upon processing user input 2704 and context information 1000 according to the techniques described herein, virtual assistant 1002 generates output 2708 for presentation to the user. Output 2708 can be generated according to any suitable output modality, which may be informed by the hands-free context as well as other factors, if appropriate. Examples of output modalities include visual output as presented on a screen, auditory output (which may include spoken output and/or beeps and other sounds), haptic output (such as vibration), and/or any combination thereof.

Additional details concerning the operation of the various components depicted in Fig. 8 are provided in related U.S. Utility Application Serial No. 12/987,982 for "Intelligent Automated Assistant", filed January 10, 2011.

### Adapting User Interfaces to a Hands-Free Context

For illustrative purposes, the invention is described herein by way of example. However, one skilled in the art will recognize that the particular input and output mechanisms depicted in the examples are merely intended to illustrate one possible interaction between the user and assistant 1002, and are not intended to limit the scope of the invention as claimed. Furthermore, in alternative embodiments, the invention can be implemented in a device without necessarily involving a multimodal virtual assistant 1002; rather, the functionality of the invention can be implemented directly in an operating system or application running on any suitable device, without departing from the essential characteristics of the invention as solely defined in the claims.

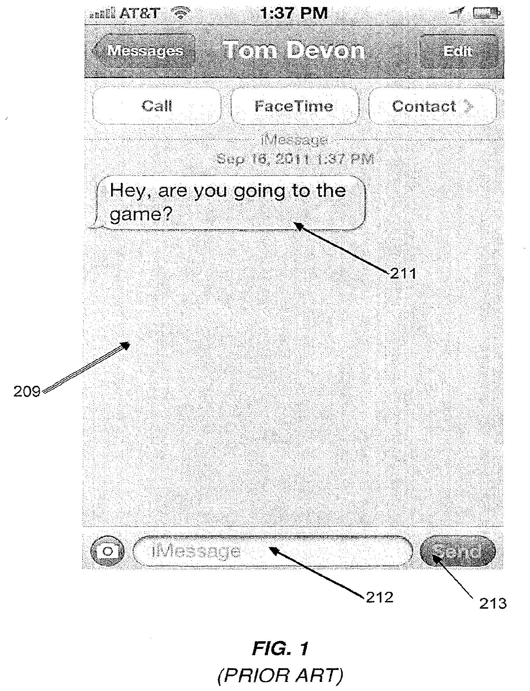

Referring now to Fig. 1, there is shown a screen shot illustrating an example of a conventional hands-on interface 209 for reading a text message, according to the prior art. A graphical user interface (GUI) as shown in Fig. 1 generally requires the user to be able to read fine details, such as the message text shown in bubble 211, and respond by typing in text field 212 and tapping send button 213. In many devices, such actions require looking at and touching the screen, and are therefore impractical to perform in certain contexts, referred to herein as hands-free contexts.

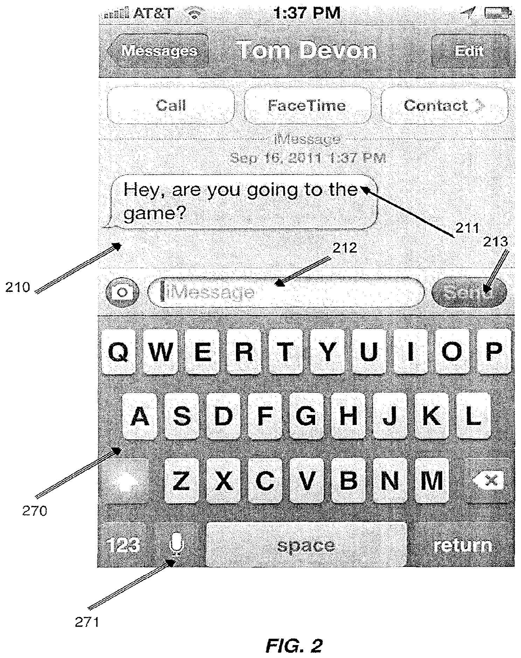

Referring now to Fig. 2, there is shown a screen shot illustrating an example of an interface 210 for responding to text message 211. Virtual keyboard 270 is presented in response to the user tapping in text field 212, permitting text to be entered in text field 212 by tapping on areas of the screen corresponding to keys. The user taps on send button 213 when the text message has been entered. If the user wishes to enter text by speaking, he or she taps on speech button 271, which invokes a voice dictation interface for receiving spoken input and converting it into text. Thus, button 271 provides a mechanism by which the user can indicate that he or she is in a hands-free context.

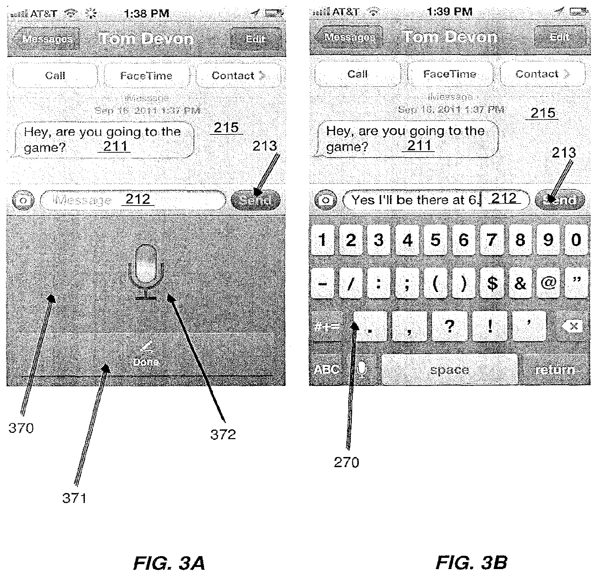

Referring now to Figs. 3A and 3B, there is shown a sequence of screen shots illustrating an example of an interface 215 wherein a voice dictation interface is used to reply to text message 211. Screen 370 is presented, for example, after user taps on speech button 271. Microphone icon 372 indicates that the device is ready to accept spoken input. The user inputs speech, which is received via speech input device 1211, which may be a microphone or similar device. The user taps on Done button 371 to indicate that he or she has finished entering spoken input.

The spoken input is converted to text, using any well known speech-to-text algorithm or system. Speech-to-text functionality can reside on device 60 or on a server. In one embodiment, speech-to-text functionality is implemented using, for example, Nuance Recognizer, available from Nuance Communications, Inc. of Burlington, Massachusetts.

As shown in Fig. 3B, the results of the conversion can be shown in field 212. Keyboard 270 can be presented, to allow the user to edit the generated text in field 212. When the user is satisfied with the entered text, he or she taps on Send button 213 to cause the text message to be sent.

In the example described in connection with Figs. 2, 3A, and 3B, several operations require the user to look at the display screen and/or provide touch input. Such operations include:
- reading text message 211 on the display screen;
- touching button 271 to enter speech input mode;
- touching Done button 371 to indicate that speech input is finished;
- viewing the converted text generated from the user's spoken input;
- touching Send button 213 to send the message.

In one embodiment of the present invention, mechanisms for accepting and processing speech input are integrated into device 60 in a manner that reduces the need for a user to interact with a display screen and/or to use a touch interface when in a hands-free context. Accordingly, the system of the present invention is thus able to provide an improved user interface for interaction in a hands-free context.

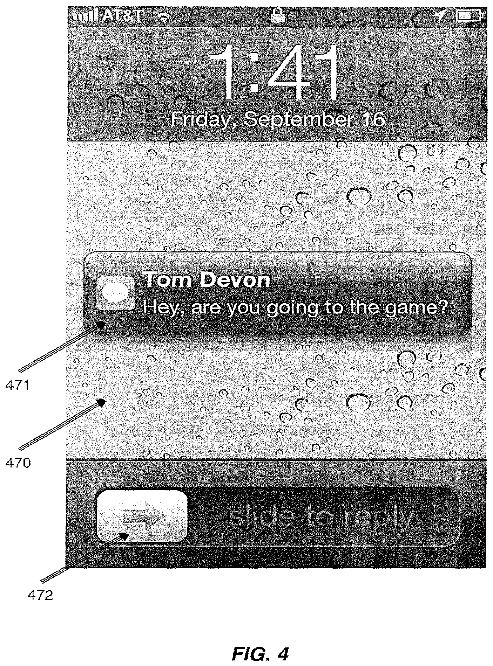

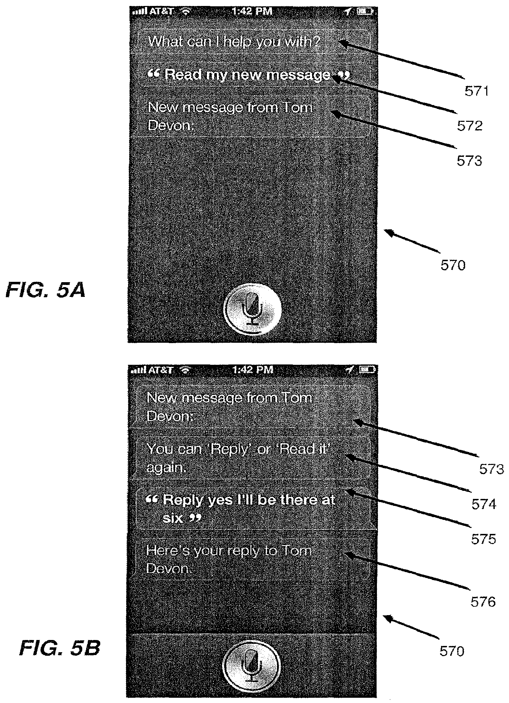

Referring now to Figs. 4 and 5A through 5D, there is shown a series of screen shots illustrating an example of an interface for receiving and replying to a text message, according to one embodiment wherein a hands-free context is recognized; thus, in this example, the need for the user to interact with the screen is reduced, in accordance with the techniques of the present invention.

In Fig. 4, screen 470 depicts text message 471 which is received while device 60 is in a locked mode. The user can activate slider 472 to reply to or otherwise interact with message 471 according to known techniques. However, in this example, device 60 may be out of sight and/or out of reach, or the user may be unable to interact with device 60, for example, if he or she is driving or engaged in some other activity. As described herein, multimodal virtual assistant 1002 provides functionality for receiving and replying to text message 471 in such a hands-free context.

In one embodiment, virtual assistant 1002 installed on device 60 automatically detects the hands-free context. Such detection may take place by any means of determining a scenario or situation where it may be difficult or impossible for the user to interact with the screen of device 60 or to properly operate the GUI.

For example and without limitation, determination of hands-free context can be made based on any of the following, singly or in any combination:
- data from sensors (including, for example, compass, accelerometer, gyroscope, speedometer (e.g., whether device 60 is travelling at or above a predetermined speed), ambient light sensor, BlueTooth connection detector, clock, WiFi signal detector, microphone, and the like);
- determining that device 60 is in a certain geographic location, for example via GPS (for example, determining that device 60 is travelling on or near a road);
- speed data (for example, via GPS, speedometer, accelerometer, wireless data signal information (e.g., cell tower triangulation));
- data from a clock (for example, hands-free context can be specified as being active at certain times of day and/or certain days of the week);
- predefined parameters (for example, the user or an administrator can specify that hands-free context is active when any condition or combination of conditions is detected);
- connection of Bluetooth or other wireless I/O devices (for example, if a connection with a BlueTooth-enabled interface of a moving vehicle is detected);
- any other information that may indicate that the user is in a moving vehicle or driving a car;
- presence or absence of attached peripherals, including headphones, headsets, charging cables or docking stations (including vehicle docking stations), things connected by adapter cables, and the like;
- determining that the user is not in contact with or in close proximity to device 60;
- the particular signal used to trigger interaction with assistant 1002 (for example, a motion gesture in which the user holds the device to the ear, or the pressing of a button on a Bluetooth device, or pressing of a button on an attached audio device);
- detection of specific words in a continuous stream of words (for example, assistant 1002 can be configured to be listening for commands, and to be invoked when the user calls its name or says some command such as "Computer!"; the particular command can indicate whether or not hands-free context is active.

As noted above, hands-free context can be automatically determined based (at least in part) on determining that the user is in a moving vehicle or driving a car. In some embodiments, such determination is made without user input and without regard to whether a digital assistant has been separately invoked by a user. For example, a device through which a user interacts with assistant 1002 may contain multiple applications that are configured to execute within an operating system on the device. The determination that the device is in a vehicle, therefore, can be made without regard to whether a user has selected or activated a digital assistant application for immediate execution on the device. In some embodiments, the determination is made while a digital assistant application is not being executed in the foreground of an operating system, or is not displaying a graphical user interface on the device. Thus, in some embodiments, it is not necessary for a user to separately invoke a digital assistant application in order for the device to determine that it is in a vehicle. In some embodiments, automatically determining that the electronic device is in the vehicle is performed without regard to whether the digital assistant application was recently invoked by a user.

In some embodiments, automatically determining a hands free context can be based (at least in part) on detecting that the electronic device is moving at or above a first predetermined speed. For example, if the device is moving above about 20 miles per hour, indicating that the user is not merely walking, hands-free context can be invoked, including invoking a listening mode as described below. In some embodiments, automatically determining a hands free context can be further based on detecting that the electronic device is moving at or below a second predetermined speed. This is useful, for example, to prevent the device from mistakenly detecting hands-free context when a user is in a plane. In some embodiments, hands-free context can be detected if the electronic device is moving less than about 150 miles per hour, indicating that the user is likely not flying in an airplane.

In other embodiments, the user can manually indicate that hands-free context is active or inactive, and/or can schedule hands-free context to activate and/or deactivate at certain times of day and/or certain days of the week.

In one embodiment, upon receiving text message 470 while in hands-free context, multimodal virtual assistant 1002 causes device 60 to output an audio indication, such as a beep or tone, indicating receipt of a text message. As described above, the user can activate slider 472 to reply to or otherwise interact with message 471 according to known techniques (for example if hands-free mode was incorrectly detected, or if the user elects to stop driving or otherwise make him or herself available for hands-on interaction with device 60). Alternatively, the user can engage in a spoken dialog with assistant 1002 to enable interaction with assistant 1002 in a hands-free manner.

In one embodiment, the user initiates the spoken dialog by any suitable mechanism appropriate to a hands-free context. For example, in an environment where the user is driving a BlueTooth-equipped vehicle, and device 60 is in communication with the vehicle, an easily-accessed button (for example, one mounted on the steering wheel of a car) may be available. Pressing the button initiates a spoken dialog with assistant 1002, and allows the user to communicate with assistant 1002 via the BlueTooth connection and through a microphone and/or speaker installed in the vehicle. Alternatively, the user can initiate the spoken dialog by pressing a button on device 60 itself, or on a headset, or on any other peripheral device, or by performing some other distinctive action that signals to assistant 1002 that the user wishes to initiate a spoken dialog. As another example, the user can speak a command that is understood by assistant 1002 and that initiates the spoken dialog, as described in greater detail below. One skilled in the art will recognize that many other techniques can be provided for allowing a user to easily initiate a spoken dialog with assistant 1002. Preferably, the mechanism that is used for initiating the spoken dialog does not require hand-eye coordination on the part of the user, thus allowing the user to focus on a primary task, such as driving, and/or can be performed by an individual having a disability that prevents, hinders, restricts, or limits his or her ability to interact with a GUI such as depicted in Figs. 2, 3A, and 3B.

Once the spoken dialog has been initiated, assistant 1002 listens for spoken input. In one embodiment, assistant 1002 acknowledges the spoken input by some output mechanism that is easily detected by the user while in the hands-free context. An example is an audio beep or tone, and/or visual output on a vehicle dashboard that is easily seen by the user even while driving, and/or by some other mechanism. Spoken input is processed using known speech recognition techniques. Assistant 1002 then performs action(s) indicated by the spoken input. In one embodiment, assistant 1002 provides spoken output, which may be output via speakers (in device 60 or installed in the vehicle), headphones or the like, so as to continue the audio dialog with the user. For example, assistant 1002 can read content of text messages, email messages, and the like, and can provide options to the user in spoken form.

For example, if the user says "Read my new message", assistant 1002 may cause device 60 to emit an acknowledgement tone. Assistant may then 1002 emit spoken output such as "You have a new message from Tom Devon. It says: 'Hey, are you going to the game?". ' Spoken output may be generated by assistant 1002 using any known technique for converting text to speech. In one embodiment, text-to-speech functionality is implemented using, for example, Nuance Vocalizer, available from Nuance Communications, Inc. of Burlington, Massachusetts.

Referring now to Fig. 5A, there is shown an example of a screen shot 570 showing output that may be presented on the screen of device 60 while the verbal interchange between the user and assistant 1002 is taking placing. In some hands-free situations, the user can see the screen but cannot easily touch it, for example if the output on the screen of device 60 is being replicated on a display screen of a vehicle's navigation system. Visual echoing of the spoken conversation, as depicted in Figs. 5A through 5D, can help the user to verify that his or her spoken input has been properly and accurately understood by assistant 1002, and can further help the user understand assistant's 1002 spoken replies. However, such visual echoing is optional, and the present invention can be implemented without any visual display on the screen of device 60 or elsewhere. Thus, the user can interact with assistant 1002 purely by spoken input and output, or by a combination of visual and spoken inputs and/or outputs.

In the example, assistant 1002 displays and speaks a prompt 571. In response to user input, assistant 1002 repeats the user input 572, on the display and/or in spoken form. Assistant then introduces 573 the incoming text message and reads it. In one embodiment, the text message may also be displayed on the screen.

As shown in Fig. 5B, after reading the incoming message to the user, assistant 1002 then tells the user that the user can "reply or read it again" 574. Again, such output is provided, in one embodiment, in spoken form (i.e., verbally). In this manner, the system of the present invention informs the user of available actions in a manner that is well-suited to the hands-free context, in that it does not require the user to look at text fields, buttons, and/or links, and does not require direct manipulation by touch or interaction with on-screen objects. As depicted in Fig. 5B, in one embodiment the spoken output is echoed 574 on-screen; however, such display of the spoken output is not required. In one embodiment, echo messages displayed on the screen scroll upwards automatically according to well known mechanisms.

In the example, the user says Reply yes I'll be there at six". As depicted in Fig. 5B, in one embodiment the user's spoken input is echoed 575 so that the user can check that it has been properly understood. In addition, in one embodiment, assistant 1002 repeats the user's spoken input in auditory form, so that the user can verify understanding of his or her command even if he or she cannot see the screen. Thus, the system of the present invention provides a mechanism by which the user can initiate a reply command, compose a response, and verify that the command and the composed response were properly understood, all in a hands-free context and without requiring the user to view a screen or interact with device 60 in a manner that is not feasible or well-suited to the current operating environment.

In one embodiment, assistant 1002 provides further verification of the user's composed text message by reading back the message. In this example, assistant 1002 says, verbally, "Here's your reply to Tom Devon: 'Yes I'll be there at six."'. In one embodiment, the meaning of the quotation marks is conveyed with changes in voice and/or prosody. For example, the string "Here's your reply to Tom Devon" can be spoken in one voice, such as a male voice, while the string "Yes I'll be there at six" can be spoken in another voice, such as a female voice. Alternatively, the same voice can be used, but with different prosody to convey the quotation marks.

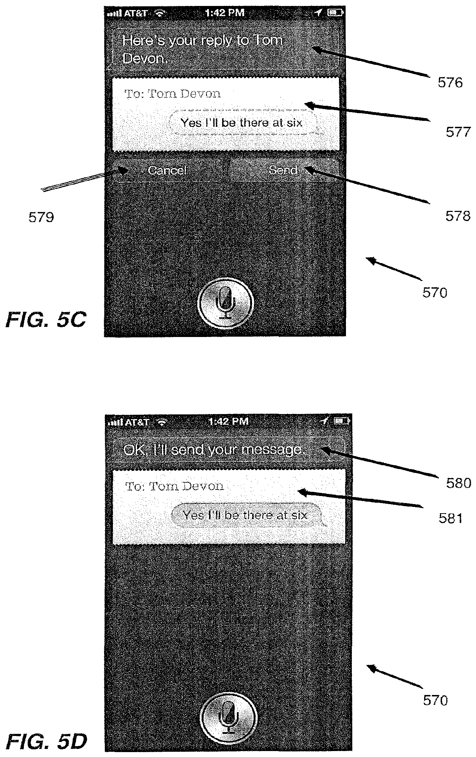

In one embodiment, assistant 1002 provides visual echoing of the spoken interchange, as depicted in Figs. 5B and 5C. Figs. 5B and 5C show message 576 echoing assistant's 1002 spoken output of "Here's your reply to Tom Devon". Fig. 5C shows a summary 577 of the text message being composed, including recipient and content of the message. In Fig. 5C, previous messages have scrolled upward off the screen, but can be viewed by scrolling downwards according to known mechanisms. Send button 578 sends the message; cancel button 579 cancels it. In one embodiment, the user can also send or cancel the message by speaking a keyword, such as "send" or "cancel". Alternatively, assistant 1002 can generate a spoken prompt, such as "Ready to send it?"; again, a display 570 with buttons 578, 579 can be shown while the spoken prompt is output. The user can then indicate what he or she wishes to do by touching buttons 578, 579 or by answering the spoken prompt. The prompt can be issued in a format that permits a "yes" or "no" response, so that the user does not need to use any special vocabulary to make his or her intention known.

In one embodiment, assistant 1002 can confirm the user's spoken command to send the message, for example by generating spoken output such as "OK, I'll send your message." As shown in Fig. 5D, this spoken output can be echoed 580 on screen 570, along with summary 581 of the text message being sent.

The spoken exchange described above, combined with optional visual echoing, illustrates an example by which assistant 1002 provides redundant outputs in a multimodal interface. In this manner, assistant 1002 is able to support a range of contexts including eyes-free, hands-free, and fully hands-on.

The example also illustrates mechanisms by which the displayed and spoken output can differ from one another to reflect their different contexts. The example also illustrates ways in which alternative mechanisms for responding are made available. For example, after assistant says "Ready to send it?" and displays screen 570 shown in Fig. 5C, the user can say the word "send", or "yes", or tap on Send button 578 on the screen. Any of these actions would be interpreted the same way by assistant 1002, and would cause the text message to be sent. Thus, the system of the present invention provides a high degree of flexibility with respect to the user's interaction with assistant 1002.

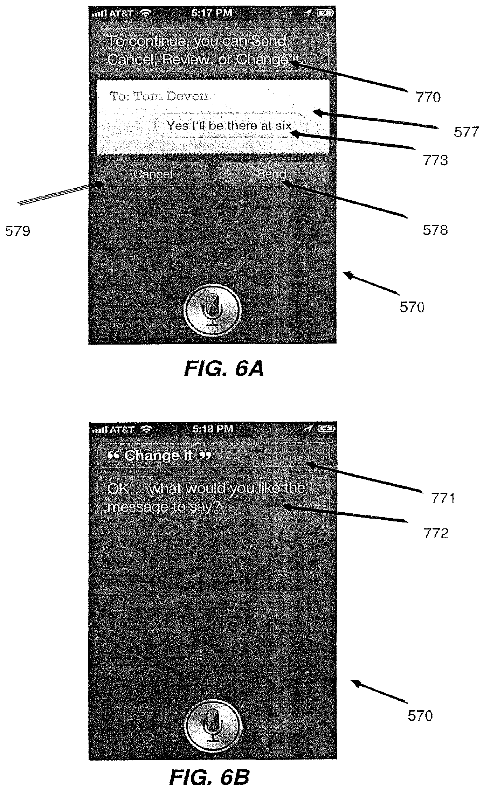

Referring now to Figs. 6A through 6C, there is shown a series of screen shots illustrating an example of operation of multimodal virtual assistant 1002 according to an embodiment of the present invention, wherein the user revises text message 577 in a hands-free context, for example to correct mistakes or add more content. In a visual interface involving direct manipulation, such as described above in connection with Figs. 3A and 3B, the user might type on virtual keyboard 270 to edit the contents of text field 212 and thereby revise text message 577. Since such operations may not be feasible in a hands-free context, multimodal virtual assistant 1002 provides a mechanism by which such editing of text message 577 can take place via spoken input and output in a conversational interface

In one embodiment, once text message 577 has been composed (based, for example, on the user's spoken input), multimodal virtual assistant 1002 generates verbal output informing the user that the message is ready to be sent, and asking the user whether the message should be sent. If the user indicates, via verbal or direct manipulation input, that he or she is not ready to send the message, then multimodal virtual assistant 1002 generates spoken output to inform the user of available options, such as sending, canceling, reviewing, or changing the message. For example, assistant 1002 may say with "OK, I won't send it yet. To continue, you can Send, Cancel, Review, or Change it."

As shown in Fig. 6A, in one embodiment multimodal virtual assistant 1002 echoes the spoken output by displaying message 770, visually informing the user of the options available with respect to text message 577. In one embodiment, text message 577 is displayed in editable field 773, to indicate that the user can edit message 577 by tapping within field 773, along with buttons 578, 579 for sending or canceling text message 577, respectively. In one embodiment, tapping within editable field 773 invokes a virtual keyboard (similar to that depicted in Fig. 3B), to allow editing by direct manipulation.

The user can also interact with assistant 1002 by providing spoken input. Thus, in response to assistant's 1002 spoken message providing options for interacting with text message 577, the user may say "Change it". Assistant 1002 recognizes the spoken text and responds with a verbal message prompting the user to speak the revised message. For example, assistant 1002 may say, "OK... What would you like the message to say?" and then starts listening for the user's response. Fig. 6B depicts an example of a screen 570 that might be shown in connection with such a spoken prompt. Again, the user's spoken text is visually echoed 771, along with assistant's 1002 prompt 772.

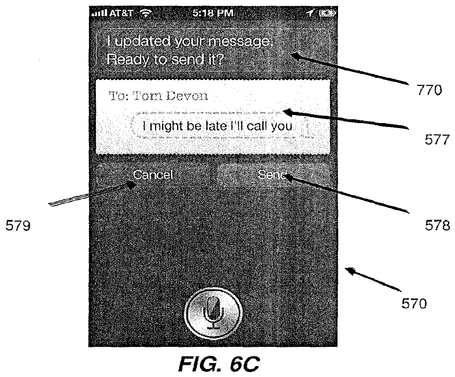

In one embodiment, once the user has been prompted in this manner, the exact contents of the user's subsequent spoken input is interpreted as content for the text message, bypassing the normal natural language interpretation of user commands. User's spoken input is assumed to be complete either when a pause of sufficient length in the input is detected, or upon detection of a specific word indicating the input is complete, or upon detection that the user has pressed a button or activated some other command to indicate that he or she has finished speaking the text message. In one embodiment, assistant 1002 then repeats back the input text message in spoken form, and may optionally echo it as shown in Fig. 6C. Assistant 1002 offers a spoken prompt, such as "Are you ready to send it?", which may also be echoed 770 on the screen as shown in Fig. 6C. The user can then reply by saying "cancel", "send", "yes", or "no", any of which are correctly interpreted by assistant 1002. Alternatively, the user can press a button 578 or 579 on the screen to invoke the desired operation.

By providing a mechanism for modifying text message 577 in this manner, the system of the present invention, in one embodiment, provides a flow path appropriate to a hands-free context, which is integrated with a hands-on approach so that the user can freely choose the mode of interaction at each stage. Furthermore, in one embodiment assistant 1002 adapts its natural language processing mechanism to particular steps in the overall flow; for example, as described above, in some situations assistant 1002 may enter a mode where it bypasses normal natural language interpretation of user commands when the user has been prompted to speak a text message.

### Method

In one embodiment, multimodal virtual assistant 1002 detects a hands-free context and adapts one or more stages of its operation to modify the user experience for hands-free operation. As described above, detection of the hands-free context can be applied in a variety of ways to affect the operation of multimodal virtual assistant 1002.

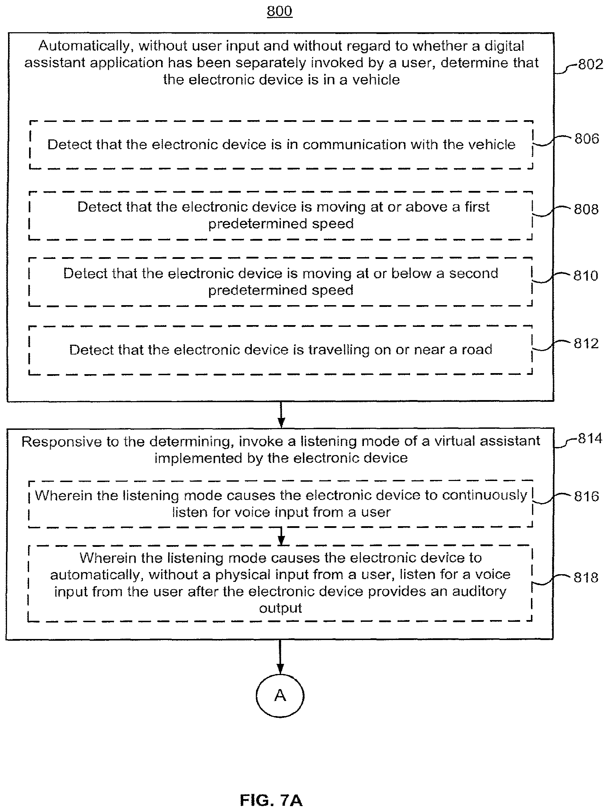

Fig. 7A is a flow diagram depicting a method 800 of adapting a user interface, according to some embodiments. In some embodiments, the method 800 is performed at an electronic device having one or more processors and memory storing one or more programs for execution by the one or more processors (e.g., device 60). The method 800 includes automatically, without user input and without regard to whether a digital assistant application has been separately invoked by a user, determining (802) that the electronic device is in a vehicle. In some embodiments, automatically determining that the electronic device is in the vehicle is performed without regard to whether the digital assistant application was recently invoked by a user (e.g., within about the previous 1 minute, 2 minutes, 5 minutes).

In some embodiments, determining that the electronic device is in a vehicle comprises detecting (806) that the electronic device is in communication with the vehicle. In some embodiments, the communication is wireless communication. In some embodiments, the communication is BLUETOOTH communication. In some embodiments, the communication is wired communication. In some embodiments, detecting that the electronic device is in communication with the vehicle comprises detecting that the electronic device is in communication with a voice control system of the vehicle (e.g., via wireless communication, BLUETOOTH, wired communication, etc.).

In some embodiments, determining that the electronic device is in a vehicle comprises detecting (808) that the electronic device is moving at or above a first predetermined speed. In some embodiments, the first predetermined speed is about 20 miles per hour. In some embodiments, the first predetermined speed is about 10 miles per hour. In some embodiments, determining that the electronic device is in a vehicle further comprises detecting (810) that the electronic device is moving at or below a second predetermined speed. In some embodiments, the second predetermined speed is about 150 miles per hour. In some embodiments, the speed of the electronic device is determined using one or more of the group consisting of: GPS location information; accelerometer data; wireless data signal information; and speedometer information.

In some embodiments, determining that the electronic device is in a vehicle further comprises detecting (812) that the electronic device is travelling on or near a road. The location of the vehicle may be determined by GPS location information, cellular tower triangulation, and/or other location detecting techniques and technologies.

Returning to Fig. 7A, the method 800 further includes, responsive to the determining, invoking (814) a listening mode of a virtual assistant implemented by the electronic device. Example embodiments of listening modes are described herein. In some embodiments, the listening mode causes the electronic device to continuously listen (816) for voice input from a user. In some embodiments, the listening mode causes the electronic device to continuously listen for voice input from the user responsive to detecting that the electronic device is connected to a charging source. In some embodiments, the listening mode causes the electronic device to listen for voice input from a user for a predetermined time after initiation of the listening mode (e.g., for about 5 minutes after initiation of the listening mode). In some embodiments, the listening mode causes the electronic device to automatically, without a physical input from a user, listen (818) for a voice input from the user after the electronic device provides an auditory output (such as a "beep").

In some embodiments, the method 800 also comprises limiting functionality of the device (e.g., device 60) and/or the digital assistant (e.g., assistant 1002) when it is determined that the electronic device is in a vehicle. In some embodiments, the method includes, responsive to determining that the electronic device is in the vehicle, taking any of the following actions (alone or in combination): limiting the ability to view visual output presented by the electronic device; limiting the ability to interact with a graphical user interface presented by the electronic device; limiting the ability to use a physical component of the electronic device; limiting the ability to perform touch input on the electronic device; limiting the ability to use a keyboard on the electronic device; limiting the ability to execute one or more applications on the electronic device; limiting the ability to perform one or more functions enabled by the electronic device; limiting the device so as to not request touch input from the user; limiting the device so as to not respond to touch input from the user; and limiting the amount of items in the list to a predetermined amount.

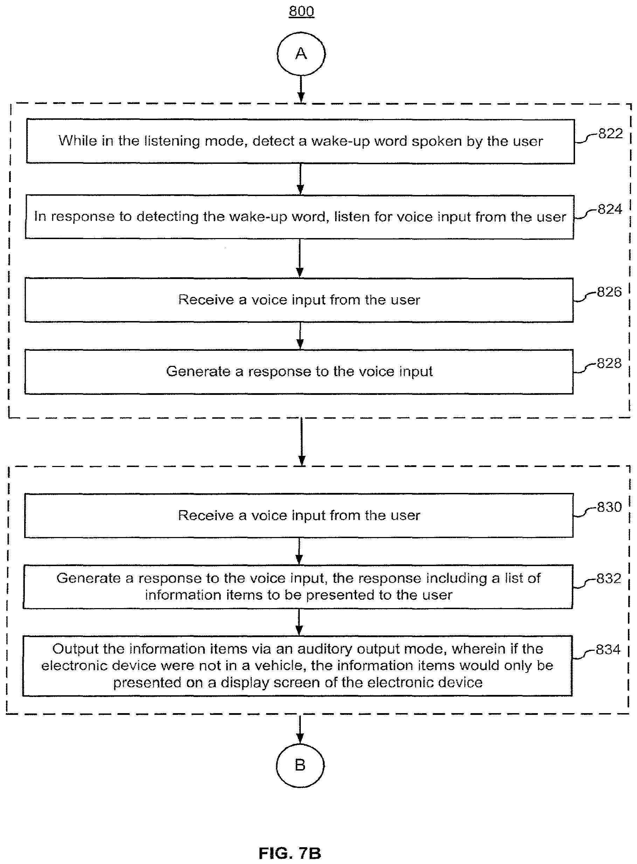

Referring now to Fig. 7B, in some embodiments, the method 800 further comprises, while the device is in the listening mode, detecting (822) a wake-up word spoken by the user. The wake-up word may be any word that a digital assistant (e.g., assistant 1002) is configured to recognize as a trigger signaling the assistant to begin listening for voice input from a user. The method further comprises, in response to detecting the wake-up word, listening (824) for voice input from the user, receiving (826) a voice input from the user, and generating (828) a response to the voice input.

In some embodiments, the method 800 further comprises, receiving (830) a voice input from the user; generating (832) a response to the voice input, the response including a list of information items to be presented to the user; and outputting (834) the information items via an auditory output mode, wherein if the electronic device were not in a vehicle, the information items would only be presented on a display screen of the electronic device. For example, in some cases, information items that are returned in response to a web search are displayed visually on a device. In some cases, they are only displayed visually (e.g., without any audio). In contrast, this aspect of method 800 instead provides only auditory output for the information items, without any visual output.

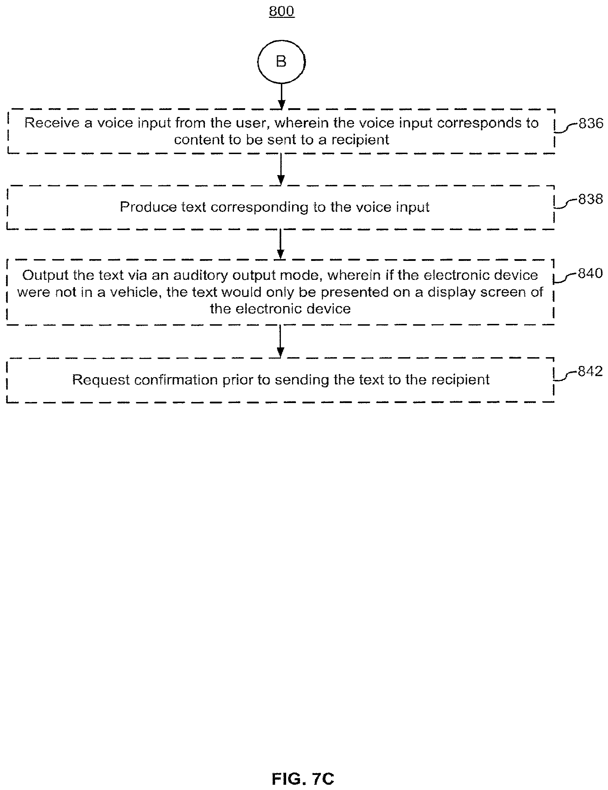

Referring now to Fig. 7C, in some embodiments, the method 800 further comprises receiving (836) a voice input from the user, wherein the voice input corresponds to content to be sent to a recipient. In some embodiments, the content is to be sent to a recipient via text message, email message, etc. The method further comprises producing (838) text corresponding to the voice input, and outputting (840) the text via an auditory output mode, wherein if the electronic device were not in a vehicle, the text would only be presented on a display screen of the electronic device. For example, in some cases, message content that is transcribed from a voice input is displayed visually on a device. In some cases, it is only displayed visually (e.g., without any audio). In contrast, this aspect of method 800 instead provides only auditory output for the transcribed text, without any visual output.

In some embodiments, the method further comprises requesting (842) confirmation prior to sending the text to the recipient. In some embodiments, requesting confirmation comprises asking the user, via the auditory output mode whether the text should be sent to the recipient.

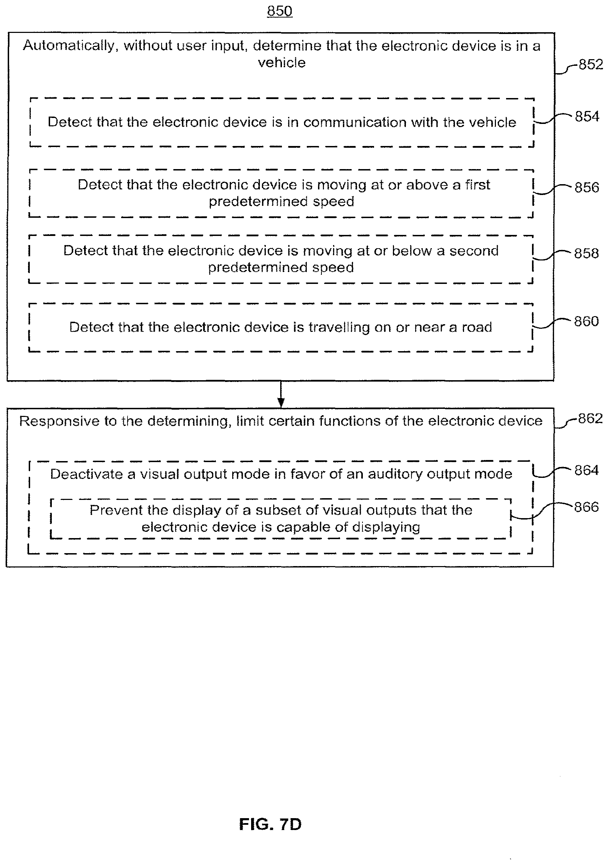

Fig. 7D is a flow diagram depicting a method 850 of adapting a user interface, according to some embodiments. In some embodiments, the method 850 is performed at an electronic device having one or more processors and memory storing one or more programs for execution by the one or more processors.

The method 850 comprises automatically, without user input, determining (852) that the electronic device is in a vehicle.

In some embodiments, determining that the electronic device is in a vehicle comprises detecting (854) that the electronic device is in communication with the vehicle. In some embodiments, the communication is wireless communication, one example of which is BLUETOOTH communication. In some embodiments, the communication is wired communication. In some embodiments, detecting that the electronic device is in communication with the vehicle comprises detecting that the electronic device is in communication with a voice control system of the vehicle (e.g., via wireless communication, such as BLUETOOTH, or wired communication).

In some embodiments, determining that the electronic device is in a vehicle comprises detecting (856) that the electronic device is moving at or above a first predetermined speed. In some embodiments, the first predetermined speed is about 20 miles per hour. In some embodiments, the first predetermined speed is about 10 miles per hour. In some embodiments, determining that the electronic device is in a vehicle further comprises detecting (858) that the electronic device is moving at or below a second predetermined speed. In some embodiments, the second predetermined speed is about 150 miles per hour. In some embodiments, the speed of movement of the electronic device is determined using one or more of the group consisting of: GPS location information; accelerometer data; wireless data signal information; and speedometer information.

In some embodiments, determining that the electronic device is in a vehicle further comprises detecting (860) that the electronic device is travelling on or near a road. The location of the vehicle may be determined by GPS location information, cellular tower triangulation, and/or other location detecting techniques and technologies.

The method 850 further comprises, responsive to the determining, limiting certain functions of the electronic device, as described above. For example, in some embodiments, limiting certain functions of the device comprises deactivating (864) a visual output mode in favor of an auditory output mode. In some embodiments, deactivating the visual output mode includes preventing (866) the display of a subset of visual outputs that the electronic device is capable of displaying.

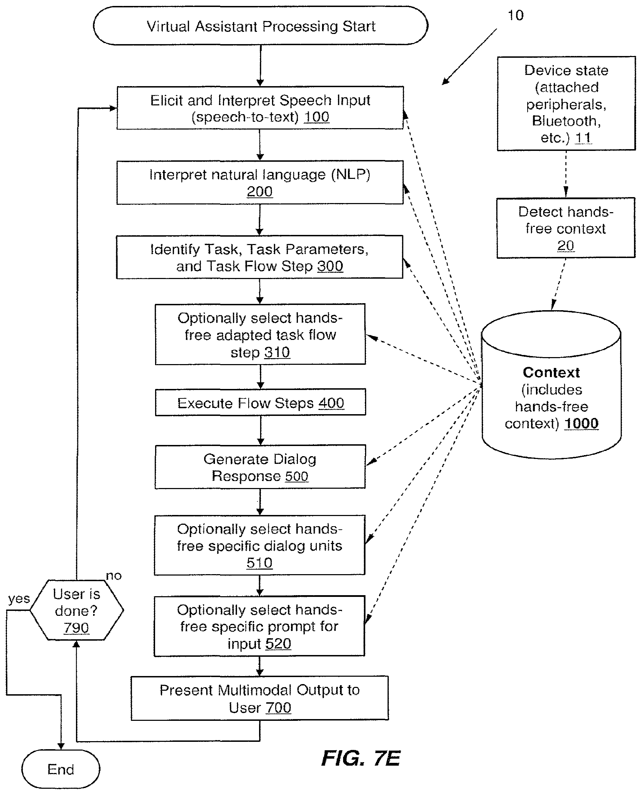

Referring now to Fig. 7E, there is shown a flow diagram depicting a method 10 of operation of virtual assistant 1002 that supports dynamic detection of and adaptation to a hands-free context, according to one embodiment. Method 10 may be implemented in connection with one or more embodiments of multimodal virtual assistant 1002. As depicted in Fig. 7, the hands-free context can be used at various stages of processing in multimodal virtual assistant 1002, according to one embodiment.

In at least one embodiment, method 10 may be operable to perform and/or implement various types of functions, operations, actions, and/or other features such as, for example, one or more of the following (or combinations thereof):
- Execute an interface control flow loop of a conversational interface between the user and multimodal virtual assistant 1002. At least one iteration of method 10 may serve as a ply in the conversation. A conversational interface is an interface in which the user and assistant 1002 communicate by making utterances back and forth in a conversational manner.
- Provide executive control flow for multimodal virtual assistant 1002. That is, the procedure controls the gathering of input, processing of input, generation of output, and presentation of output to the user.
- Coordinate communications among components of multimodal virtual assistant 1002. That is, it may direct where the output of one component feeds into another, and where the overall input from the environment and action on the environment may occur.

In at least some embodiments, portions of method 10 may also be implemented at other devices and/or systems of a computer network.

According to specific embodiments, multiple instances or threads of method 10 may be concurrently implemented and/or initiated via the use of one or more processors 63 and/or other combinations of hardware and/or hardware and software. In at least one embodiment, one or more or selected portions of method 10 may be implemented at one or more client(s) 1304, at one or more server(s) 1340, and/or combinations thereof.

For example, in at least some embodiments, various aspects, features, and/or functionalities of method 10 may be performed, implemented and/or initiated by software components, network services, databases, and/or the like, or any combination thereof.

According to different embodiments, one or more different threads or instances of method 10 may be initiated in response to detection of one or more conditions or events satisfying one or more different types of criteria (such as, for example, minimum threshold criteria) for triggering initiation of at least one instance of method 10. Examples of various types of conditions or events which may trigger initiation and/or implementation of one or more different threads or instances of the method may include, but are not limited to, one or more of the following (or combinations thereof):
- a user session with an instance of multimodal virtual assistant 1002, such as, for example, but not limited to, one or more of:
   ∘ a mobile device application starting up, for instance, a mobile device application that is implementing an embodiment of multimodal virtual assistant 1002;
   ∘ a computer application starting up, for instance, an application that is implementing an embodiment of multimodal virtual assistant 1002;
   ∘ a dedicated button on a mobile device pressed, such as a "speech input button";
   ∘ a button on a peripheral device attached to a computer or mobile device, such as a headset, telephone handset or base station, a GPS navigation system, consumer appliance, remote control, or any other device with a button that might be associated with invoking assistance;
   ∘ a web session started from a web browser to a website implementing multimodal virtual assistant 1002;
   ∘ an interaction started from within an existing web browser session to a website implementing multimodal virtual assistant 1002, in which, for example, multimodal virtual assistant 1002 service is requested;
   ∘ an email message sent to an email modality server 1426 that is mediating communication with an embodiment of multimodal virtual assistant 1002;
- a text message is sent to a messaging modality server 1430 that is mediating communication with an embodiment of multimodal virtual assistant 1002;
- a phone call is made to a VOIP modality server 1434 that is mediating communication with an embodiment of multimodal virtual assistant 1002;
   ∘ an event such as an alert or notification is sent to an application that is providing an embodiment of multimodal virtual assistant 1002.
- when a device that provides multimodal virtual assistant 1002 is turned on and/or started.

According to different embodiments, one or more different threads or instances of method 10 may be initiated and/or implemented manually, automatically, statically, dynamically, concurrently, and/or combinations thereof. Additionally, different instances and/or embodiments of method 10 may be initiated at one or more different time intervals (e.g., during a specific time interval, at regular periodic intervals, at irregular periodic intervals, upon demand, and the like).

In at least one embodiment, a given instance of method 10 may utilize and/or generate various different types of data and/or other types of information when performing specific tasks and/or operations, including detection of a hands-free context as described herein. Data may also include any other type of input data/information and/or output data/information. For example, in at least one embodiment, at least one instance of method 10 may access, process, and/or otherwise utilize information from one or more different types of sources, such as, for example, one or more databases. In at least one embodiment, at least a portion of the database information may be accessed via communication with one or more local and/or remote memory devices. Additionally, at least one instance of method 10 may generate one or more different types of output data/information, which, for example, may be stored in local memory and/or remote memory devices.

In at least one embodiment, initial configuration of a given instance of method I/O may be performed using one or more different types of initialization parameters. In at least one embodiment, at least a portion of the initialization parameters may be accessed via communication with one or more local and/or remote memory devices. In at least one embodiment, at least a portion of the initialization parameters provided to an instance of method 10 may correspond to and/or may be derived from the input data/information.

In the particular example of Fig. 7E, it is assumed that a single user is accessing an instance of multimodal virtual assistant 1002 over a network from a client application with speech input capabilities. In one embodiment, assistant 1002 is installed on device 60 such as a mobile computing device, personal digital assistant, mobile phone, smartphone, laptop, tablet computer, consumer electronic device, music player, or the like. Assistant 1002 operates in connection with a user interface that allows users to interact with assistant 1002 via spoken input and output as well as direct manipulation and/or display of a graphical user interface (for example via a touchscreen).

Device 60 has a current state 11 that can be analyzed to detect 20 whether it is in a hands-free context. A hands-free context can be detected 20, based on state 11, using any applicable detection mechanism or combination of mechanisms, whether automatic or manual. Examples are set forth above.

When hands-free context is detected 20, that information is added to other contextual information 1000 that may be used for informing various processes of the assistant, as described in related U.S. Utility Application Serial No. 13/250,854, entitled "Using Context Information to Facilitate Processing of Commands in a Virtual Assistant", filed September 30, 2011.

Speech input is elicited and interpreted 100. Elicitation may include presenting prompts in any suitable mode. Thus, depending on whether or not hands-free context is detected, in various embodiments, assistant 1002 may offer one or more of several modes of input. These may include, for example:
- an interface for typed input, which may invoke an active typed-input elicitation procedure;
- an interface for speech input, which may invoke an active speech input elicitation procedure.
- an interface for selecting inputs from a menu, which may invoke active GUI-based input elicitation.

For example, if a hands-free context is detected, speech input may be elicited by a tone or other audible prompt, and the user's speech may be interpreted as text. One skilled in the art will recognize, however, that other input modes may be provided.

The output of step 100 may be a set of candidate interpretations of the text of the input speech. This set of candidate interpretations is processed 200 by language interpreter 2770 (also referred to as a natural language processor, or NLP), which parses the text input and generates a set of possible semantic interpretations of the user's intent.

In step 300, these representation(s) of the user's intent is/are passed to dialog flow processor 2780, which implements an embodiment of a dialog and flow analysis procedure to operationalize the user's intent as task steps. Dialog flow processor 2780 determines which interpretation of intent is most likely, maps this interpretation to instances of domain models and parameters of a task model, and determines the next flow step in a task flow. If appropriate, one or more task flow step(s) adapted to hands-free operation is/are selected 310. For example, as described above, the task flow step(s) for modifying a text message may be different when hands-free context is detected.

In step 400, the identified flow step(s) is/are executed. In one embodiment, invocation of the flow step(s) is performed by services orchestration component 2782, which invokes a set of services on behalf of the user's request. In one embodiment, these services contribute some data to a common result.

In step 500, a dialog response is generated. In one embodiment, dialog response generation 500 is influenced by the state of hands-free context. Thus, when hands-free context is detected, different and/or additional dialog units may be selected 510 for presentation using the audio channel. For example, additional prompts such as "Ready to send it?" may be spoken verbally and not necessarily displayed on the screen. In one embodiment, the detection of hands-free context can influence the prompting for additional input 520, for example to verify input.

In step 700, multimodal output (which, in one embodiment includes verbal and visual content) is presented to the user, who then can optionally respond again using speech input.

If, after viewing and/or hearing the response, the user is done 790, the method ends. If the user is not done, another iteration of the loop is initiated by returning to step 100.

As described herein, context information 1000, including a detected hands-free context, can be used by various components of the system to influence various steps of method 10. For example, as depicted in Fig. 7E, context 1000, including hands-free context, can be used at steps 100, 200, 300, 310, 500, 510, and/or 520. One skilled in the art will recognize, however, that the use of context information 1000, including hands-free context, is not limited to these specific steps, and that the system can use context information at other points as well, without departing from the essential characteristics of the present invention. Further description of the use of context 1000 in the various steps of operation of assistant 1002 is provided in related U.S. Utility Application Serial No. 13/250,854, entitled "Using Context Information to Facilitate Processing of Commands in a Virtual Assistant", filed September 30, 2011, and in related U.S. Utility Application Serial No. 12/479,477 for ⁻Contextual Voice Commands", filed June 5, 2009.

In addition, one skilled in the art will recognize that different embodiments of method 10 may include additional features and/or operations than those illustrated in the specific embodiment depicted in Fig. 7, and/or may omit at least a portion of the features and/or operations of method 10 as illustrated in the specific embodiment of Fig. 7.

Adaptation of steps 100, 200, 300, 310, 500, 510, and/or 520 to a hands-free context is described in more detail below.

### Adapting Input Elicitation and Interpretation 100 to Hands-Free Context

Elicitation and interpretation of speech input 100 can be adapted to a hands-free context in any of several ways, either singly or in any combination. As described above, in one embodiment, if a hands-free context is detected, speech input may be elicited by a tone and/or other audible prompt, and the user's speech is interpreted as text. In general, multimodal virtual assistant 1002 may provide multiple possible mechanisms for audio input (such as, for example, Bluetooth-connected microphones or other attached peripherals), and multiple possible mechanisms for invoking assistant 1002 (such as, for example, pressing a button on a peripheral or using a motion gesture in proximity to device 60). The information about how assistant 1002 was invoked and/or which mechanism is being used for audio input can be used to indicate whether or not hands-free context is active and can be used to alter the hands-free experience. More particularly, such information can be used to direct step 100 to use a particular audio path for input and output.

In addition, when hands-free context is detected, the manner in which audio input devices are used can be changed. For example, in a hands-on mode, the interface can require that the user press a button or make a physical gesture to cause assistant 1002 to start listening for speech input. In hands-free mode, by contrast, the interface can continuously prompt for input after every instance of output by assistant 1002, or can allow continuous
speech in both directions (allowing the user to interrupt assistant 1002 while assistant 1002 is still speaking).

### Adapting Natural Language Processing 200 to Hands-Free Context

Natural Language Processing (NLP) 200 can be adapted to a hands-free context, for example, by adding support for certain spoken responses that are particularly well-suited to hands-free operation. Such responses can include, for example, "yes", read the message" and "change it". In one embodiment, support for such responses can be provided in addition to support for spoken commands that are usable in a hands-on situation. Thus, for example, in one embodiment, a user may be able to operate a graphical user interface by speaking a command that appears on a screen (for example, when a button labeled "Send" appears on the screen, support may be provided for understanding the spoken word "send" and its semantic equivalents). In a hands-free context, additional commands can be recognized to account for the fact that the user may not be able to view the screen.

Detection of a hands-free context can also alter the interpretation of words by assistant 1002. For example, in a hands-free context, assistant 1002 can be tuned to recognize the command "quiet!"· and its semantic variants, and to turn off all audio output in response to such a comment. In a non-hands-free context, such a command might be ignored as not relevant.

### Adapting Task Flow 300 to Hands-Free Context

Step 300, which includes identifying task(s) associated with the user's intent, parameter(s) for the task(s) and/or task flow steps 300 to execute, can be adapted for hands-free context in any of several ways, singly or in combination.

In one embodiment, one or more additional task flow step(s) adapted to hands-free operation is/are selected 310 for operation. Examples include steps to review and confirm content verbally. In addition, in a hands-free context, assistant 1002 can read lists of results that would otherwise be presented on a display screen.

In some embodiments, when a hands-free context is detected, items that would normally be displayed only via visual interface (e.g., in a hands-on mode) are instead output to a user only via an auditory output mode. For example, a user may provide a voice input requesting a web search, thus causing the assistant 1002 to generate a response including a list of information items to be presented to the user. In a non-hands-free context, such a list may be presented to the user via visual output only, without any auditory output. However, in a hands-free context, it may be difficult or unsafe for a user to read such lists. Accordingly, the assistant 1002 can speak the list aloud, either in its entirety or in a truncated or summarized version, instead of displaying it on a visual interface.

In some cases, information that is typically displayed only via a visual interface is not adapted to auditory output modes. For example, a typical web search for restaurants will return results that include multiple pieces of information, such as a name, address, hours, phone number, user ratings, and the like. These items are well suited to being displayed in a list on a screen (such as a touchscreen on a mobile device). But this information may not all be necessary in a hands-free context, and it may be confusing or difficult to follow if it were to be converted directly to a spoken output. For example, speaking all of the displayed components of a list of restaurant results may be very confusing, especially for longer lists. Moreover, in a hands-free context, such as while driving, the user may only need the top-level information (e.g., the names and addresses of restaurants). Thus, in some embodiments, the assistant 1002 summarizes or truncates information items (such as items in a list) so that they can be more easily understood by a user. Continuing the above example, the assistant 1002 may receive a list of restaurant results and read aloud only a subset of the information in each result, such as the restaurant name and street name, or restaurant name and rating information (e.g., 4 stars), etc., for each result. Other ways of summarizing or truncating lists and/or information items within lists are also contemplated by the present disclosure.

In some embodiments, verbal commands can be provided for interacting with individual items in the list. For example, if several incoming text messages are to be presented to the user, and a hands-free context is detected, then identified task flow steps can include reading aloud each text message individually, and pausing after each message to allow the user to provide a spoken command. In some embodiments, if a list of search results (e.g., from a web search) is to be presented to a user, and a hands-free context is detected, then identified task flow steps can include reading aloud each search result individually (either the entire result or a truncated or summarized version), and pausing after each result to allow the user to provide a spoken command.

In one embodiment, task flows can be modified for hands-free context. For example, the task flow for taking notes in a notes application might normally involve prompting for content and immediately adding it to a note. Such an operation might be appropriate in a hands-on environment in which content is immediately shown in the visual interface and immediately available for modification by direct manipulation. However, when a hands-free context is detected, the task flow can be modified, for example to verbally review the content and allow for modification of content before it is added to the note. This allows the user to catch speech dictation errors before they are stored in the permanent document.

In one embodiment, hands-free context can also be used to limit the tasks or functionalities that are allowed at a given time. For example, a policy can be implemented to disallow the playing videos when the user's device is in hands-free context, or a specific hands-free context such as driving a vehicle. In some embodiments, when a hands-free context is determined (e.g. driving a vehicle), device 60 limits the ability to view visual output presented by the electronic device. This may include limiting the device in any of the following ways (individually or in any combination):
- limiting the ability to view visual output presented by the electronic device (for example, deactivating a screen/visual output mode, preventing display of videos and/or images, displaying large text, limiting lengths of lists (e.g., search results), limiting number of visual items displayed on a screen, etc.);
- limiting the ability to interact with a graphical user interface presented by the electronic device (for example, limiting a device so as to not request touch input from the user, limiting the device so as to not respond to touch input from the user, etc.);
- limiting the ability to use a physical component of the electronic device (for example, deactivating a physical button on a device, such as a volume button, "home" button, power button, etc.);
- limiting the ability to perform touch input on the electronic device (for example, deactivating all or part of a touch screen);
- limiting the ability to use a keyboard on the electronic device (either a physical keyboard or a touchscreen based keyboard);
- limiting the ability to execute one or more applications on the electronic device (for example, preventing activation of a game, image viewing application, video viewing application, web browser, etc.); and
- limiting the ability to perform one or more functions enabled by the electronic device (for example, playing a video, displaying an image, etc.).

In one embodiment, assistant 1002 can make available entire domains of discourse and/or tasks that are only applicable in a hands-free context. Examples include accessibility modes such as those designed for people with limited eyesight or limited use of their hands. These accessibility modes include commands that are implemented as hands-free alternatives for operating an arbitrary GUI on a given application platform, for example to recognize commands such as "press the button" or "scroll up" are. Other tasks that are may be applicable only in hands-free modes include tasks related to the hands-free experience itself, such as "use my car's Bluetooth kit" or "slow down [the Text to Speech Output]".

### Adapting Dialog Generation 500 to Hands-Free Context

In various embodiments, any of a number of techniques can be used for modifying dialog generation 500 to adapt to a hands-free context.

In a hands-on interface, assistant's 1002 interpretation of the user's input can be echoed in writing; however such feedback may not be visible to the user when in a hands-free context. Thus, in one embodiment, when a hands-free context is detected, assistant 1002 uses Text-to-Speech (TTS) technology to paraphrase the user's input. Such paraphrasing can be selective; for example, prior to sending a text message, assistant 1002 can speak the text message so that a user can verify its contents even if he or she cannot see the display screen. In some cases, the assistant 1002 does not visually display transcribed text at all, but rather speaks the text back to the user. This may be beneficial where it may be unsafe for a user to read text from a screen, such as when the user is driving, and/or when a screen or visual output mode has been deactivated.

The determination as to when to paraphrase the user's speech, and which parts of the speech to paraphrase, can be driven by task- and/or flow-specific dialogs. For example, in response to a user's spoken command such as "read my new message", in one embodiment assistant 1002 does not paraphrase the command, since it is evident from assistant's 1002 response (reading the message) that the command was understood. However, in other situations, such as when the user's input is not recognized in step 100 or understood in step 200, assistant 1002 can attempt to paraphrase the user's spoken input so as to inform the user why the input was not understood. For example, assistant 1002 might say "I didn't understand 'reel my newt massage'. Please try again."

In one embodiment, the verbal paraphrase of information can combine dialog templates with personal data on a device. For example, when reading a text message, in one embodiment assistant 1002 uses a spoken output template with variables of the form, "You have a new message from $person. It says $message." The variables in the template can be substituted with user data and then turned into speech by a process running on device 60. In one embodiment wherein the invention is implemented in a client/server environment, such a technique can help protect the privacy of users while still allowing personalization of output, since the personal data can remain on device 60 and can be filled in upon receipt of an output template from the server.

In one embodiment, when hands-free context is detected, different and/or additional dialog units specifically tailored to hands-free contexts may be selected 510 for presentation using the audio channel. The code or rules for determining which dialog units to select can be sensitive to the particulars of the hands-free context. In this manner, a general dialog generation component can be adapted and extended to support various hands-free variations without necessarily building a separate user experience for different hands-free situations.

In one embodiment, the same mechanism that generates text and GUI output units can be annotated with texts that are tailored for an audio (spoken word) output modality. For example:
- In one embodiment, a dialog generation component can be adapted for a hands-free context by reading all of its written dialog responses using TTS.
- In one embodiment, a dialog generation component can be adapted for a hands-free context by reading some of its written dialog responses verbatim over TTS, and using TTS variants for other dialog responses.
- In one embodiment, such annotations support a variable substitution template mechanism which segregates user data from dialog generation.
- In one embodiment, graphical user interface elements can be annotated with text that indicates how they should be verbally paraphrased over TTS.
- In one embodiment, TTS texts can be tuned so that the voice, speaking rate, pitch, pauses, and/or other parameters are used to convey verbally what would otherwise be conveyed in punctuation or visual rendering. For example, the voice that is used when repeating back the user's words can be a different voice, or can use different prosody, than that used for other dialog units. As another example, the voice and/or prosody can differ depending on whether content or instructions are being spoken. As another example, pauses can be inserted between sections of text with different meanings, to aid in understanding. For example, when paraphrasing a message and asking for confirmation, a pause might be inserted between the paraphrase of the content "Your message reads ..." and the prompt for confirmation "Ready to send it?"

In one embodiment, non-hands free contexts can be enhanced using similar mechanisms of using TTS as described above for hands-free contexts. For example, a dialog can generate verbal-only prompts in addition to written text and GUI elements. For example, in some situations, assistant 1002 can say, verbally, "Shall I send it?" to augment the on-screen display of a Send button. In one embodiment, the TTS output used for both hands-free and non-hands-free contexts can be tailored for each case. For example, assistant 1002 may use longer pauses when in the hands-free context.

In one embodiment, the detection of hands-free context can also be used to determine whether and when to automatically prompt the user for a response. For example, when interaction between assistant 1002 and user is synchronous in nature, so that one party speaks while the other listens, a design choice can be made as to whether and when assistant 1002 should automatically start listening for a speech input from the user after assistant 1002 has spoken. The specifics of the hands-free context can be used to implement various policies for this auto-start-listening property of a dialog. Examples include, without limitation:
- Always auto-start-listening;
- Only auto-start-listening when in a hands-free context;
- Only auto-start-listening for certain task flow steps and dialog states;
- Only auto-start-listening for certain task flow steps and dialog states in a hands-free context.

In some embodiments, a listening mode is initiated in response to detecting a hands-free context. In the listening mode, the assistant 1002 may continuously analyze ambient audio in order to identify voice input, such as a voice command, from a user. The listening mode may be used in hands-free contexts, such as when a user is driving in a vehicle. In some embodiments, the listening mode is activated whenever a hands-free context is detected. In some embodiments, it is activated in response to detecting that the assistant 1002 is being used in a vehicle.

In some embodiments, the listening mode is active as long as the assistant 1002 detects that it is in a vehicle. In some embodiments, the listening mode is active for a predetermined time after initiation of the listening mode. For example, if a user pairs the assistant 1002 to a vehicle, the listening mode may be active for a predetermined time after the pairing event. In some embodiments, the predetermined time is 1 minute. In some embodiments, the predetermined time is 2 minutes. In some embodiments, the predetermined time is 10 or more minutes.

In some embodiments, when in the listening mode, the assistant 1002 analyzes received audio inputs (e.g., using speech-to-text processing) to determine whether the audio input includes a speech input intended for the assistant 1002. In some embodiments, to ensure user the privacy of nearby users, received speech is converted to text locally (i.e., on the device) without sending the audio input to a remote computer. In some embodiments, the received speech is first analyzed (e.g., converted to text) locally in order to identify words that are intended for the assistant 1002. Once it is determined that one or more words are intended for the assistant, a portion of the received speech is sent to a remote server (e.g., servers 1340) for further processing, such as speech-to-text processing, natural language processing, intent deduction, and the like.

In some embodiments, the portion sent to the remote service is a group of words following a predefined wake-up word. In some embodiments, the assistant 1002 continuously analyzes received ambient audio (converting the audio to text locally), and when a predefined wake-up word is detected, the assistant 1002 will recognize that one or more of the following words are directed to the assistant 1002. The assistant 1002 will then send recorded audio of the one or more words following the keyword to a remote computer for further analysis (e.g., speech-to-text processing). In some embodiments, the assistant 1002 detects a pause (i.e., a silent period) of a predefined length following the one or more words, and sends only those words that are between the keyword and the pause to the remote service. The assistant 1002 then proceeds to fulfill the user's intent, including executing appropriate task flows and/or dialog flows.

For example, in a listening mode, a user may say "Hey Assistant-find me a nearby gas station...." In this case, the assistant 1002 is configured to detect the phrase "hey assistant" as a wake-up to signal the beginning of an utterance that is directed to the assistant 1002. The assistant 1002 then processes the received audio to determine what should be sent to a remote service for further processing. In this case, the pause following the word "station" is detected by the assistant 1002 as an end of the utterance. The phrase "find me a nearby gas station" is thus sent to the remote service for further analysis (e.g., intent deduction, natural language processing, etc.). The assistant then proceeds to execute one or more steps, such as those described with reference to Fig. 7, in order to satisfy the user's request.

In other embodiments, detection of a hands-free context can also affect choices with regard to other parameters of a dialog, such as, for example:
- the length of lists of options to offer the user;
- whether to read lists;
- whether to ask questions with single or multiple valued answers;
- whether to prompt for data that can only be given using a direct manipulation interface.

Thus, in various embodiments, a hands-free context, once detected, is a system-side parameter that can be used to adapt various processing steps of a complex system such as multimodal virtual assistant 1002. The various methods described herein provide ways to adapt general procedures of assistant 1002 for hands-free contexts to support a range of user experiences from the same underlying system.

Various mechanisms for gathering, communicating, representing, and accessing context are described in related U.S. Utility Application Serial No. 13/250,854, entitled "Using Context Information to Facilitate Processing of Commands in a Virtual Assistant", filed September 30, 2011. One skilled in the art will recognize that such techniques are applicable to hands-free context as well.

### Use Cases

The following use cases are presented as examples of operation of assistant 1002 in a hands-free context. One skilled in the art will recognize that the use cases are exemplary, and are presented for illustrative purposes only.

### Phone Use Cases

In one embodiment, when in a hands-free context, assistant 1002 allows the user to can call anyone if the user can specify the person to be called without tapping or otherwise
touching the device. Examples include calling by contact name, calling by phone number (digits recited by user), and the like. Ambiguity can be resolved by additional spoken prompts. Examples are shown below.

### Example 1: Call a contact, unambiguous

- User's spoken input: "Call Adam Smith"
- Assistant's 1002 spoken output: "Calling Adam Smith, mobile."
- Call is placed

Similar interaction would take place for any of the following use cases:
- Call contact by Name ("call adam smith")
- Call contact by Name, non-default phone number ("call adam smith mobile")
- Call by Number ("call 800 555 1212")
- Call contact by Relationship Alias ("call my mom")
- Call contact by Location Alias ("phone home")
- Call via FaceTime ("facetime adam smith")
- Call back from context ("call him back")

### Example 2: Cancel a phone call

- User's spoken input: "Call Adam Smith"
- Assistant's 1002 spoken output: "Calling Adam Smith, mobile."
- User notes this is the wrong person to call; user single-presses home button to cancel the call, or says "Stop"
- Call is canceled

### Example 3: Call by name, ambiguous

- User's spoken input: "Call Adam"
- Assistant's 1002 spoken output: "1 found multiple matches for <voice change> Adam"
- Assistant's 1002 visual output: "1 found multiple matches for <voice change> Adam"
- Assistant's 1002 spoken output: Read names
- Assistant's 1002 visual output:
   Disambiguation Menu
   Adam Cheyer home
   Adam Sandler home
   Adam Smith mobile
- User's spoken input: "Adam Cheyer"
- Assistant's 1002 spoken output: "Calling Adam Cheyer"
- Call is placed

### Example 4: Call by name, doubly ambiguous

- User's spoken input: "Call Paul"
- Assistant's 1002 spoken output: "I found multiple matches for <voice change> Paul"
- Assistant's 1002 visual output: "I found multiple matches for <voice change> Paul"
- Assistant's 1002 spoken output: Read names
- Assistant's 1002 visual output:
   Disambiguation Menu
   Paul Holden home
   Paul Marcos iPhone
   Paul Marcos mobile
   Paul Marcos home
   Pablo Picasso home
- User's spoken input: "Paul Marcos"
- Assistant's 1002 spoken output: "Which number for Paul Marcos: iPhone, mobile, or home?"
- Assistant's 1002 visual output: "Which number for Paul Marcos?"
- Assistant's 1002 visual output:
   Disambiguation Menu
   Paul Marcos iPhone
   Paul Marcos mobile
   Paul Marcos home
- User's spoken input: "mobile"
- Assistant's 1002 spoken output: "Calling Paul Marcos <pause> mobile"
- Call is placed

### Example 5: Call a business by name, no ambiguity

- User's spoken input: "Call the sony metreon in san francisco"
- Assistant's 1002 spoken output: "I found AMC Loews Metreon 16 on Fourth Street"
- Assistant's 1002 visual output: "I found AMC Loews Metreon 16 on Fourth Street"
- Assistant's 1002 visual output:
   Local Search Snippet
   AMC Loews Metreon 16
   101 Fourth St, San Francisco
   (888) 262-4386
   <Cancel button> <Call button>
- Assistant's 1002 spoken output: "Shall I place the call?"
- User's spoken input: "Call it"
- Assistant's 1002 spoken output: "Calling AMC Loews Metreon 16"
- Call is placed

### Example 6: Call a business by name, multiple matches

- User's spoken input: "Call walgreens"
- Assistant's 1002 spoken output: "I found several matches for <change voice> Walgreens"
- Assistant's 1002 visual output: " I found several matches for <change voice> Walgreens "
- Assistant's 1002 visual output:
   List of Local Search Snippets
   Walgreens Store Los Gatos
      423 N Santa Cruz Ave, Los Gatos
   Walgreens
      1570 Campbell Ave, Campbell, CA
   Walgreens
      20011 Bollinger Rd, Cupertino, CA
   Walgreens
      1334 Saratoga Ave, San Jose, CA
   Walgreens
      2680 Union Ave, San Jose, CA
- Assistant's 1002 spoken output: "Shall I read them to you?"
- User's spoken input: "yes"
- Assistant's 1002 spoken output: "Walgreens store los gatos on 423 North Santa Cruz Avenue in Los Gatos <pause> 2. Walgreens on 1570 Campbell Avenue in Campbell <pause> 3.
- User's spoken input: "the one in Cupertino"
- Assistant's 1002 spoken output: "Calling Walgreens in Cupertino"
- Call is placed

### Example 7: Make scheduled calls in car

- User starts driving home
- Assistant 1002 issues tone of an In Car Reminder
- Assistant's 1002 visual output:
   Reminder Alert Call
   Adam Smith
   <Close button>
   <Call button>
- User's spoken input: "Read it"
- Assistant's 1002 spoken output: "You have a reminder to call Adam Smith"
- User's spoken input: "Call him now"
- Assistant's 1002 spoken output: "Calling Adam Smith, mobile"
- Call is placed

### Example 8: Play new voicemails

- User's spoken input: "play voicemail"
- Assistant's 1002 spoken output: "You have three new voice mail messages"
- Assistant 1002 plays voicemails, one at a time, with prompts"

### SMS Text Messaging Use Cases

### Example 9: Read a single text message alert

- Assistant's 1002 audio output: Reads the alert or alerts; or generates sound indicating incoming text message
- Assistant's 1002 visual output:
   Text Message
   Mary Richards
   Are you free for dinner tonight?
   <Close button> <Reply button>
- User's spoken input: "read it"
- Assistant's 1002 spoken output: "Message from Mary Richards <change of voice> are you free for dinner tonight?"

### Example 10: Reply to text message (continues from Example 8)

- User's spoken input: "reply <pause> sure, how about 8?"
- Assistant's 1002 spoken output: "Ready to reply to Mary Richards with the message <change of voice> sure how about 8"
- Assistant's 1002 visual output:
   To: Mary Richards
   sure how about 8
   <Cancel button> <Send button>
- User's spoken input: "send it"
- Assistant's 1002 audio output: "Sending"; or generates outgoing text message sound

### Example 11: Send a text message to one recipient

- User's spoken input: "Tell Lisa that I'll be 15 minutes late"
- Assistant's 1002 spoken output: "Ready to send a text to Lisa Gonzalez with the message <change of voice> I'll be 15 minutes late"
- Assistant's 1002 visual output:
   Text Message
   To: Lisa Gonzalez
   I'll be 15 minutes late
   <Cancel button> <Send button>
- User's spoken input: "send it"
- Assistant's 1002 audio output: "Sending"; or generates outgoing text message sound

### Example 12: Send a text message to one recipient - ambiguous

- User's spoken input: "text to Adam with message Where is the meeting?"
- Assistant's 1002 spoken output: "I found multiple matches for <voice change> Adam"
- Assistant's 1002 spoken output: Read names
- Assistant's 1002 visual output:
   Disambiguation Menu
   Adam Cheyer home
   Adam Sandler home
   Adam Smith mobile
- User's spoken input: "Adam Cheyer"
- Assistant's 1002 spoken output: "Adam Cheyer"
- Assistant's 1002 visual output:
   Text Message
   To: Adam Cheyer
   Where is the meeting?
   <Cancel button> <Send button>
- Assistant's 1002 spoken output: "Ready to send a text to Adam Cheyer with the message <change of voice> Where is the meeting?"
- User's spoken input: "send it"
- Assistant's 1002 audio output: "Sending"; or generates outgoing text message sound

### Example 13: Read an SMS message from Messages app

- Assistant's 1002 visual output:
   Text Message
   Betty Joe Bialowski
   You can call me Nancy
   <Close button> <Reply button>
- User's spoken input: "read it"
- Assistant's 1002 spoken output: "Message from Betty Joe Bialowski <change voice> you can call me nancy"

### Example 14: Reply in context of Messages App (continues from Example 12)

- User's spoken input: "reply <pause> Hi Nancy"
- Assistant's 1002 spoken output: "Ready to reply to Betty Joe Bialowski with the message <change of voice> Hi Nancy "
- Assistant's 1002 visual output:
   To: Betty Joe Bialowski
   Hi Nancy
   <Cancel button> <Send button>
- User's spoken input: "send it"
- Assistant's 1002 audio output: "Sending"; or generates outgoing text message sound

### Example 15: Read all unread SMS messages

- Assistant's 1002 visual output:
   Melanie Haber (1)
   Betty Joe Bialowski (3)
   Audrey Farber (1)
- User's spoken input: "Read my new messages"
- Assistant's 1002 spoken output: "You have 4 new messages. From Melanie Haber <change voice> How about dinner? <pause> From Betty Joe Bialowski, you have 2 messages. <pause> 1. <change voice> My name is MacGill. <pause> 2. <change voice> I call myself Lill. "<pause> 3. <change voice> you can call me nancy"

### Example 16: Reply by name in context of Messages App

- User's spoken input: "Tell Audrey that I'll be 15 minutes late"
- Assistant's 1002 spoken output: "Ready to send a text to Audrey Farber with the message <change of voice> I'll be 15 minutes late"
- Assistant's 1002 visual output:
   Text Message
   To: Audrey Farber
   I'll be 15 minutes late
   <Cancel button> <Send button>
- Assistant's 1002 spoken output: "Shall I send it?"
- User's spoken input: "yes"
- Assistant's 1002 audio output: "Sending"; or generates outgoing text message sound

### Example 17: Send a text message to multiple recipient

In one embodiment, this task is determined to be out of scope for hands-free context. Accordingly, assistant 1002 reverts to tapping for disambiguation.
- User's spoken input: "Tell Lisa, Paul, and Nancy that I'll be 15 minutes late to our important meeting"
- Assistant's 1002 spoken output: "Please select among these people"
- Assistant's 1002 visual output: GUI to select multiple recipients
- User selects recipients via GUI
- Assistant's 1002 spoken output: "Ready to send a text to Lisa Gonzalez, Paul Marcos, and Audrey Farber with the message <change of voice> I'll be 15 minutes late to our important meeting"
- Assistant's 1002 visual output:
   Text Message
   To: Lisa Gonzalez, Paul Marcos, Audrey Farber
   I'll be 15 minutes late to our important meeting
   <Cancel button> <Send button>
- User's spoken input: "Send it"
- Assistant's 1002 audio output: "Sending"; or generates outgoing text message sound

### Alerts & Reminders Use Cases

### Example 18: Read a single Reminder alert

- Assistant 1002 issues reminder tone
- Assistant's 1002 visual output:
   Reminders
   Call Mary Richards
   <Close button> <Call button>
- User's spoken input: "Read it"
- Assistant's 1002 spoken output: "Reminder to call Mary Richards"

### Example 19: Execute Reminder alert (continues from Example 17)

- User's spoken input: "call her"
- Assistant's 1002 spoken output: "Calling Mary Richards, mobile"
- Call is placed

### Example 20: Create a new reminder with alert

- User's spoken input: "Remind me to call Bob Jones at 5pm"
- Assistant's 1002 spoken output: "Please confirm: reminder at 5pm today to <change of voice>call Bob Jones "
- Assistant's 1002 visual output:
   Please confirm Reminder
   Call Bob Jones
   Reminder time: 5:00pm today
   <Cancel> <Save>
- Pause
   - Assistant's 1002 spoken output: "Is this correct?"
   - User's spoken input: "yes, save it"
   - Assistant's 1002 spoken output: "Your reminder has been saved"

### Example 21: Create a new reminder with no alert PI

- User's spoken input: "Remind me to get bread" or "Remember to get bread"
- Assistant's 1002 spoken output: "Please confirm: remember to get bread"
- Assistant's 1002 visual output:
   Please confirm Reminder
   get bread
   <Cancel> <Save>
- Pause
- Assistant's 1002 spoken output: "Is this correct?"
- User's spoken input: "yup"
- Assistant's 1002 spoken output: "I added it to your to-do list"

### Calendar Use Cases

### Example 22: Create a simple appointment (description and date/time given)

- User's spoken input: "Schedule a meeting at 2 tomorrow to plan the company picnic"
- Assistant's 1002 spoken output: "I put it on your calendar for 2PM tomorrow"
- Assistant's 1002 visual output:
   description: Plan the company picnic
   when: tomorrow at 2PM

### Example 23: Create a simple appointment (no description given)

- User's spoken input: "Meet with Carol at 2 tomorrow"
- Assistant's 1002 spoken output: "I put it on your calendar for 2PM tomorrow"
- Assistant's 1002 visual output:
   description: Meeting
   when: tomorrow at 2PM

### Example 24: Create a simple appointment (no time given)

- User's spoken input: "Dentist appointment next Thursday"
- Assistant's 1002 spoken output: "What time next Thursday?"
- User's spoken input: "3 o'clock"
- Assistant's 1002 spoken output: "I put it on your calendar for 3PM next Thursday"
- Assistant's 1002 visual output:
   description: Dentist appointment
   when: next Thursday - 3pm

### Example 25: Create a simple appointment (no date or time given)

- User's spoken input: "Schedule a meeting to plan the company picnic"
- Assistant's 1002 spoken output: "When would you like to have the meeting?
- Assistant's 1002 visual output: editable appointment form
- User's spoken input: "Tuesday at 3 o'clock"
- Assistant's 1002 spoken output: "I put it on your calendar for 3PM on Tuesday
- Assistant's 1002 visual output:
   description: meeting to plan the company picnic
   when: Tuesday - 3pm

One skilled in the art will recognize that the above examples are merely illustrative of the use of hands-free context in particular situations. Additional uses include, for example, maps, playing media such as music, and the like.

The following use cases are more specifically directed to how a list of items is presented to the user in a hands-free context, in general and in specific domains (e.g., in the local search domain, calendar domain, reminder domain, text messaging domain, and e-mail domain, etc.). The specific algorithms for presenting a list of items in the hands-free and/or eyes-free context(s) are designed to provide information about the items to the user in an intuitive and personal way, and at the same time, to avoid overburdening the user with unnecessary details. Each piece of information to be presented to the user through a speech-based output and/or the accompanying textual interface is carefully selected out of many pieces of potentially relevant information, and optionally paraphrased to provide a smooth and personable dialogue flow. In addition, when providing information to the user in the hands-free and/or eyes-free context(s), the information (particularly unbounded) is divided into suitable-sized chucks *(e.g.,* pages, sub-lists, categories, etc.), such that user is not bombarded with too many pieces of information concurrently or within a short time. Known cognitive limitations *(e.g.,* adults are typically only capable of handling 3-7 pieces of information at a time, and children or people with disabilities are capable of handling even fewer pieces of information concurrently) are used to guide the selection of a suitable size for the chunking and categorization of information for presentation.

### General Hands-Free List-Reading

Hands-free list reading is a core, cross-domain ability for users to be able to navigate results involving more than one item. The item can be of a common data item type associated with a particular domain, such as results of a local search, a group of e-mails, a group of calendar entries, a group of reminders, a group of messages, a group of voice mail messages, a group of text messages, etc. Typically, the group of data items can be sorted in a particular order *(e.g.,* by time, location, sender, and other criteria), and hence result in a list.

The general functional requirements for hands-free list reading include one or more of: (1) Providing a verbal overview of a list of items (e.g.,"There are 6 items.") through a speech-based output; (2) Optionally, providing a list of visual snippets representing the list of items on a screen (e.g., within a single dialogue window); (3) Iterating through the items and have each one read aloud; (4) Reading a domain-specific paraphrase of an item *(e.g.,* "message from X on date Y about Z"); (4) Reading the unbounded content of an item *(e.g.,* content body of an email); (5) Verbally "paginating" the unbounded content of an individual item *(e.g.,* sections of the content body of an email); (6) Allowing the user to act on the current item by starting a speech request *(e.g.,* for an e-mail item, the user can say "reply" to start a reply action); (7) Allowing the user to interrupt reading of the items and/or paraphrases to enter another request; (8) Allowing the user to pause and resume the content/list reading, and/or to skip to another item in the list *(e.g.,* the next or previous item, the third item, the last item, the item with certain properties, etc.); (9) Allowing the user to refer to the Nth item in the list in natural language *(e.g.,* "reply to the first one"); and (10) Using the list as a context for natural language disambiguation (e.g., during reading of a list of messages, the user input ⁻reply to the one from Mark" in light of the respective senders of the messages in the list).

There are several basic interaction patterns for presenting information about the list of items to the user, and for eliciting user input and responding to user commands during presentation of the information. In some embodiments, when presenting inflation about a list of data items, a speech-based overview is first provided. If the list of data items has been identified based on a particular set of selection criteria (e.g., new, unread, from Mark, for today, nearby, in Palo Alto, restaurants, etc.) and/or belong to a particular domain-specific data type (e.g., local search results, calendar entries, reminders, e-mails, etc.), the overview paraphrases the list of items. The particular paraphrasing used is domain-specific, and typically specifies one or more of the criteria used to select the list of data items. In addition, for presenting a list of data items, the overview also specifies the length of the list, to provide the user with some idea of how long and involved the reading is going to be. For example, the overview can be "You have 3 new messages from Anna Karenina and Alexei Vronsky." In this overview, the list length *(e.g.,* 3), the criteria for selecting the items for the list *(e.g.,* unread/new, and sender="Anna Karenina" and "Alexei Vronsky") are also provided. Presumably, the criteria used to select the items were specified by the user, and by including the criteria in the overview, the presentation of information would appear more responsive to the user's request.

In some embodiments, the interaction also includes providing a speech-based prompt with an offer to read the list and/or the unbounded content of each item to the user. For example, a digital assistant can provide a speech-based prompt such as "Shall I read them to you?" after providing the overview. In some embodiments, the prompt is only provided in the hands-free mode, because in a hands-on mode, the user can probably easily read and scroll through the list on a screen rather than hearing the content read out loud. In some embodiments, if the original command was to read the list of items, then the digital assistant will proceed to read the data items out loud without providing the prompt first. For example, if the user input was "Read my new messages." Then, the digital assistant proceeds to read the messages without asking the user whether he or she wants the messages read out loud. Alternatively, if the user input was "Do I have any email from Henri?" Since the original user input does not explicitly request the digital assistant to "read" the messages, the digital assistant will first provide an overview of the list of messages, and will provide a prompt with an offer to read the messages. The messages will not be read out loud unless the user provides a confirmation for doing so.

In some embodiments, the digital assistant identifies fields of text data from each data item in the list, and generates a domain-specific and item-specific paraphrase of the item's content based on a domain-specific template and the actual text identified from the data item. Once the respective paraphrases for the data items are generated, the digital assistant iterates through each item in the list one by one and reads its respective paraphrase out loud. Examples of text data fields in a data item include dates, times, person names, location names, business names, and other domain-specific data fields. The domain-specific speakable text templates arrange the different data fields of a domain-specific item type in a suitable order, and connecting the data fields with suitable connection words, and apply suitable variations (e.g., variations based on grammatical, cognitive, and other requirements) to the text of different text fields, to generate a succinct, and natural, and easy-to-understand paraphrase of the data item.

In some embodiments, when iterating through the list of items and providing information (e.g., the domain-specific, item-specific paraphrase of the items), the digital assistant sets a context marker to the current item. The context marker advances from item to item as the reading proceeds through the list. The context marker can also hop from one item to another item, if the user issues commands to jump from one item to another item. The digital assistant uses the context marker to identify the current context of the interaction between the digital assistant and the user, so that the user's input can be interpreted correctly in context. For example, the user can interrupt the list reading at any time and issue a command applicable to all or multiple of the list items (e.g., "reply"), and the context marker is used to identify a target data item *(e.g.,* the current item) for which the command should be applied. In some embodiments, the domain-specific, item-specific paraphrases are provided to the user through text-to-speech processing. In some embodiments, a textual version of the paraphrase is also provided on a screen. In some embodiments, the textual version of the paraphrase is not provided on the screen, instead, full-versions of or detailed versions the data items are presented on the screen.

In some embodiments, when reading the unbounded content of a data item, the unbounded content is first divided into sections. The division can be based on paragraphs, lines, number of words, and/or other logical divisions of the unbounded content. The goal is to reduce the cognitive burden on the user, and not overloading the user with too much information or taking up too much time. When reading the unbounded content, a speech output is generated for each section, provided to the user one section at a time. Once the speech output for one section is provided, a verbal prompt is provided asking whether the user wishes to proceed with the speech output for the next section. This process repeats until all sections of unbounded content have been read, or until the user asks the reading of the unbounded content to be stopped. When the reading of the unbounded content for one item is stopped (*e.g*., either when all sections have been read or when the reading was stopped by the user), the reading of the item-specific paraphrase of the next item in the list can begin. In some embodiments, the digital assistant automatically resumes reading of the item-specific paraphrase of the next item in the list. In some embodiments, the digital assistant asks the user for a confirmation before resuming the reading.

In some embodiments, the digital assistant is fully responsive to user input from multiple input channels. For example, while the digital assistant is reading through the list of items or in the middle of reading information on one item, the digital assistant allows the user to navigate to other items via natural language commands, gestures on a touch-sensitive surface or display, and other input interfaces *(e.g*., mouse, keyboard, cursor, etc.). Example navigation commands include: (1) Next: stop reading the current item and start reading the next. (2) More: read more of the current item (if it was truncated or segmented), (3) Repeat: read the last speech output again *(e.g.,* repeat the paraphrase of an item or section of unbounded content that was just read), (4) Previous: stop reading the current item and start reading the one before the current one, (5) Pause: stop reading the current item and wait for a command, (6) Resume: continue reading if paused.

In some embodiments, the interaction pattern also includes a wrap-up output. For example, when the last item has been read, read an optional, domain-specific text pattern for ending a list. For example, a suitable wrap-up output for reading a list of e-mails can be That was all 5 e-mails", "That was all of the messages", "That was the end of the last message", etc.

The above generic listing reading examples are applicable to multiple domains, and domain-specific item types. The following use cases provide more detailed examples of hands-free list reading in different domains and for different domain-specific item types. Each domain-specific item types also have customizations specifically applicable to items of that item type and/or domain.

### Hands-free list reading of local search results

Local search results are search results obtained through a local search, *e.g.,* search for businesses, landmarks, and/or addresses. Examples of local search include a search for restaurants near a geographic location or within a geographic area, a search for gas stations along a route, a search for locations of a particular chain-store, and the like. Local search is an example of a domain, and local search result is an example of a domain-specific item type. The following provides an algorithm for presenting a list of local search results to a user in a hand-free context.

In the algorithm, some key parameters include N: the number of results returned by a search engine for a local search request, M: the maximum number of search results to show to the user, and P: the number of items per "page" *(i.e.,* concurrently presented to the user on the screen and/or provided under the same sub-section overview).

In some embodiments, the digital assistant detects a hands-free context, and trims the list of results for hands-free context. In other words, the digital assistant trims the list of all relevant results to no more than M: the maximum number of search results to show to the user. A suitable number for M is about 3-7. The rationale behind this maximum number is: first, a user is unlikely to perform in depth research in a hands-free mode, and therefore, a small number of most pertinent items would typically satisfy the user's information needs; and second, a user is unlikely to be able to keep track of too much information simultaneously in his mind while in a hands-free mode, because the user is probably distracted by other tasks (e.g., driving or engaged in other hands-on work).

In some embodiments, the digital assistant summarizes the list of results in text, and generates a domain-specific overview (in text form) of the entire list from the text. In addition, the overview is tailored to presenting local search results and therefore location information is particularly relevant in the overview. For example, suppose that the user requested search results for a query in the form of "category, current location" (e.g., queries resulted from natural language search requests "Find Chinese restaurants near me" or "Where can I eat here?"). Then, the digital assistant reviews the search results, and identifies search results that are near the user's current location. Then the digital assistant generates an overview of the search results in the form of "I found several <categoryPlural> nearby." In some embodiments, no count is provided in the overview unless N < 3. In some embodiments, a count of the search results is provided in the overview if the count is less than 6.

For another example, suppose the user requested search results for a query in the form of "category, other location" *(e.g.,* queries resulted from natural language search requests "Find me some romantic restaurants in Palo Alto" while the user is not currently in Palo Alto, or "Where can I eat after the movie?" where the movie will be shown at a location than the user's current location). The digital assistant will generate an overview (in textual form) in the form of "I found several <categoryPlural> in <location>." (or "near" instead of "in", whichever is more suitable given the <location>.)

In some embodiments, the textual form of the overview is provided on a display screen *(e.g.,* within a dialogue window). After providing the overview of the entire list, the list of results are presented on the display as usual *(e.g.,* capped at M items, M=25, for example).

In some embodiments, after the list of results are presented on the screen, a speech-based overview is provided to the user. The speech-based overview can be generated through text-to-speech conversion of the textual version of the overview. In some embodiments, no content is provided on a display screen, and only the speech-based overview is provided at this point.

Once the speech-based overview is provided to the user, a speech-based subsection overview of a first "page" of results can be provided. For example, the sub-section overview can list the names *(e.g.,* business names) of the first P items on the "page." Specifically,
a. If this is the first page, the sub-section overview says "including <namel>, <name2>, ... and <nameP>", where <namel> <nameP> are the business names of the first P results, and the sub-section overview is presented immediately after the list overview I found several <categoryPlural> nearby ..."
b. If this is not the first page, the sub-section overview says The next P are <namel>, <name2>, ...<nameP>" etc.

The digital assistant iterate through all the "pages" of the search result list in the above manner.

For each page of results, the following steps are performed:
a. In some embodiments, on the display, a current page of search results are presented in visual form (e.g., in textual form). A visual context marker indicates the current item being read. The textual paraphrase for each search result includes the ordinal position *(e.g.,* first, second, etc.), distance, and bearing associated with the search result. In some embodiments, the textual paraphrase for each result only occupies a single line in the list on the display, such that the list appears succinct and easy to read. To keep the text in a single line, no business name is presented, the text paraphrase is in the format of "Second: 0.6 miles south".
b. In some embodiments, an individual visual snippet is provided for each result. For example, the snippet of each result can be revealed when the textual paraphrase shown on the display is scrolled, so that the 1 line text bubble is at the top and the snippet fits underneath.
c. In some embodiments, the context marker or context cursor advances through the list of items as the items or paraphrases thereof are presented to the user one by one in a sequential order.
d. In speech, announce the ordinal position, business name, short address, distance, and bearing of the current item. The short address is the street name portion of the full address, for example.
   1. If item is the first one (independent of pages), indicate the sort order with "the closest is", "the highest rated is", "the best match is", or just "the first is".
   2. Else say "the second is" (third, fourth, etc.). Keep incrementing through pages, that is, if page size P=4, the first item on page 2 would be the "fifth".
   3. For short address, use "on <street name>" (no street number).
   4. If result.address.city is not same as locus.city, then add " in <city>".
   5. For distance, if less than a mile, say "point x miles". If less than 1.5 miles, say "1 mile". Else round to nearest whole mile and say "X miles". Use Kilometers instead of miles where the locale dictates.
   6. For bearing, use north, south, east, or west (no intermediates)
e. Only for the first item of this page, speak a prompt for options: "Would you like to call it, get directions, or go to the next one?"
f. Listen
g. Handle natural language commands in context of the current result *(e.g.,* as determined based on the current position of the context marker). If user says "next" or an equivalent word, move on to the next item in the list.
h. go back to step a or go to the next page if this is the last item of the current page has been reached.

The above steps are repeated for each of the remaining "pages" of results, until there are no more pages of results left in the list.

In some embodiments, if user asks for directions to a location associated with a result item and the user is already in a navigation mode on a planned route, the digital assistant can provide a speech output saying "You are already navigating on a route. Would you like to replace this route with directions to <item name>?" If the user replies in the affirmative, the digital assistant presents the directions to the location associated with that result. In some embodiments, the digital assistant provides a speech out saying "Directions to <item name>" and presents the navigation interface *(e.g.,* a maps and directions interface). If the user replies in the negative, the digital assistant provides a speech output saying "OK, I won't replace your route." If in eyes-free mode, just stop here. If user says "show it on a map," but the digital assistant detects an eyes-free context, the digital assistant generates a speech output saying "Sorry, your vehicle won't let me show items on the map during driving" or some other standard eyes-free warning. If eyes-free context is not detected, the digital assistant provides a speech output saying "Here is the location of <item name>" and shows the single item snippet for that item again.

In some embodiments, when an item is displayed, and the user asks to call an item, e.g., by saying "Call." The digital assistant identifies the correct target result, and initiates a telephone connection to a telephone number associated with the target result. Before making the telephone connection, the digital assistant provides a speech out saying Calling <item name>."

The following provides a few natural language use cases for identifying the target item/result of an action command. For example, the user can name the item in a command, and the target item is then identified based on the particular item name specified in the command. The user can also use "it" or other reference to refer to a current item. The digital assistant can identify the correct target item based on the current position of the context marker. The user can also use "the nth one" or "number n" to refer to the nth item in the list. In some cases, the nth item can be ahead of the current item. For example, as soon as the user has heard the overview list of names and are hearing information regarding item #1, the user can say "directions to number 3". In response, the digital assistant will perform the "direction" action with respect to the 3rd item in the list.

For another example, the user can speak a business name to identify a target item. If multiple items in the list match the business name, then, the digital assistant chooses the last read item that matches the business name as the target item. In general, the digital assistant disambiguate from the current item (*i. e*., the item pointed to by the context marker) back in time, then forward from the current item. For example, if context marker is on item 5 of 10 items, and the user says a selection criterion *(e.g.,* a particular business name, or other properties of the results) that matches items 2, 4, 6, and 8. Then the digital assistant chooses item 4 as the target item for the command. In another scenario, if context marker is on item 2, and items 3, 5, and 7 match the selection criterion, then the digital assistant selects item 3 as the target item of the command. In this case, nothing before the current context marker matches the selection criterion, and item 3 is the closest item to the context marker.

While presenting the list of local search results, the digital assistant allows the user to moving around the list by issuing the following commands: Next, Previous, go back, Read it again or repeat.

In some embodiments, when the user provides a speech command that only specifies an item, but not any action applicable to the item, then, the digital assistant prompts the user to specify an applicable action. In some embodiments, the prompt provided by the digital assistant provides one or more actions applicable to the specific item type of the item *(e.g.,* actions to local search results, such as "Call", "Directions," "Show on map", etc.). For example, if the user simply says "number 3" or "chevron" with no applicable command verb *(e.g.,* "call" or "directions"), then the digital assistant prompts the user with a speech output saying "Would you like call it or get directions?" If the user's speech input already specifies a command verb or action applicable to the item, then, the digital assistant acts on the item according to the command. For example, if the user's input is "call the nearest gas station" or the like. The digital assistant identifies the target item *(e.g.,* the result corresponding to the nearest gas station), and initiates a telephone connection to a telephone number associated with the target item.

In some embodiments, the digital assistant is capable of processing and responding to user input related to different domains and context. If the user makes a context-independent, fully specified request in another domain, then, the digital assistant suspends or terminates the list reading, and responds to the request in the other domain. For example, while the digital assistant is in the process as asking the user "Would you like to call it, get directions, or go the next one" during list reading, the user can say "What is the time in Beijing?" In response to this new user input, the digital assistant determines the domain of interest has switch from local search and list-reading to another domain of clock/time. Based on such a determination, the digital assistant performs the action requested in the clock/time domain *(e.g.,* launch the clock application, or provides the current time in Beijing).

The following provides another more detailed example on presenting a list of gas stations in response to a search request for "Find gas stations near me."

In this example, the parameters are: Page size P=4, Max results M=12, and query: {category *(e.g.,* gas station), nearest, sorted by distance from current location}

The following task flow is implemented to present the list of search results (*i.e*., gas stations identified based on a local search request).
1. Sort gas stations by distance from the user's current location, and trim the list of search results to a total count of M.
2. Generate text only summary for the list: "I found several gas stations near you." (fit on at most 2 lines).
3. Show a list of N local search snippets for the complete list of results on a display.
4. Generate and provide speech-based overview: I found several gas stations near you,"
5. Generate and provide speech-based sub-section overview: "including Chevron Station, Valero, Chevon, and Shell Station.
6. for <item 1> in the list, perform the following steps *a* through *g*:
   a. provide item-specific paraphrase in text: "First: 0.7 miles south."
   b. show visual snippet for Chevron Station.
   c. set context marker to this item *(i.e.,* <item 1>).
   d. provide speech-based, item-specific paraphrase: "The closest is Chevon Station on North De Anza Boulevard, point 7 miles north."
   e. provide a speech-based prompt offering options regarding actions applicable to the first item of the page (i.e., the <item 1>): "Would you like to call it, get directions, or go to the next one?"
   f. Beep beep
   g. User says "next".
6. move onto the next item, <item 2>
   a. providing a item-specific paraphrase of the item in text: "Second: 0.7 miles south"
   b. show a visual snippet for Valero.
   c. set the context marker to this item *(i.e.,* <item 2>)
   d. provide a speech-based item-specific paraphrase of the item: "The second is Valero on North de Anza Boulevard, point 7 miles south."
   e. do not provide prompt regarding actions applicable to the second item.
   f. Beep beep
   g. User says "next".
6. <item 3>
   a. provide an item-specific paraphrase of the item in text form: "Third: 0.7 miles south."
   b. show a visual snippet for Chevon.
   **c.** set the context marker to this item.
   d. provide a speech-based item specific paraphrase for this item: "The third is Chevron on South de Anza Boulevard, point 7 miles south."
   e. do not provide prompt regarding actions applicable to the third item.
   f. Beep beep
   g. User says "next"
6. <item 4>
   a. provide items specific paraphrase of the item in text: "Fourth: 0.7 miles south."
   b. show a visual snippet for the Shell Station.
   c. set the context marker to this item.
   d. provide a speech-based item-specific paraphrase of the item: ⁻The fourth is Shell Station on South de Anza Boulevard, 1 mile south."
   e. do not provide prompt regarding actions applicable to the second item.
   f. Beep beep
   g. User says "next".
5. <page 2> start a new page of items
   d. provide a speech-based section-overview for the second page: "The next 4 are Cupertino's Smog Pro & Auto Service, Shell Station, Valero, and Rotten Robbie."
6. <item 5>
   a. provide an item-specific paraphrase in text for this item: "Fifth: 1 mile south."
   b. show a visual snippet for Cupertino's Smog Pro & Auto Service.
   c. set the context marker to this item.
   d. provide a speech-based item-specific paraphrase for this item: "The fifth is Cupertino's Smog Pro & Auto Service on North de Anza Boulevard, 1 mile east."
   e. provide a speech-based prompt offering options regarding actions applicable to the first item of the page (i.e., the <item 5>): "Would you like to call it, get directions, or go to the next one?"
   f. Beep beep
   g. User says "next".
<item 6>
   a. provide an item-specific paraphrase of the item in text: "Sixth: 2 miles west."
   b. show a visual snippet for Shell Station.
   c. set the context marker to this item.
   d. provide a speech-based, item-specific paraphrase for the item: "The sixth is Shell Station on Stevens Creek Boulevard, 1 mile west."
   e. do not provide prompt regarding actions applicable to the second item.
   f. Beep beep
   g. User says "directions".
   h. determine the target item based on the position of the context marker, and identifies the current item as the target item. Invoke the directions retrieval for the current item.

The above examples for list-reading in the local search domain are merely exemplary. The techniques disclosed for the local search domain are also applicable to other domains and domain-specific item types. For example, the list reading algorithms and presentation techniques can also be applicable to reading a list of business listings outside of a local search domain.

### Reading Reminders

Reading reminders in hands-free mode has two important parts: selecting what reminders to read and deciding how to read each reminder. For hands-free mode, the list of reminder to be presented is filtered down to a group of reminders that is a meaningful subset of all available reminders associated with the user. In addition, the group of reminders to be presented to the user in the hands-free context can further be divided into meaningful subgroups based on various reminder properties, such as reminder trigger time, trigger location, and other actions or events that the user or the user's device may perform. For example, if someone says "what are my reminders" it may not be very helpful for the assistant to reply "at least 25..." since the user is unlikely to have time or be interested in hearing about all 25 reminders in one sitting. Instead, the reminders to be presented to the user should be a rather small and actionable set of reminders that are relevant now. Such as "You have 3 recent reminders." "You have 4 reminders for today." "You have 5 reminders for today, 1 for when you are traveling and 4 for after you get home."

There are a few kinds of structured data that can be used to help determine whether a reminder is relevant now, including current and trigger date/time, trigger location, and trigger actions. Selection criteria for choose which reminders are relevant now can be based on one or more of these structured data. For trigger date/time, there is an alert time and due date for each reminder.

A selection criterion can be based on a match between the alert time and due date of the reminder and the current date and time, or other user-specified date and time. For example, the user can ask "what are my reminders" and a small set *(e.g.,* 5) of recent reminders and/or upcoming reminders with trigger time *(e.g.,* alert time and/or due time/date) close to the current time is selected for hands-free listing reading to the user. For location triggers, a reminder can be triggered when the user is leaving a current location and/or arriving at another location.

A selection criterion can be based on the current location and/or a user specified location. For example, the user can say "what are my reminders" when he or she is leaving a current location, and the assistant can select a small set of reminders that have triggers associated with the user leaving the current location. For another example, the user can say "what are my reminders" when the user steps into a store, and reminders associated with that store can be selected for presentation. For action triggers, a reminder can be triggered when the assistant detects that the user is performing an action (e.g., driving, or walking). Alternatively or in addition, the type of actions to be performed by the user as specified in the reminders can also be used to select relevant reminders for presentation.

A selection criterion can be based on the user's current action or the action triggers associated with the reminders. A selection criterion can also be based on the user's current action and the actions that are to be performed by the user according to the reminders. For example, when the user asks "what are my reminders" when he is driving, and reminders associated with the driving action triggers (e.g., reminders for making calls in the car, reminders for going to the gas station, reminders to do oil change, etc.) can be selected for presentation. For another example, when the user asks "what are my reminders" when he is walking, reminders associate with actions that are suitable to be performed while the user is walking, such as reminders for making calls and a reminder for checking the current pollen count, a reminder to put on sunscreens, etc., can be selected for presentation.

While the user is traveling in a moving vehicle *(e.g.,* driving or sitting in a car), the user can make calls, and preview what reminders will be triggered next or soon. Reminders for calls can form a meaningful group since the calls can be made in series in one sitting *(e.g.,* while the user is traveling in a car).

The following description provides some more detailed scenarios for hands-free reminder reading. If someone says "what are my reminders" in a hands-free situation, the assistant provides a report or overview on a short list of reminders associated with one or more of the following categories of reminders: (1) reminders that were recently triggered, (2) reminders to be triggered when the user is leaving some place (make the assumption that the some place is where they just were), (3) reminders to be triggered or due today, in soonest first, (4)reminders to be triggered when you arrive somewhere.

For reminders, the order by which the individual reminders are presented sometimes is not as important as the overview. The overview puts the list of reminders in a context in which the arbitrary title strings of the reminders can make some sense to the user. For example, when the user asks for reminders. The assistant can provide an overview saying "You have N reminders that have recently come up, M for when you are traveling, and J reminders scheduled for today." After providing the overview of the list of reminders, the assistant can proceed to go through each sub-group of reminder in the list. For example, the following is the steps that the assistant can perform to present the list to the user:

The assistant provides a speech-based sub-section overview: "The reminders that were recently triggered are:", followed by a pause. Then, the assistant provides a speech-based item-specific paraphrase of the content of the reminder *(e.g.,* a title of the reminder, or a short description of the reminder) saying, "contact that guy about something." In between reminders within the sub-group *(e.g.,* the sub-group of recently triggered reminders), a pause can be inserted, so that the user can tell the reminders apart, and can interrupt the assistant with a command during the pause. In some embodiments, the assistant enters a listening mode during the pause, if two-way communication is not constantly maintained. After the paraphrase of the first reminder is provided, the assistant proceeds with the second reminder in the sub-group, and so on: "<pause>get a cable for intergalactic communication from the company store." In some embodiments, the ordinal position of the reminders are provided before the paraphrase is read. However, since the order of the reminders are not as important as it is for other types of data items, the ordinal positions of the reminders are sometimes deliberately omitted to make the communication more succinct.

The assistant continues with the second sub-group of reminders by providing a sub-group overview first: "Reminders for when you are traveling are:" Then, the assistant goes through the reminders in the second sub-group one by one: "<pause>call Justin Beaver" "<pause>check out the sunset." After the second sub-group of reminders are presented, the assistant proceeds to read a sub-group overview of the third sub-group of reminders: "A reminder coming up today is:" Then, the assistant proceeds to provide the item-specific paraphrase of each reminder in the third sub-group: "<pause>finish that report." After the third sub-group of reminders are presented, the assistant provides the sub-group overview of the fourth sub-group by saying "Reminders for when you get home are:" Then, the assistant proceeds to read the item-specific paraphrases for the reminders in the fourth sub-group: "<pause>pull a bottle from the cellar", "<pause>light a fire." The above examples are merely illustrative, and demonstrate the ideas of how a list of relevant reminders can be divided into meaningful subgroups or categories based on various properties *(e.g.,* trigger time relative to current time, recently triggered, upcoming, triggered based on action, triggered based on location, etc.) The above examples also illustrate the key phrases through which the reminders are presented. For example, a list-level overview including a description of the sub-groups and a count of reminders within each sub-group can be provided. In addition, when there are more than one sub-groups, a sub-group overview is provided before the reminders in the sub-groups are presented. The sub-group overview states the name or title of the sub-group based on a characteristic or property by which this sub-group is created, and by which reminders within the sub-group are selected.

In some embodiments, the user will specify which particular group of reminders the user is interested in. In other words, the selection criteria are provided by the user input. For example, the user may explicitly request "show me the calls I need to make" or "what do I have to do when I get home" "what do I have to buy at this store" and so on. For each of these requests, the digital assistant extract the selection criteria from the user input based on natural language processing, and identify the relevant reminders for presentation based on the user-specified selection criteria and the pertinent properties *(e.g.,* trigger time/date, trigger actions, actions to be performed, trigger locations, etc.) associated the reminders.

The following are example of reading for specific groups of reminders:
For reminders for calls: the user can ask "what calls do **I** need to make," and the assistant can say "You have reminders to make 3 calls: Amy Joe, Bernard Julia, and Chetan Cheyer." In this response, the assistant provides an overview followed by the item-specific paraphrases of the reminders. The overview specified the selection criterion *(e.g.,* action to be performed by the user is "making calls") used to select the relevant reminders, and a count of the relevant reminders *(e.g.,* 3). The domain-specific, item specific paraphrase for reminders for calls includes just the name of the person to be called *(e.g.,* Amy Joe, Bernard Julia, and Chetan Cheyer), and no extraneous information is provided in the paraphrases since the names are sufficient at this point for the user to make a decision about whether to proceed with an action on the reminder *(i.e.,* actually making one of the calls).

For reminders for things to do at a specific location: the user asks "what do have to do when I get home," and the assistant can say "You have 2 reminders for when you get home: <pause>pull a bottle from the cellar, and <pause>light a fire." In this response, the assistant provides an overview followed by the item-specific paraphrases of the reminders. The overview specified the selection criterion *(e.g.,* trigger location is "home") used to select the relevant reminders, and a count of the relevant reminders *(e.g.,* 2). The domain-specific, item specific paraphrase for the reminders includes just the action to be performed *(e.g.,* action specified in the reminders), and no extraneous information is provided in the paraphrases since the user just wants a preview of what's coming up.

The above examples are merely illustrative for hands-free list reading for the reminders domain. Additional variations are possible depending on the specific types and categories of reminders that are relevant and should be presented to the user in the hands-free context. Visual snippets of the reminders are optionally provided on a screen accompanying the speech-based outputs provided by the assistant. Commands such as repeat, next, etc. can still be used to navigate among the different sub-groups of reminders or repeat information regarding one or more reminders.

### Reading Calendar events

The following description relates to reading calendar events in a hands-free mode. The two main considerations for hands-free calendar event reading are still selecting which calendar entries to read, and deciding how to read each calendar entry. Similar to reading reminders and other domain-specific data item types, a small subset of all calendar entries associated with the user are selected, and grouped into meaningful sub-groups of 3-5 entries each. The division of sub-groups can be based on various selection criteria such as event date/time, reminder date/time, type of events, location of events, participants, etc. For example, if user asks says "what is on my calendar," it would not be very helpful for the assistant to say "you have at least 50 entries in your calendar. Instead, the assistant can present information about the event entries for the current day or half day, and then proceeds afterwards in accordance with the user's subsequent commands. For example, the user can ask about additional events for the next day by simply saying "next page."

In some embodiments, the calendar entries are divided into sub-groups by date. Each sub-group only includes events on a single day. If the user asks for calendar entries of a date range spanning multiple days, the calendar entries associated with each single day within that range is presented at a time. For example, if the user asks "what's on my calendar next week," the assistant can reply with a list-level overview "You have 3 events on Monday, 2 events on Tuesday, and no events on other days." The assistant can then proceed to present the events on each of Monday and Tuesday. For the events on each day, the assistant can provide a sub-group overview of the day first. The overview can specify the times of the events on that day. In some embodiments, if an event is a whole-day event, the assistant provides that information in the sub-group overview as well. For example, the following is an example scenario illustrating the hands-free reading of calendar entries:

The user asks "what's on my calendar today." The assistant replies in speech: "You have events on your calendar at 11 am, 12:30, 3:30, and 7:00pm. You also have a day-long event." In this example, the user only requested events of a single day, and the list-level overview is the overview of the day's events.

In presenting a list of calendar events, event time is a most pertinent piece of information to the user in most cases. Streamlining the presentation of a list of times can improve use experience and make the communication of information more efficient. In some embodiments, if the event times of the calendar entries span both the morning and the afternoon, only the event times for the first and last calendar entries are provided with an AM/PM indicator in the speech-based overview. In addition, if all events are in the morning, the AM indicator is provided for the event times of the first and the last calendar entries. If all events are in the afternoon, the PM indicator is provided for the last event of the day, but no AM/PM indicator is provided for other event times. Noon and midnight are exempt from AM/PM rule above. For some more explicit example, the following are what can be provided in the calendar entry list overview: "11 am, 12:30, 3:30, and 7 pm", "8:30 am, 9, and 10 am", "5, 6, and 7:30 pm", "Noon, 2, 4, 5, 5:30, and 7 pm", "5, 6, and midnight."

For all-day events, the assistant provides a count of all-day events. For example, when asked about the events next week, the digital assistant can say ⁻You have (N) all-day event(s)."

When reading the list of relevant calendar entries, the digital assistant first reads all of the timed events and then the all-day events. If there are no timed events, then the assistant goes directly to reading the list of all-day events after the overview. Then, for each event on the list, the assistants provides a speech-based item-specific paraphrase according to the following template: <time> <subject> <location>, where the location can be omitted if no location is specified in the calendar entry. For example, the item-specific paraphrases of the calendar entries include a <time> component in the form of: "at 11 AM", "at noon", "at 1:30 PM", "at 7:15 PM", "at noon", etc. For all day event, no such paraphrase is needed. For the <subject> component, the assistant optionally specifies the count and/or identities of the participants in addition to the title of the event. For example, if there are more than 3 participants for an event, the <subject> component can include "<event title> with N people about". If there are 1-3 participants, the <subject> component can include "<event title> with person1, person2, and person3" If there are no participants for an event other than the user, the <subject> component can include just the <event title>. If a location is specified for a calendar event, <location> component can be inserted into the paraphrase of the calendar event. This needs some filtering.

The following illustrate a hands-free list-reading scenario for calendar events. After the user asks "what's on my calendar." The assistant replies with an overview: "You have events on your calendar at 11 AM, noon, 3:30, and 7 PM. You also have 2 day-long events." After the overview, the assistant continues with the list of calendar entries: "At 11 AM: meeting", "At 11:30 AM: meeting with Harry Saddler", "At noon: design review with 9 people in Room (8), IL 2", "At 3:30 PM: meeting with Susan", "At 7 PM: dinner with Amy Cheyer and Lynn Julia." In some embodiments, the assistant can indicate the end of the list by providing a wrap-up output, such as "That was all."

The above examples are merely illustrative for hands-free list reading for the calendars domain. Additional variations are possible depending on the specific types and categories of calendar entries *(e.g.,* meetings, appointments, parties, meals, events that need preparation/travel/etc.) that are relevant and should be presented to the user in the hands-free context. Visual snippets of the calendar entries are optionally provided on a screen accompanying the speech-based outputs provided by the assistant.

### List Reading for E-mails

Similar to other list of data items in other domains, hands-free reading of a list of e-mails also concerns with which e-mails to include in the list, and how to read each e-mail to the user. E-mail is different from other item types in that emails typically include an unbounded portion *(i.e.,* the message body) that is of unbounded size *(e.g.,* too large to read in its entirety), and may include content that cannot be readily converted to speech *(e.g.,* objects, tables, pictures, etc.). Therefore, when reading e-mails, the unbounded portions of e-mails are divided into smaller chunks, and only one chunk is provided at a time, and the rest is omitted from the speech output unless the user specifically request to hear them *(e.g.,* by using a command such as "More"). In addition, pertinent properties for selecting e-mails for presentation, and dividing emails into sub-groups include sender identity, date, subject, read/unread status, urgency flag, etc. Objects *(e.g.,* tables, pictures) and attachments in the email can be identified by the assistant, but may be omitted from hands-free reading. In some embodiments, the objects and attachment may be presented on a display. In some embodiments, if the user is also in an eyes-free mode, the display of these objects and attachment may be prevented by the assistant.

The following is an example scenario illustrating the hands-free list reading for email. The example illustrates the use of a prompt after the overview and before reading the list of emails. When reading the list of emails, a summary or paraphrase of the content of each email is provided one by one. The user can navigate through the list by using the command "Next", "First", "Previous", Last" etc. To hear more of the message body of the email, the user can say "More." The user can also say command related to actions applicable to an email. The context marker advances through the list of emails as the assistant reads the emails one by one. The context marker also hops from one email to another if the user's command is directed to anemail out of sequential order.

For example, the user can ask: "Do I have any new mail from Harry Saddler?"

Based on the selection criteria specified in the user input *(e.g*., sender = Harry Saddler, and read/unread status = NEW", the assistant identifies the relevant e-mails, and provides a list overview and a prompt for reading the list of emails: "You have 5 unread messages from Harry Saddler. Would you like to hear them read?" If the user answers in the affirmative, "Yes." The assistant proceeds to read a domain-specific, item-specific paraphrase of the list of emails one by one. For example, the assistant can say, "First message, From Harry Saddler, 3 days ago. With the subject: Short meeting today 3pm." The paraphrase is generated based on the content of the e-mail, and include key information such as an ordinal position of the message in the list, a sender identify associated with the message, a time associated with the message, and the subject line of the message. Here, the exact arrival time is not used. Instead a paraphrase of the arrival time is used, since the exact arrival time is probably not pertinent in the hands-free context. The body of the message is not read or provided in the paraphrase. Then, after a brief pause, the assistant can begin reading a first chuck of the unbounded content of the message: "Harry wrote: Next meeting to scope a project X - is Monday Oct 17, 2pm. I can't find a room, so let's meet in the IL2/4th elevator lobby, and go from there. Harry" In this case, the overall length of the unbounded content of the message is short enough to fit within a predetermined length limit for a chuck (e.g., 3 lines of text), therefore, the entire content body of the message is read in one chunk.

After reading the first message, a brief pause is provided, so that the user can enter a command for an action *(e.g.,* reply, delete, repeat, etc.) applicable to the message just read, or to move on to the next message. Suppose that the use says "next." Then, the assistant proceeds to the next message in the list, and the context marker advances to the next message. The assistant provides a speech output saying "Next message, From Harry Saddler, today at 8:23am, with the subject: List reading use cases." After a pause for user interruption, the assistant continues to read the unbounded content of the message "Harry wrote: By popular demand, we're using spreadsheets to develop, refine and track use cases. Each will be attached to the corresponding TLF radar; when updated, a new version will be added. I'll be the point person for developing the use cases with the relevant domain teams." After reading the first chunk of the message body, the assistant pauses, and prompts the user "Continue reading this message?" If the user says "Yes," the assistant proceeds to read the next chunk of the message body: "Harry wrote: Calendar use cases are partly worked out, still needs some flesh on the bones, and of course prioritization. LINK. TLF: Calendar entries...." Before the assistant finishes reading this chunk of the message body, the user interrupts the reading with a command "Reply." In response, the assistant stops the reading, and identifies the current message as the target message for the action requested by the user's input. The assistant generates a speech-based response "OK, I can help you reply to Harry Saddler. What would you like to say?" The user speaks the text of the reply email "Great idea period these will help a lot." The assistant mirrors the message back to the user to confirm accuracy, "Your message reads: Great idea. These will help a lot." The assistant then asks "Ready to send it?" Once the user confirms *(e.g.,* by saying "yes"), the assistant acknowledges the user's confirmation, and says "OK, I'll send it. Shall I continue reading your email?" After the user replies "Yes." The assistant goes to the next message in the list and reads it "Next message, From Harry Saddler, yesterday at 2:34pm with the subject: spreadsheet <pause> The email message contains only an attachment."

Note that in the reading of the unbounded content for both this email message and the previous email message, the assistant detected some object that is not easily read out lout. For example, in the previous email, the message body contains a hyperlink. The assistant does not convert the text of the hyperlink to the speech. Instead, the assistant simply identifies the existence of the link in the message body by using a keyword "LINK.TLF:." so that the user is informed of the link, but the speech output of the message body is not distorted into an unrecognizable form. In the current message, an attachment is identified. The assistant does not attempt to read the attachment. Instead, the assistant simply provide a speech output indicating the presence of the attachment in the email.

Continue with above email reading scenario. After reading the unbounded content of the third message, the digital assistant continues to read the next message, "Next message, From Harry Saddler, 30 minutes ago. In reply to a message from you on the subject: no way to shut up TTS." After a pause, the assistant continues with the first chunk of the unbounded content "Harry wrote: How about this simple solution: silence the assistant. While assistant is speaking, shake it; it stops talking. silence the assistant and make a new request: while assistant is speaking, shake again... <pause>" After reading the first chuck, the assistant again asks "Continue reading this message?" The user says "Repeat." In response, the assistant checks the position of the context marker, which is now residing on the first chunk of the unbounded content of the fourth message in the list. The assistant then reads the first chunk of the message body for the fourth message again, "How about this simple solution: silence the assistant. while assistant is speaking, shake it; it stops talking. silence the assistant and make a new request: while assistant is speaking, shake again..."

After a brief pause, the assistant asks "Continue?" If the user says "Yes", the assistant continues to read the second chunk of the current message, and the context marker moves to the second chunk as well. For example, the assistant reads the second chunk "this is simply 'silence the assistant' + 'start listening' to get the assistant without making a new request. Home button, then mic button when it appears. This is really forced endpoint with no input. Harry."

After a brief pause, the assistant asks "Continue?" and the user says "No."

In response to the user's command to stop reading the message body of the current message, the assistant proceeds to the read the next message: "Next message, From Harry Saddler, 10 minutes ago, In reply to a message from Siamak Hodjat on the subject: the simple rule for staying in transactions (modal prompting)." After a brief pause, the assistant asks "Continue reading this message?" The user says "Next." In response to the use's input, the assistant replies "That was the last of 5 email messages."

Note in the above example, only the ordinal position of the first message was provided in the item-specific paraphrases of the messages, the rest of the messages are simply referred to as the "Next message" in their respective paraphrases. Omission of the ordinal position in the paraphrases is possible because there are only a few messages (e.g., 5 or fewer) being read. And the user does not need to hear the ordinal positions out loud in order to mentally register the ordinal positions of the messages. User commands that make references to the messages by their respective ordinal positions in the list would still work in this context. For example, a speech input "Repeat the second message" after the reading of the fourth message would still take the user back to the second message.

The above e-mail list reading examples are merely illustrative. Other commands for the assistant can be implemented to initiate other actions applicable to email messages. The techniques and options described with respect to the e-mail reading scenarios are applicable to other types of data items as well.

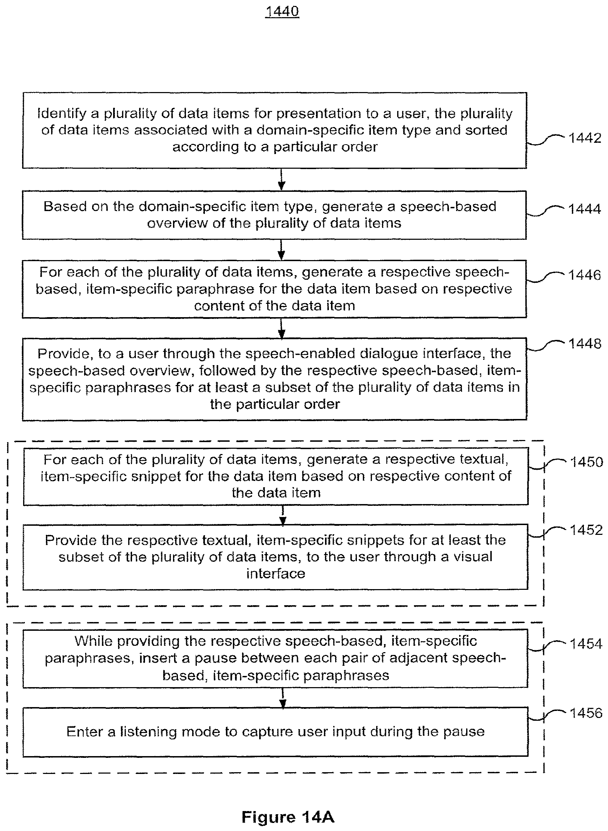

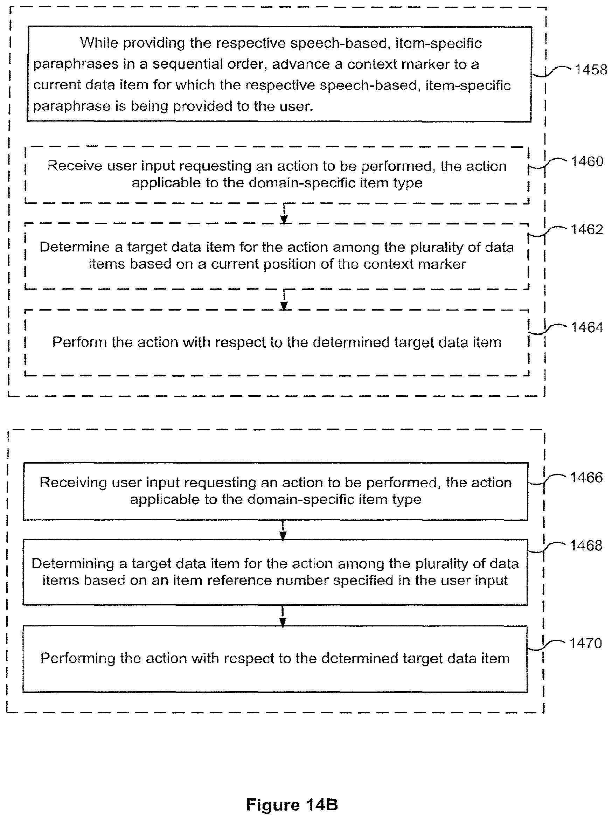

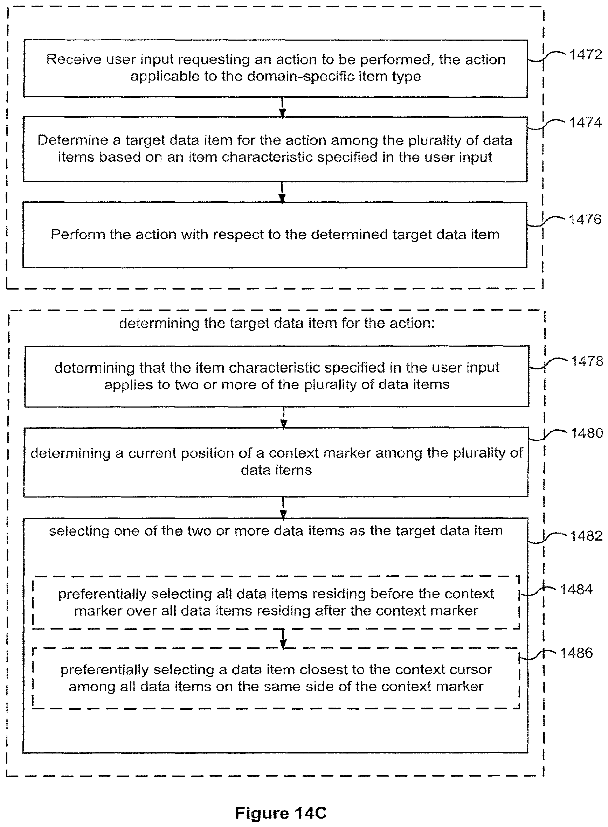

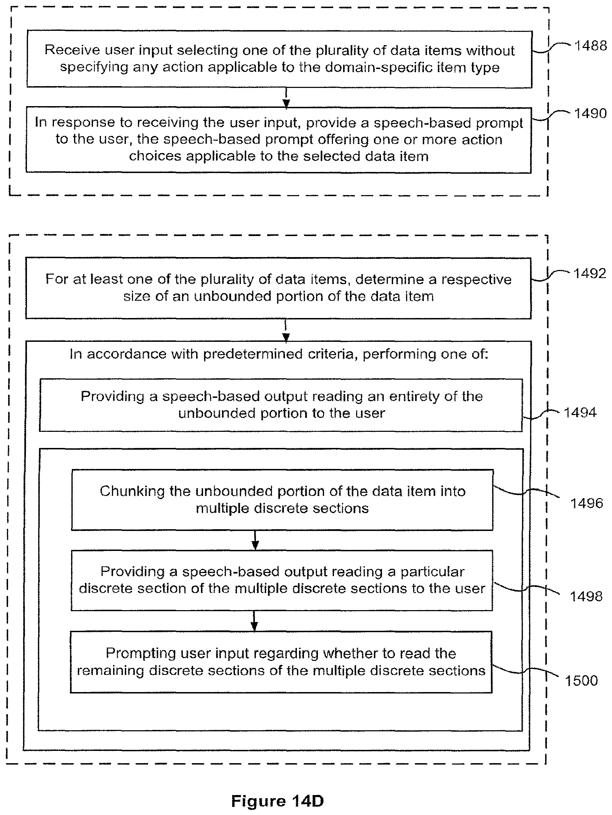

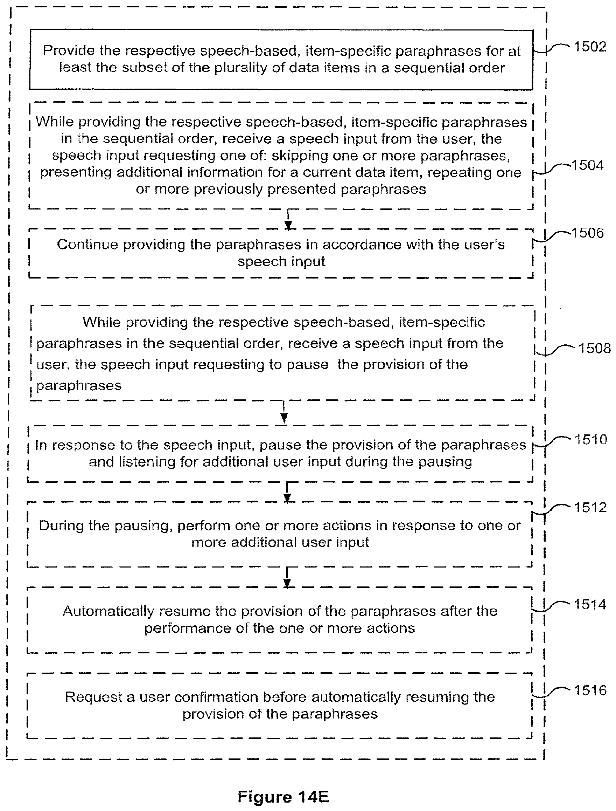

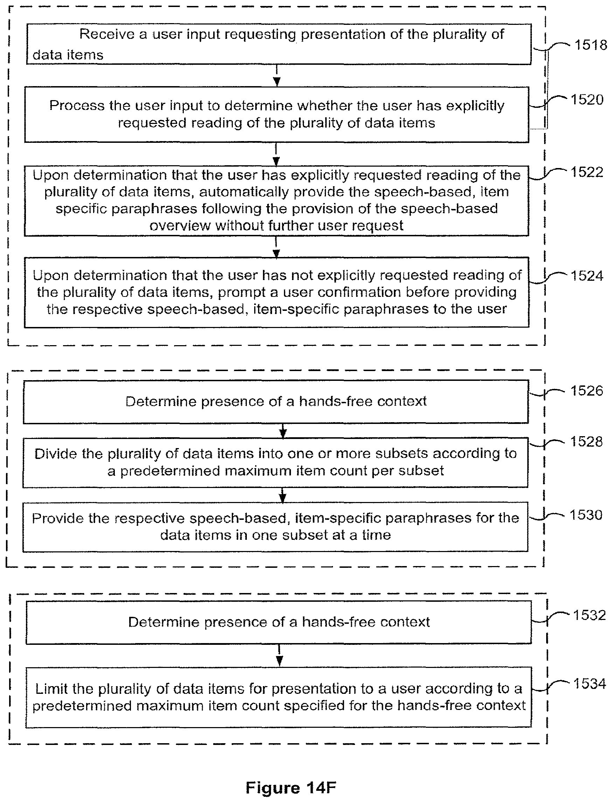

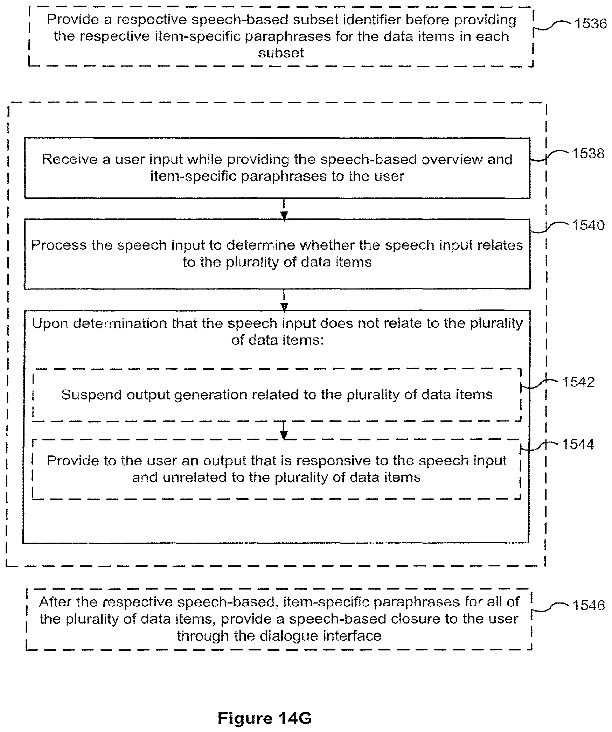

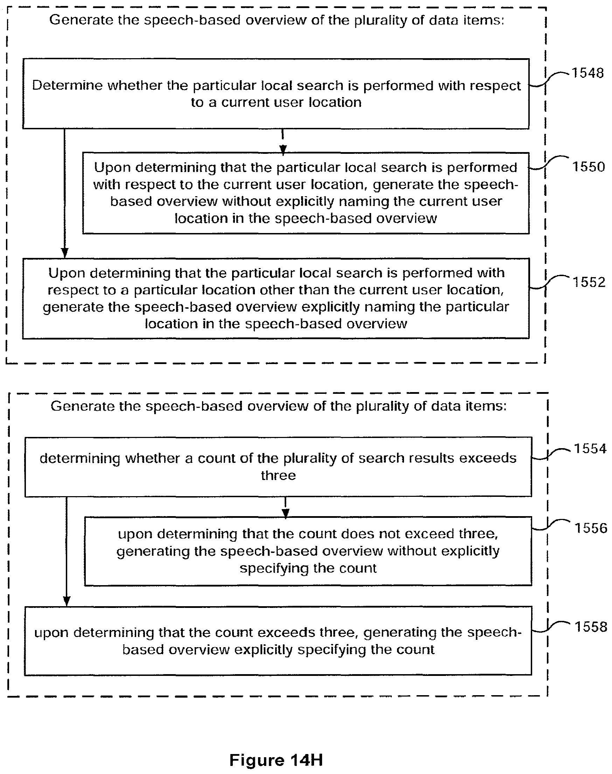

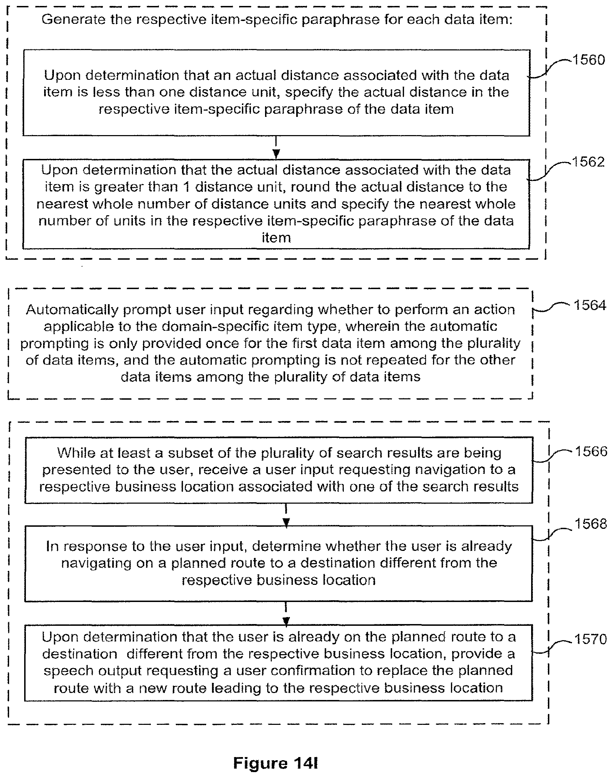

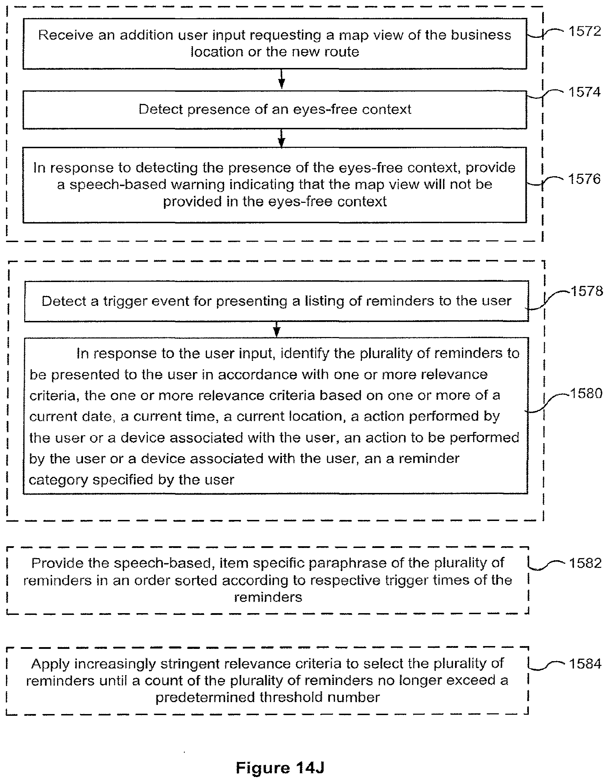

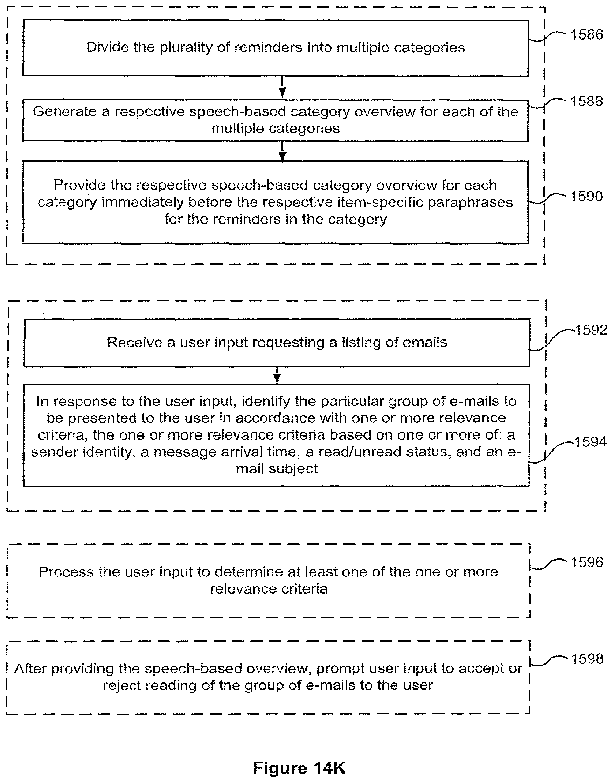

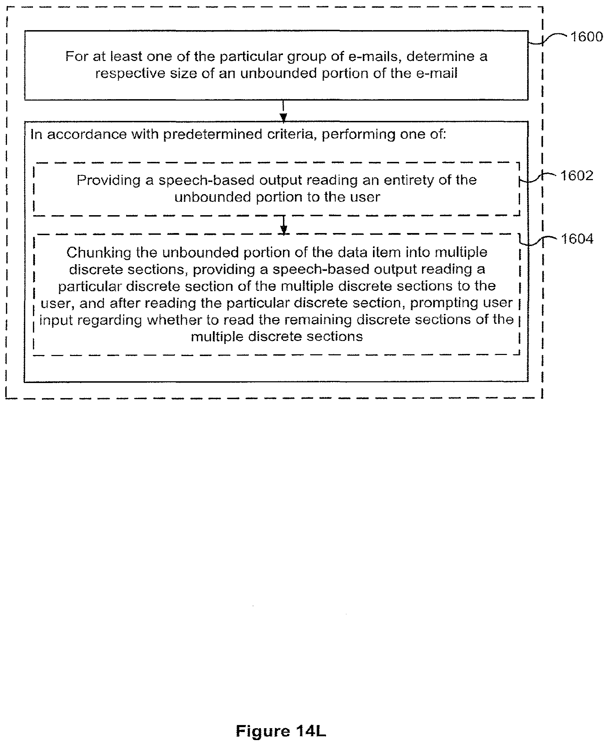

Figs. 14A-14L is a flow diagram of a method for providing hands-free listing reading by a digital assistant (also called a virtual assistant). In a process 1440, the digital assistant identifies a plurality of data items for presentation to a user, where the plurality of data items are each associated with a domain-specific item type (1442). Examples of the data items include: calendar entries associated with a user, emails from a particular sender, reminders for a particular day, and search results obtained from a particular local search request. The domain-specific item types for the above example data items are calendar entries, emails, reminders, and local search results. Each domain-specific data type has a relatively stable data structure, such that content of particular data fields can be predictably extracted and restructured into a paraphrase of the content. In some embodiments, the plurality of data items are also sorted according to a particular order. For example, local search results are often sorted by relevance and distance. Calendar entries are often sorted by event time. Items of some item types do not need to be sorted. For example, reminders may be unsorted."

Based on the domain-specific item type, the assistant generates an speech-based overview of the plurality of data items (1444). The overview provides the user with a general idea of what kinds of items are in the list, and how many items are in the list. For each of the plurality of data items, the assistant further generates a respective speech-based, item-specific paraphrase for the data item based on respective content of the data item (1446). The format of the item-specific paraphrase often depends on the domain-specific item type (e.g., whether the items is a calendar entry or a reminder) and the actual content of the data item (e.g., event time and subject of a particular calendar entry). Then, the assistant provides the speech-based overview to a user through the speech-enabled dialogue interface (1448). The speech-based overview is then followed by the respective speech-based, item-specific paraphrases for at least a subset of the plurality of data items. In some embodiments, if the items in the list are sorted in a particular order, the paraphrases of the items are provided in the particular order. In some embodiments, if there are more than a threshold number (e.g., maximum number per "page"=5 items) of items in the list, only a subset of the items are presented at a time. The user can request to see/hear more of the items by specifically requesting such.

In some embodiments, for each of the plurality of data items, the digital assistant generates a respective textual, item-specific snippet for the data item based on respective content of the data item (1450). For example, the snippet can include more details of a corresponding local search result, or the content body of an email, etc. The snippet is for presentation on a display, and accompanies the speech-based reading of the list. In some embodiments, the digital assistant provides the respective textual, item-specific snippets for at least the subset of the plurality of data items, to the user through a visual interface (1452). In some embodiments, the context marker is provided on the visual interface as well. In some embodiments, all of the plurality of data items are presented on the visual interface at the same time, while the reading of the items proceed "page" by "page", *i.e*., a subset at a me.

In some embodiments, the provision of the speech-based, item-specific paraphrases is accompanied by provision of the respective textual, item specific snippets.

In some embodiments, while providing the respective speech-based, item-specific paraphrases, the digital assistant inserts a pause between each pair of adjacent speech-based, item-specific paraphrases (1454). The digital assistant enters a listening mode to capture user input during the pause (1456).

In some embodiments, while providing the respective speech-based, item-specific paraphrases in a sequential order, the digital assistant advances a context marker to a current data item for which the respective speech-based, item-specific paraphrase is being provided to the user (1458).

In some embodiments, the digital assistant receives user input requesting an action to be performed, the action applicable to the domain-specific item type (1460). The digital assistant determines a target data item for the action among the plurality of data items based on a current position of the context marker (1462). For example, the user may request an action without explicitly specifying a target item for apply the action. The assistant presumes the user is referring to the current data item as the target item. Then, the digital assistant performs the action with respect to the determined target data item (1464).

In some embodiments, the digital assistant receives user input requesting an action to be performed, the action applicable to the domain-specific item type (1466). The digital assistant determines a target data item for the action among the plurality of data items based on an item reference number specified in the user input (1468). For example, the user may say "the third" item in the user input, and the assistant can determine which item the "third" item is in the list. Once the target item is determined, the digital assistant performs the action with respect to the determined target data item (1470).

In some embodiments, the digital assistant receives user input requesting an action to be performed, the action applicable to the domain-specific item type (1472). The digital assistant determines a target data item for the action among the plurality of data items based on an item characteristic specified in the user input (1474). For example, the user can say "Reply to the message from Mark," and the digital assistant can determine which message the user is referring to based on the sender identity "Mark" among the list of messages. Once the target item is determined, the digital assistant performs the action with respect to the determined target data item (1476).

In some embodiments, when determining the target data item for the action, the digital assistant: determines that the item characteristic specified in the user input applies to two or more of the plurality of data items (1478), determines a current position of a context marker among the plurality of data items (1480), and selecting one of the two or more data items as the target data item (1482). In some embodiments, the selecting of the data item includes: preferentially selecting all data items residing before the context marker over all data items residing after the context marker (1484); and preferentially selecting a data item closest to the context cursor among all data items on the same side of the context marker (1486). For example, when the user says reply to the message from Mark, and if all messages from Mark are located after the current context marker, then select the closet one to the context marker as the target message. If one message from Mark is before the context marker, and the rest are after the context Marker, then the one before the context marker is selected as the target message. If all messages from Mark are located before the context marker, then the one closest to the context marker is selected as the target message.

In some embodiments, the digital assistant receives user input selecting one of the plurality of data items without specifying any action applicable to the domain-specific item type (1488). In response to receiving the user input, the digital assistant provides a speech-based prompt to the user, the speech-based prompt offering one or more action choices applicable to the selected data item (1490). For example, if the user says "the first gas station." The assistant can offer a prompt saying "would you like to call or get directions?"

In some embodiments, for at least one of the plurality of data items, the digital assistant determines a respective size of an unbounded portion of the data item (1492). Then, in accordance with predetermined criteria, the digital assistant performs one of: (1) providing a speech-based output reading an entirety of the unbounded portion to the user (1494); and (2) chunking the unbounded portion of the data item into multiple discrete sections (1496), providing a speech-based output reading a particular discrete section of the multiple discrete sections to the user (1498), and prompting user input regarding whether to read the remaining discrete sections of the multiple discrete sections (1500). In some embodiments, the speech-based output comprises a verbal pagination indicator uniquely identifying the particular discrete section among the multiple discrete sections.

In some embodiments, the digital assistant provides the respective speech-based, item-specific paraphrases for at least the subset of the plurality of data items in a sequential order (1502). In some embodiments, while providing the respective speech-based, item-specific paraphrases in the sequential order, the digital assistant receiving a speech input from the user, the speech input requesting one of: skipping one or more paraphrases, presenting additional information for a current data item, repeating one or more previously presented paraphrases (1504). In response to the speech input, the digital assistant continues providing the paraphrases in accordance with the user's speech input (1506). In some embodiments, while providing the respective speech-based, item-specific paraphrases in the sequential order, the digital assistant receives a speech input from the user, the speech input requesting to pause the provision of the paraphrases (1508). In response to the speech input, the digital assistant pauses the provision of the paraphrases and listening for additional user input during the pausing (1510). During the pausing, the digital assistant performs one or more actions in response to one or more additional user input (1512). After performing the one or more actions, the digital assistant automatically resuming the provision of the paraphrases after the performance of the one or more actions (1514). For example, while reading one of a list of emails, the user can interrupt the reading, and ask the assistant to reply to a message. After the message is completed and sent, the assistant resumes reading of the remaining messages in the list. In some embodiments, the digital assistant requests a user confirmation before automatically resuming the provision of the paraphrases (1516).

In some embodiments, the speech-based overview specifies a count of the plurality of data items.

In some embodiments, the digital assistant receives a user input requesting presentation of the plurality of data items (1518). The digital assistant processes the user input to determine whether the user has explicitly requested reading of the plurality of data items (1520). Upon determination that the user has explicitly requested reading of the plurality of data items, the digital assistant automatically provides the speech-based, item specific paraphrases following the provision of the speech-based overview without further user request (1522). Upon determination that the user has not explicitly requested reading of the plurality of data items, the digital assistant prompts a user confirmation before providing the respective speech-based, item-specific paraphrases to the user (1524).

In some embodiments, the digital assistant determines presence of a hands-free context (1526). The digital assistant divides the plurality of data items into one or more subsets according to a predetermined maximum item count per subset (1528). Then, the digital assistant provides the respective speech-based, item-specific paraphrases for the data items in one subset at a time (1530).

In some embodiments, the digital assistant determines presence of a hands-free context (1532). The digital assistant limits the plurality of data items for presentation to a user according to a predetermined maximum item count specified for the hands-free context (1534). In some embodiments, the digital assistant provides a respective speech-based subset identifier before providing the respective item-specific paraphrases for the data items in each subset (1536). For example, the sub-set identifiers can be "the first five messages", "the next five messages", etc.

In some embodiments, the digital assistant receives a user input while providing the speech-based overview and item-specific paraphrases to the user (1538). The digital assistant processes the speech input to determine whether the speech input relates to the plurality of data items (1540). Upon determination that the speech input does not relate to the plurality of data items: the digital assistant suspends output generation related to the plurality of data items (1542), and provides to the user an output that is responsive to the speech input and unrelated to the plurality of data items (1544).

In some embodiments, after the respective speech-based, item-specific paraphrases for all of the plurality of data items, the digital assistant provides a speech-based closure to the user through the dialogue interface (1546).

In some embodiments, the domain-specific item type is local search results and the plurality of data items are a plurality of search results of a particular local search. In some embodiments, to generate the speech-based overview of the plurality of data items, the digital assistant determines whether the particular local search is performed with respect to a current user location (1548), upon determining that the particular local search is performed with respect to the current user location, the digital assistant generates the speech-based overview without explicitly naming the current user location in the speech-based overview (1550), and upon determining that the particular local search is performed with respect to a particular location other than the current user location, the digital assistant generates the speech-based overview explicitly naming the particular location in the speech-based overview (1552). In some embodiments, to generate the speech-based overview of the plurality of data items, the digital assistant determines whether a count of the plurality of search results exceeds three (1554), upon determining that the count does not exceed three, the assistant generates the speech-based overview without explicitly specifying the count (1556), and upon determining that the count exceeds three, the digital assistant generates the speech-based overview explicitly specifying the count (1558).

In some embodiments, the speech-based overview of the plurality of data items specifies a respective business name associated with each of the plurality of search results.

In some embodiments, the respective speech-based, item-specific paraphrase of each data item specifies a respective ordinal position of a search results among the plurality of search results, followed in sequence by a respective business name, a respective short address, a respective distance, and a respective bearing associated with the search result, and wherein the respective short address includes only a respective street name associated with the search result. In some embodiments, to generate the respective item-specific paraphrase for each data item, the digital assistant: (1) upon determination that an actual distance associated with the data item is less than one distance unit, specifies the actual distance in the respective item-specific paraphrase of the data item (1560); and (2) upon determination that the actual distance associated with the data item is greater than 1 distance unit, rounds the actual distance to the nearest whole number of distance units and specifies the nearest whole number of units in the respective item-specific paraphrase of the data item (1562).

In some embodiments, the respective item-specific paraphrase of a highest-ranked data item among the plurality of data items according to one of a rating, a distance, and a matching score associated with the data item includes a phrase indicating the ranking of the data item, while the respective item-specific paraphrases of other data items among the plurality of data items omits the ranking of said data items.

In some embodiments, the digital assistant automatically prompts user input regarding whether to perform an action applicable to the domain-specific item type, wherein the automatic prompting is only provided once for the first data item among the plurality of data items, and the automatic prompting is not repeated for the other data items among the plurality of data items (1564).

In some embodiments, while at least a subset of the plurality of search results are being presented to the user, the digital assistant receives a user input requesting navigation to a respective business location associated with one of the search results (1566). In response to the user input, the assistant determines whether the user is already navigating on a planned route to a destination different from the respective business location (1568). Upon determination that the user is already on the planned route to a destination different from the respective business location, the assistant provides a speech output requesting a user confirmation to replace the planned route with a new route leading to the respective business location (1570).

In some embodiments, the digital assistant receives an addition user input requesting a map view of the business location or the new route (1572). The assistant detects presence of an eyes-free context (1574). In response to detecting the presence of the eyes-free context, the digital assistant provides a speech-based warning indicating that the map view will not be provided in the eyes-free context (1576). In some embodiments, detecting the presence of the eyes-free context comprises detecting the user's presence in a moving vehicle.

In some embodiments, the domain-specific item type is reminders and the plurality of data items are a plurality of reminders for a particular time range. In some embodiments, the digital assistant detects a trigger event for presenting a listing of reminders to the user (1578). In response to the user input, the digital assistant identifies the plurality of reminders to be presented to the user in accordance with one or more relevance criteria, the one or more relevance criteria based on one or more of a current date, a current time, a current location, an action performed by the user or a device associated with the user, an action to be performed by the user or a device associated with the user, an a reminder category specified by the user (1580).

In some embodiments, the trigger event for presenting a listing of reminders comprises receipt of a user request to see reminders for the current day, and the plurality of reminders is identified based on the current date, and each of the plurality of reminders has a respective trigger time within the current date.

In some embodiments, the trigger event for presenting a listing of reminders comprises receipt of a user request to see recent reminders, and the plurality of reminders is identified based on the current time, and each of the plurality of reminders has been triggered within a predetermined time period before the current time.

In some embodiments, the trigger event for presenting a listing of reminders comprises receipt of a user request to see upcoming reminders, and the plurality of reminders is identified based on the current time, and each of the plurality of reminders has a respective trigger time within a predetermined time period after the current time.

In some embodiments, the trigger event for presenting a listing of reminders comprises receipt of a user request to see a particular category of reminders, and each of the plurality of reminders belongs to the particular category. In some embodiments, the trigger event for presenting a listing of reminder comprises detecting the user leaving a predetermined location. In some embodiments, the trigger event for presenting a listing of reminders comprises detecting the user arriving at a predetermined location.

In some embodiments, the trigger event based on location, action, time for presenting a list of reminders can also be used as selection criteria for determining which reminders should be included in the list of reminders to present to the user when the user requests to see reminders without specifying a selection criterion in his or she request. For example, as set forth in the use cases for hands-free list reading, the fact that the user is at a particular location (*e.g*.,), leaving or arriving at a particular location, and performing a particular action *(e.g.,* driving, walking) can be used as the context for deriving appropriate selection criteria for selecting data items *(e.g.,* reminders) to show to the user at the present time, when the user has simply asked "show me my reminders."

In some embodiments, the digital assistant provides the speech-based, item specific paraphrase of the plurality of reminders in an order sorted according to respective trigger times of the reminders (1582). In some embodiments, the reminders are not sorted.

In some embodiments, to identify the plurality of reminders, the digital assistant applies increasingly stringent relevance criteria to select the plurality of reminders until a count of the plurality of reminders no longer exceed a predetermined threshold number (1584).

In some embodiments, the digital assistant dividing the plurality of reminders into multiple categories (1586). The digital assistant generates a respective speech-based category overview for each of the multiple categories (1588). The digital assistant provides the respective speech-based category overview for each category immediately before the respective item-specific paraphrases for the reminders in the category (1590). In some embodiments, the multiple categories includes one or more of a category based on location, a category based on task, a category based on trigger time relative to current time, a category based on trigger time relative to a user-specified time.

In some embodiments, the domain-specific item type is calendar entries and the plurality of data items are a plurality of calendar entries for a particular time range. In some embodiments, the speech-based overview of the plurality of data items provides either or both timing and duration information associated with each of the plurality of calendar entries without providing additional details regarding the calendar entries. In some embodiments, the speech-based overview of the plurality of data items provides a count of all-day events among the plurality of calendar entries.

In some embodiments, the speech-based overview of the plurality of data items includes a listing of respective event times associated with the plurality of calendar entries, and wherein the speech-based overview only explicitly pronounces a respective AM/PM indicator associated with a particular event time under one of the following conditions: (1) the particular event time is the last one in the listing, (2) the particular event time is the first one in the listing and occurs in the morning.

In some embodiments, the speech-based, item-specific paraphrases of the plurality of data items is a paraphrase of a respective calendar event generated according to a "<time><subject><location, if available>" format.

In some embodiments, the paraphrase of the respective calendar event names one or more participants of the respective calendar event if a total count of the participants is below a predetermined number; and the paraphrase of the respective calendar event does not name participants of the respective calendar event if the total count of the participants is above the predetermined number.

In some embodiments, the paraphrase of the respective calendar event provides the total count of the participants if the total count is above the predetermined number.

In some embodiments, the domain-specific item type is e-mails and the plurality of data items are a particular group of e-mails. In some embodiments, the digital assistant receiving a user input requesting a listing of emails (1592). In response to the user input, the digital assistant identifies the particular group of e-mails to be presented to the user in accordance with one or more relevance criteria, the one or more relevance criteria based on one or more of: a sender identity, a message arrival time, a read/unread status, and an e-mail subject (1594). In some embodiments, the digital assistant processes the user input to determine at least one of the one or more relevance criteria (1596). In some embodiments, the speech-based overview of the plurality of data items paraphrases the one or more relevance criteria used to identify the particular group of e-mails, and provides a count of the particular group of e-mails. In some embodiments, after providing the speech-based overview, the digital assistant prompts user input to accept or reject reading of the group of e-mails to the user (1598). In some embodiments, the respective speech-based, item specific paraphrase for each data item is a respective speech-based, item specific paraphrase for a respective e-mail in the particular group of emails, and the respective paraphrase for the respective e-mail specifies an ordinal position of the respective e-mail in the group of e-mails, a sender of the respective e-mail, and a subject of the email.

In some embodiments, for at least one of the particular group of e-mails, the digital assistant determines a respective size of an unbounded portion of the e-mail (1600). In accordance with predetermined criteria, the digital assistant performs one of: (1) providing a speech-based output reading an entirety of the unbounded portion to the user (1602); and (2) chunking the unbounded portion of the data item into multiple discrete sections (1604), providing a speech-based output reading a particular discrete section of the multiple discrete sections to the user, and after reading the particular discrete section, prompting user input regarding whether to read the remaining discrete sections of the multiple discrete sections.

The above flow diagram illustrates the various options that can be implemented in hands-free list reading for data items in general, and for various domain-specific item types. Although the steps are show in a flow diagram, the steps do not have to be performed in any particular order, unless explicitly indicated in the particular steps. Not all steps need to be performed in various embodiments. Various features from different domains may be applicable to reading of items in other domains. The steps can be selectively combined in various embodiments, unless explicitly prohibited. Other steps, methods, and features are described in other parts of the specification, and can be combined with the steps described with respect to Figs. 14A-14L.

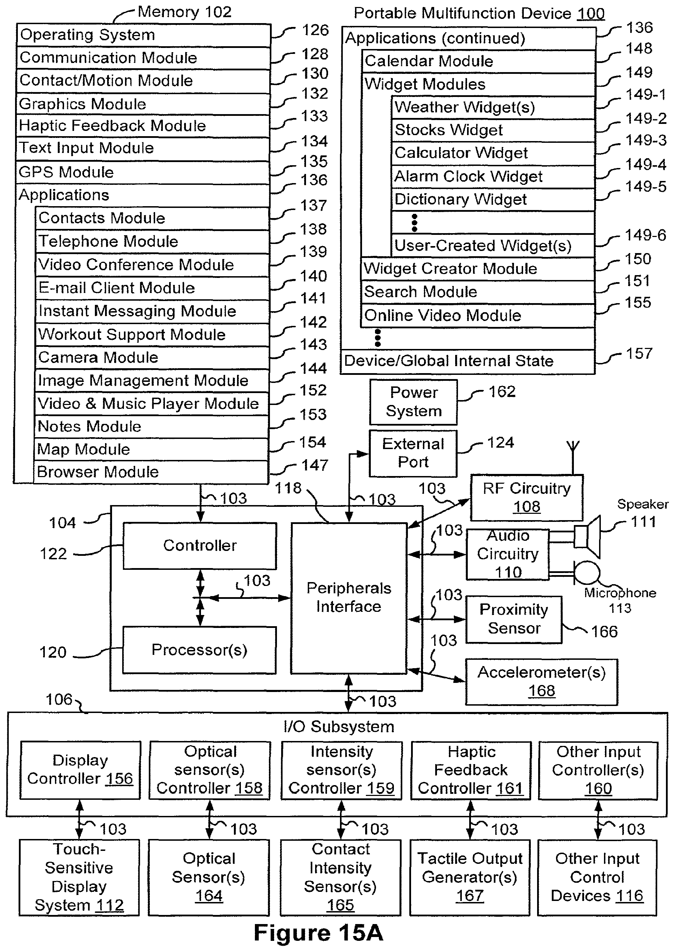

Attention is now directed toward embodiments of portable devices with touch-sensitive displays. Figure 15A is a block diagram illustrating portable multifunction device 100 with touch-sensitive displays 112 in accordance with some embodiments. Touch-sensitive display 112 is sometimes called a "touch screen" for convenience, and is sometimes known as or called a touch-sensitive display system. Device 100 includes memory 102 (which optionally includes one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 optionally includes one or more intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch sensitive surface, or to a substitute (proxy) for the force or pressure of a contact on the touch sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in Figure 15A are implemented in hardware, software, or a combination of both hardware and software, including one or more signal processing and/or application specific integrated circuits.

Memory 102 optionally includes high-speed random access memory and optionally also includes non-volatile memory, such as one or more magnetic disk storage devices, flash memory devices, or other non-volatile solid-state memory devices. Access to memory 102 by other components of device 100, such as CPU 120 and the peripherals interface 118, is, optionally, controlled by memory controller 122.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication optionally uses any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack. The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161 and one or more input controllers 160 for other input or control devices. The one or more input controllers 160 receive/send electrical signals from/to other input or control devices 116. The other input control devices 116 optionally include physical buttons (e.g. push buttons, rocker buttons, etc.), dials, slider switches, joysticks, click wheels, and so forth. In some alternate embodiments, input controller(s) 160 are, optionally, coupled to any (or none) of the following: a keyboard, infrared port, USB port, and a pointer device such as a mouse. The one or more buttons optionally include an up/down button for volume control of speaker 111 and/or microphone 113. The one or more buttons optionally include a push button.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output corresponds to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and converts the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone®, iPod Touch®, and iPad® from Apple Inc. of Cupertino, California.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. Figure 15A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lens, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device, so that the touch screen display is enabled for use as a viewfinder for still and/or video image acquisition. In some embodiments, another optical sensor is located on the front of the device so that the user's image is, optionally, obtained for videoconferencing while the user views the other video conference participants on the touch screen display.

Device 100 optionally also includes one or more contact intensity sensors 165. Figure 15A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112 which is located on the front of device 100.

Device 100 optionally also includes one or more proximity sensors 166. Figure 15A shows proximity sensor 166 coupled to peripherals interface 118. Alternately, proximity sensor 166 is coupled to input controller 160 in I/O subsystem 106. In some embodiments, the proximity sensor turns off and disables touch screen 112 when the multifunction device is placed near the user's ear (e.g., when the user is making a phone call).

Device 100 optionally also includes one or more tactile output generators 167. Figure 15A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112 which is located on the front of device 100.

Device 100 optionally also includes one or more accelerometers 168. Figure 15A shows accelerometer 168 coupled to peripherals interface 118. Alternately, accelerometer 168 is, optionally, coupled to an input controller 160 in I/O subsystem 106. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments memory 102 stores device/global internal state 157, as shown in Figure 15A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 optionally detects contact with touch screen 112 (in conjunction with display controller 156) and other touch sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined thresholds values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (lift off) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (lift off) event.

Graphics module 132 includes various known software components for rendering and displaying graphics on touch screen 112 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- workout support module 142;
- camera module 143 for still and/or video images;
- image management module 144;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which is, optionally, made up of a video player module and a music player module;
- notes module 153;
- map module 154; and/or
- online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), email address(es), physical address(es) or other information with a name; associating an image with a name; categorizing and sorting names; providing telephone numbers or e-mail addresses to initiate and/or facilitate communications by telephone 138, video conference 139, e-mail 140, or IM 141; and so forth.

In conjunction with RF circuitry 108, audio circuitry 110, speaker 111, microphone 113, touch screen 112, display controller 156, contact module 130, graphics module 132, and text input module 134, telephone module 138 are, optionally, used to enter a sequence of characters corresponding to a telephone number, access one or more telephone numbers in address book 137, modify a telephone number that has been entered, dial a respective telephone number, conduct a conversation and disconnect or hang up when the conversation is completed. As noted above, the wireless communication optionally uses any of a plurality of communications standards, protocols and technologies.

In conjunction with RF circuitry 108, audio circuitry 110, speaker 111, microphone 113, touch screen 112, display controller 156, optical sensor 164, optical sensor controller 158, contact module 130, graphics module 132, text input module 134, contact list 137, and telephone module 138, videoconferencing module 139 includes executable instructions to initiate, conduct, and terminate a video conference between a user and one or more other participants in accordance with user instructions.

In conjunction with RF circuitry 108, touch screen 112, display controller 156, contact module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages and to view received instant messages. In some embodiments, transmitted and/or received instant messages optionally include graphics, photos, audio files, video files and/or other attachments as are supported in a MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact module 130, graphics module 132, text input module 134, GPS module 135, map module 154, and music player module 146, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store and transmit workout data.

In conjunction with touch screen 112, display controller 156, optical sensor(s) 164, optical sensor controller 158, contact module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display system controller 156, contact module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display system controller 156, contact module 130, graphics module 132, text input module 134, e-mail client module 140, and browser module 147, calendar module 148 includes executable instructions to create, display, modify, and store calendars and data associated with calendars (e.g., calendar entries, to do lists, etc.) in accordance with user instructions.

In conjunction with RF circuitry 108, touch screen 112, display system controller 156, contact module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an **HTML** (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display system controller 156, contact module 130, graphics module 132, text input module 134, and browser module 147, the widget creator module 150 are, optionally, used by a user to create widgets (e.g., turning a user-specified portion of a web page into a widget).

In conjunction with touch screen 112, display system controller 156, contact module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display system controller 156, contact module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact module 130, graphics module 132, and text input module 134, notes module 153 includes executable instructions to create and manage notes, to do lists, and the like in accordance with user instructions.

In conjunction with RF circuitry 108, touch screen 112, display system controller 156, contact module 130, graphics module 132, text input module 134, GPS module 135, and browser module 147, map module 154 are, optionally, used to receive, display, modify, and store maps and data associated with maps (e.g., driving directions; data on stores and other points of interest at or near a particular location; and other location-based data) in accordance with user instructions.

In conjunction with touch screen 112, display system controller 156, contact module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video.

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

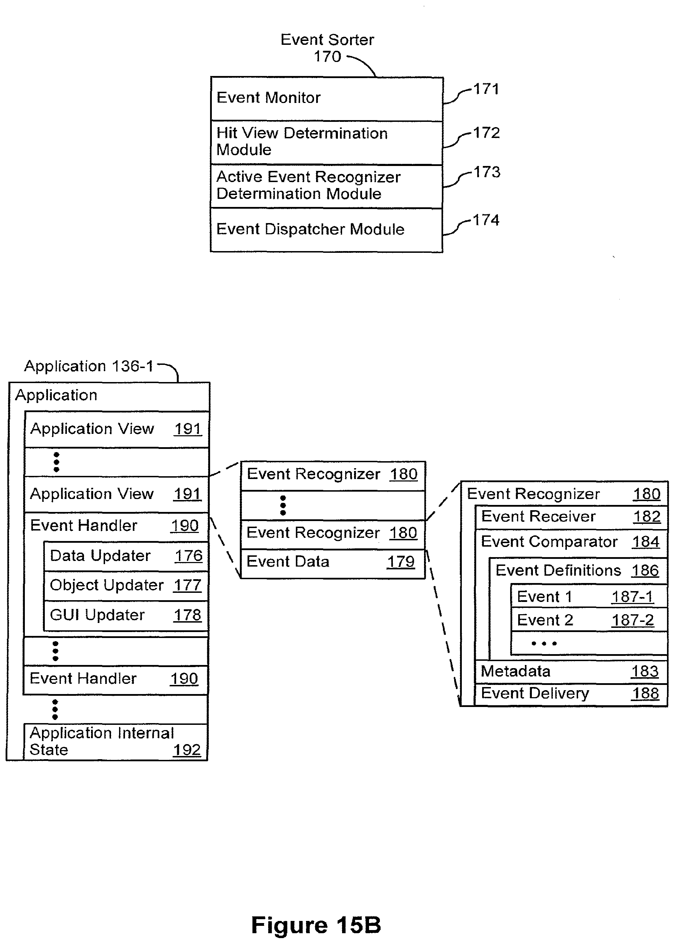

Figure 15B is a block diagram illustrating exemplary components for event handling in accordance with some embodiments. In some embodiments, memory 102 (in Figure 15A) includes event sorter 170 (e.g., in operating system 126) and a respective application 136-1 (e.g., any of the aforementioned applications 137-13, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripheral interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views, when touch sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (i.e., the first sub-event in the sequence of sub-events that in an event or potential event). Once the hit view is identified by the hit view determination module, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver module 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177 or GUI updater 178 to update the application internal state 192. Alternatively, one or more of the application views 191 includes one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170, and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event 187 include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first lift-off (touch end) for a predetermined phase, a second touch (touch begin) on the displayed object for a predetermined phase, and a second lift-off (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and lift-off of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event 187 also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module 145. In some embodiments, object updater 177 creates and updates objects used in application 136-1. For example, object updater 176 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input-devices, not all of which are initiated on touch screens. For example, mouse movement and mouse button presses, optionally coordinated with single or multiple keyboard presses or holds; contact movements such as taps, drags, scrolls, etc., on touch-pads; pen stylus inputs; movement of the device; oral instructions; detected eye movements; biometric inputs; and/or any combination thereof are optionally utilized as inputs corresponding to sub-events which define an event to be recognized.

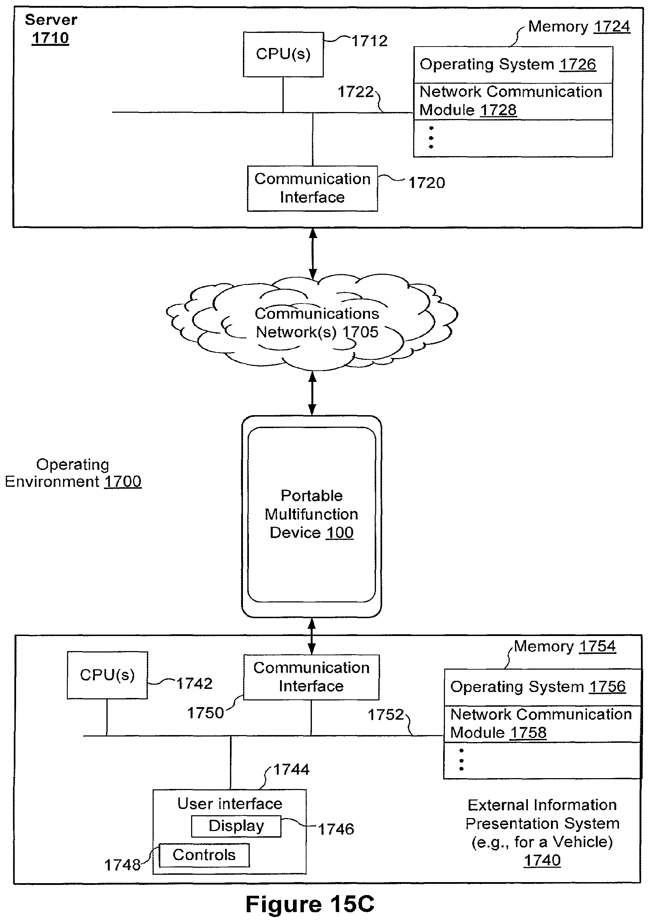

Figure 15C illustrates a block diagram of an operating environment 1700 in accordance with some embodiments. Operating environment 1700 includes a server 1710, one or more communications networks 1705, portable multifunction device 100, and external information presentation system 1740. In some embodiments, external information presentation system 1740 is implemented in a vehicle.

Server 1710 typically includes one or more processing units (CPUs) 1712 for executing modules, programs and/or instructions stored in memory 1724 and thereby performing processing operations, one or more network or other communications interfaces 1720, memory 1724, and one or more communication buses 1722 for interconnecting these components. Communication buses 1722 optionally include circuitry (sometimes called a chipset) that interconnects and controls communications between system components. Memory 1724 includes high-speed random access memory, such as DRAM, SRAM, DDR RAM or other random access solid state memory devices, and may include non-volatile memory, such as one or more magnetic disk storage devices. optical disk storage devices, flash memory devices, or other non-volatile solid state storage devices. Memory 1724 optionally includes one or more storage devices remotely located from the CPU(s) 1712. Memory 1724, or alternately the non-volatile memory device(s) within memory 1724, comprises a non-transitory computer readable storage medium. In some embodiments, memory 1724, or the computer readable storage medium of memory 1724 stores the following programs, modules, and data structures, or a subset thereof:
- an operating system 1726 that includes procedures for handling various basic system services and for performing hardware dependent tasks; and
- a network communication module 1728 that is used for connecting (wired or wireless) server 1710 to other computing devices via the one or more communication network interfaces 1720 and one or more communication networks 1705, such as the Internet, other wide area networks, local area networks, metropolitan area networks, and so on.

Portable multifunction device 100 typically includes the components described with reference to Figures 15A-15B.

External information presentation system 1740 typically includes one or more processing units (CPUs) 1742 for executing modules, programs and/or instructions stored in memory 1754 and thereby performing processing operations, one or more network or other communications interfaces 1750, memory 1754, and one or more communication buses 1752 for interconnecting these components. External information presentation system 1740 optionally includes a user interface 1744 comprising a display device 1746 and controls 1748 (e.g., mechanical affordances or knobs). In some embodiments, display 1746 is a touch screen display that is capable of receiving user touch inputs. Communication buses 1752 optionally include circuitry (sometimes called a chipset) that interconnects and controls communications between system components. Memory 1754 includes high-speed random access memory, such as DRAM, SRAM, DDR RAM or other random access solid state memory devices, and may include non-volatile memory, such as one or more magnetic disk storage devices, optical disk storage devices, flash memory devices, or other non-volatile solid state storage devices. Memory 1754 optionally includes one or more storage devices remotely located from the CPU(s) 1742. Memory 1752, or alternately the non-volatile memory device(s) within memory 1752, comprises a non-transitory computer readable storage medium. In some embodiments, memory 1752, or the computer readable storage medium of memory 1752 stores the following programs, modules, and data structures, or a subset thereof:
- an operating system 1756 that includes procedures for handling various basic system services and for performing hardware dependent tasks; and
- a network communication module 1758 that is used for connecting (wired or wireless) server 1740 to other computing devices via the one or more communication network interfaces 1750, wired or wireless, and one or more communication networks 1705, such as the Internet, other wide area networks, local area networks, metropolitan area networks, and so on.

In some embodiments, device 100 drives display 1746 of system 1740. For example, device 100 sends a video signal to system 1740, and CPU 1742 of system 1740 renders the video signal on display 1746. In some embodiments, the user interface displayed on touch screen 112 of device 100 is synchronized with the user interface displayed on display 1746 of system 1740, and, in some other embodiments, the user interface displayed on touch screen 112 of device 100 is not synchronized with the user interface displayed on display 1746 of system 1740. In some embodiments, system 1740 sends information corresponding to an user input (e.g., a user touch input on display 1746 or a user input via controls 1748) to device 100, and device 100 updates the user interface displayed on touch screen 112 of device 100 in accordance with the received information.

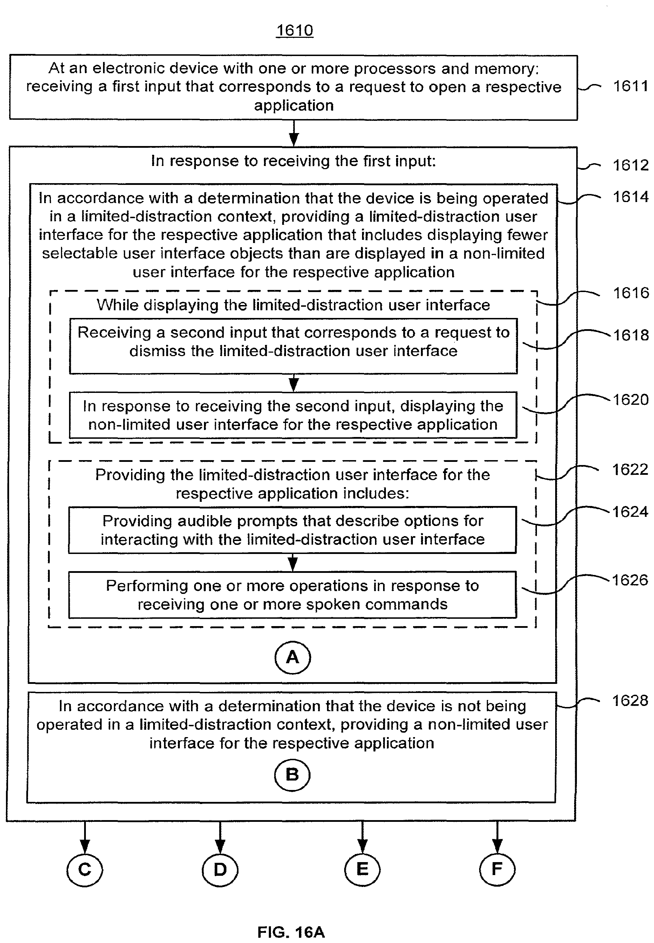

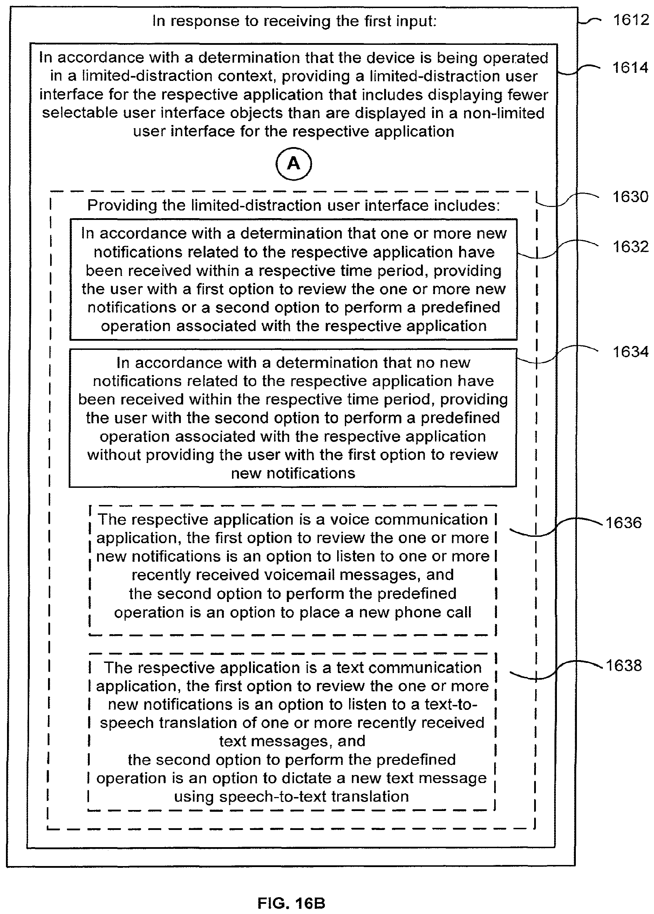

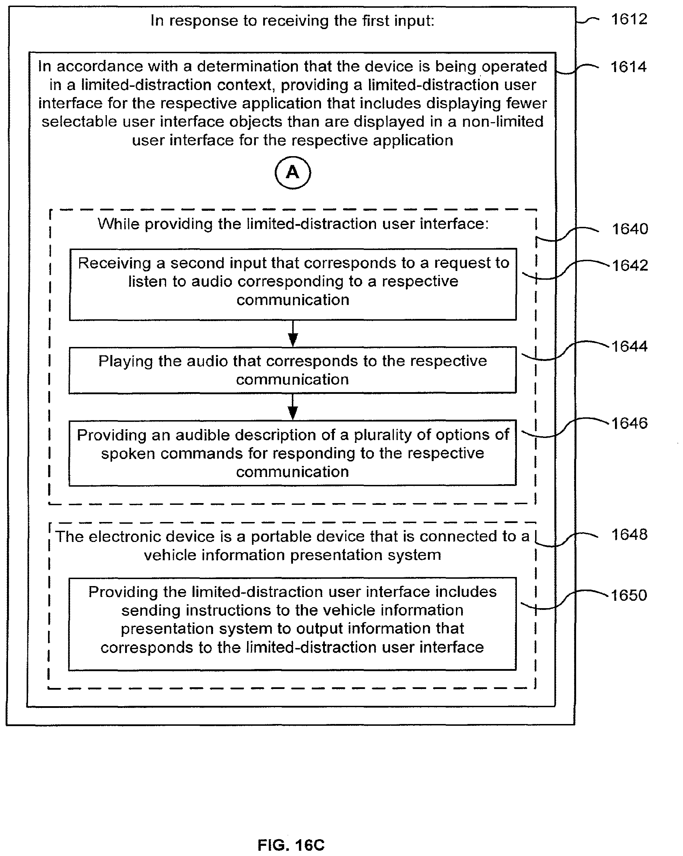

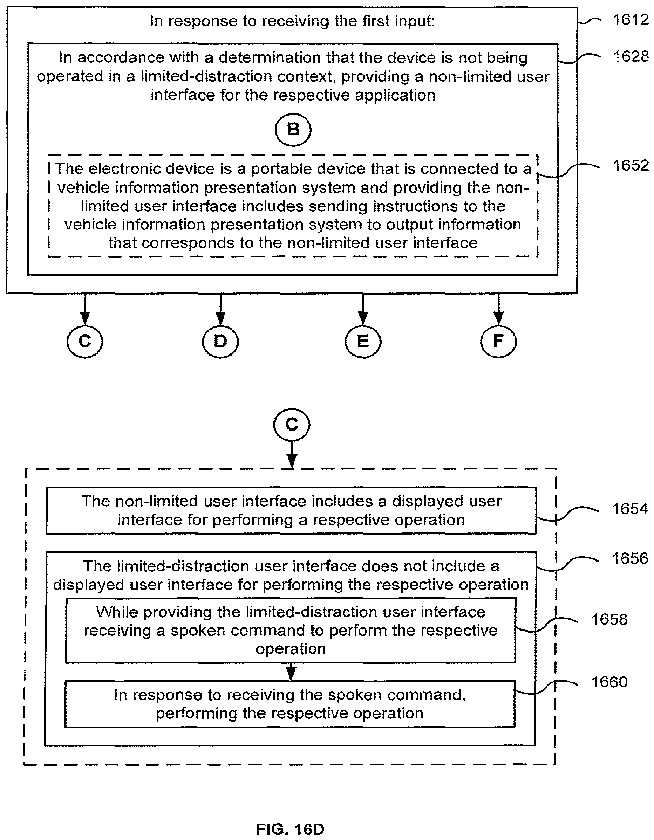

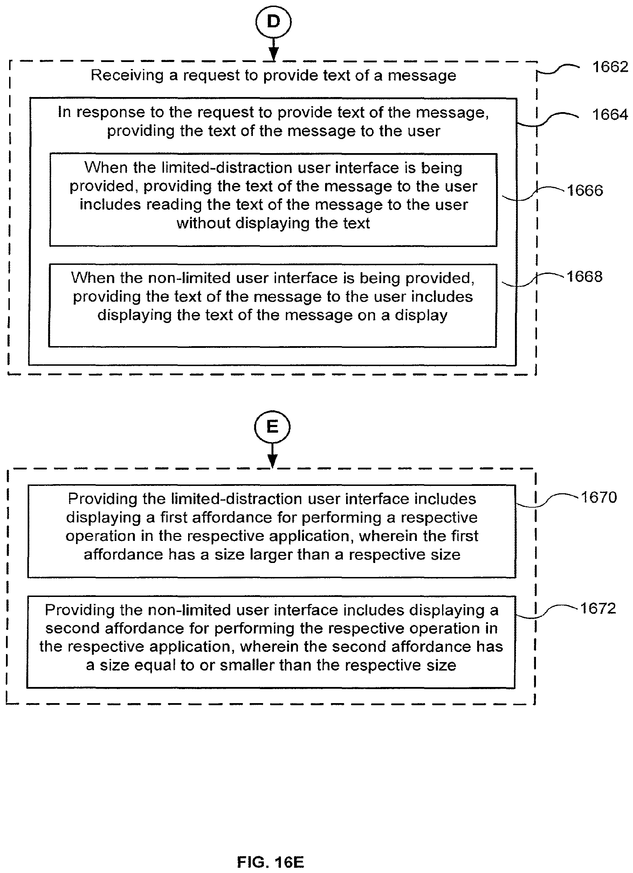

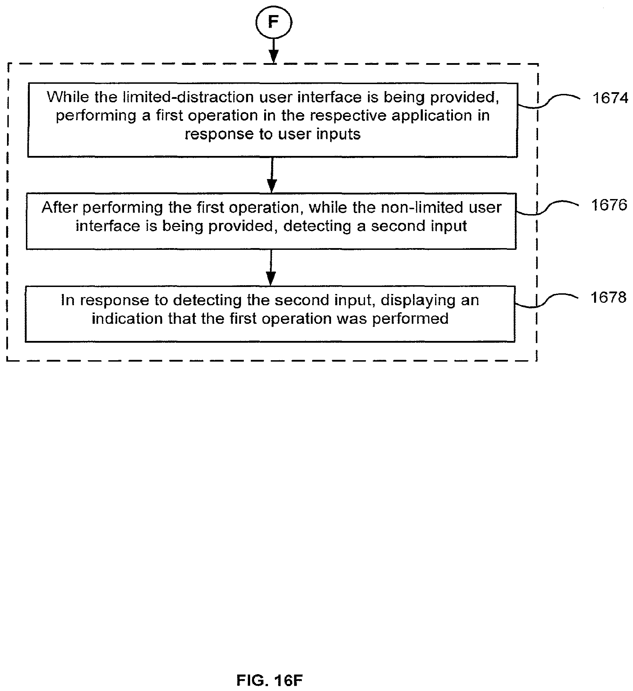

Figures 16A-16F are a flow diagram of a method 1610 for responding to a request to open a respective application in accordance with a determination that the device is or is not being operated in a limited distraction context. In some embodiments, method 1610 is performed by or at an electronic device (e.g., device 100, shown in Figures 15A and 15C) coupled to an information presentation system (e.g., system 1740, Figure 15C) external to the electronic device. In some embodiments, method 1610 is performed in part by the electronic device and in part by the external information presentation system, under the control of the electronic device. In some embodiments, method 1610 is governed by a set of instructions stored in memory (e.g., a non-transitory computer readable storage medium in device 100, Figure 15A) that are executed by the one or more processors of the electronic device.

In process 1610, an electronic device with one or more processors and memory receives a first input that corresponds to a request to open a respective application (1611). Examples of the first input include a request to open an email application, telephone application or text messaging application other than the email application.

The device responds to the first request (1612) in one of the following ways. In accordance with a determination that the device is being operated in a limited-distraction context, the device provides (1614) a limited-distraction user interface for the respective application that includes displaying fewer selectable user interface objects than are displayed in a non-limited user interface for the respective application. An example of a limited distraction context is one where the device is connected to a vehicle's information presentation system (e.g., a presentation system for entertainment and/or navigation information) and the vehicle is either moving or is determined to be in a state consistent with moving (e.g., where the transmission is in any mode consistent with driving the vehicle).

In accordance with a determination that the device is not being operated in a limited-distraction context (e.g., the device is not connected to a vehicle's information presentation system, or the device is connected to a vehicle's information presentation system but the vehicle is determined not to be in a state consistent with moving), the device provides (1628) a non-limited user interface for the respective application.

In some embodiments, while displaying the limited-distraction user interface (1616), the device receives (1618) a second input that corresponds to a request to dismiss the limited-distraction user interface. In response to receiving this second input, the device displays (1620) the non-limited user interface for the respective application. For example, the device receives a second input that corresponds to a request to dismiss the limited-distraction user interface for the text messaging application, and responds by displaying the non-limited user interface for the text messaging application.

In some embodiments, providing (1622) the limited-distraction user interface for the respective application includes providing (1624) audible prompts that describe options for interacting with the limited-distraction user interface, and performing (1626) one or more operations in response to receiving one or more spoken commands. For example, the limited-distraction user interface for a voicemail application provides audible prompts to listen to a respective voicemail message, to repeat some or all of a respective voicemail message (e.g., repeat last 30 seconds, or repeat entire message), to listen to a different voicemail message, to delete a voicemail message or to call back the caller that left a respective message. In another example, the limited-distraction user interface for a text messaging application provides audible prompts to listen to a text-to-speech translation of a text message, to respond to a text message, to call back the sender of a text message or remind the user to respond to the text message at a later time.

In some embodiments, providing (1630) the limited-distraction user interface includes, in accordance with a determination that one or more new notifications related to the respective application have been received (1632) within a respective time period, providing the user with a first option to review the one or more new notifications and a second option to perform a predefined operation associated with the respective application. Similarly, in accordance with a determination that no new notifications related to the respective application have been received (1634) within the respective time period, providing the user with the second option to perform a predefined operation associated with the respective application without providing the user with the first option to review new notifications. There are several ways these actions can be exhibited. For example, when the respective application is an email application, and in accordance with a determination that one or more new notifications related to the email application have been received (e.g., for new email messages) within a respective time period, the user is provided with a first option to review the one or more new notifications (e.g., new email messages) and a second option to perform a predefined operation associated with the email application (e.g., reply to, delete or forward the one or more new email messages). In some embodiments, the first option is provided before the second option is provided. In some embodiments, the second option is provided before the first option is provided. Furthermore, with respect to operations 1632 and 1634, in some embodiments, when using the limited-distraction interface, the options are presented to the user via both audible prompts and by displaying the options on the information presentation system coupled to the user's device, and the user can then choose to respond via voice or by interacting with the vehicle's information presentation system. In some other embodiments, when using the limited-distraction interface, the options are presented to the user via audible prompts, but are not displayed on the information presentation system coupled to the user's device.

In another example, where the respective application is (1636) a voice communication application, the first option to review the one or more new notifications is an option to listen to one or more recently received voicemail messages, and the second option to perform the predefined operation is an option to place a new phone call. In yet another example, where the respective application is (1638) a text communication application, the first option to review the one or more new notifications is an option to listen to a text-to-speech translation of one or more recently received text messages, and the second option to perform the predefined operation is an option to dictate a new text message using speech-to-text translation. In some embodiments, the respective time period is a variable time period such as an amount of time since a portable device was connected to a vehicle or an amount of time since the user last checked for new notifications related to the respective application. In some embodiments, the respective time period is a fixed time period such as 30 minutes, 1 hour, 2 hours, 24 hours. Alternatively, the respective time period is the lesser of a fixed time period and the amount of time since the user last checked for new notifications related to the respective application. In some embodiments, the first option is provided before the second option is provided. In some embodiments, the second option is provided before the first option is provided.

In some embodiments, while providing (1640) the limited-distraction user interface, the device receives (1642) a second input that corresponds to a request to listen to audio corresponding to a respective communication, then plays (1644) the audio that corresponds to the respective communication, and further provides (1646) an audible description of a plurality of options of spoken commands for responding to the respective communication. For example, while providing the limited-distraction user interface for a voicemail application, the device receives a second input corresponding to a request to listen to the audio corresponding to a respective voicemail message, then plays the audio corresponding to the respective voicemail message, and then provides an audible description of a plurality of options of spoken commands for responding to the respective voicemail message, such as to repeat some or all of the respective voicemail message (e.g., repeat last 30 seconds, or repeat entire message), to delete the voicemail message, or to call back the caller that left the respective message. In another example, while providing the limited-distraction user interface for a text messaging application, the device receives a second input corresponding to a request to listen to the audio corresponding to a respective text message (e.g., a text-to-speech translation), and after playing the audio corresponding to respective text message, provides an audible description of a plurality of options of spoken commands for responding to the respective text message, such as to respond to the text message via text messaging, to call back the sender of a message or remind the user to respond to the message at a later time.

In some embodiments, the electronic device is (1648) a portable device that is connected to a vehicle information presentation system (e.g., a presentation system for entertainment and/or navigation information), and providing (1650) the limited-distraction user interface includes sending instructions to the vehicle information presentation system to output information that corresponds to the limited-distraction user interface. For example, the device is a portable device that is connected to the vehicle information presentation system, and the limited-distraction user interface includes sending instructions to a vehicle display and/or vehicle speaker system. In some embodiments, a display and/or speakers of the device are disabled while the vehicle is either moving or is determined to be in a state consistent with moving (e.g., where the transmission is in any mode consistent with driving the vehicle).

As presented earlier, in accordance with a determination that the device is not being operated in a limited-distraction context (e.g., the device is not connected to a vehicle information presentation system, or the device is connected to a vehicle information presentation system but the vehicle is determined not to be in a state consistent with moving), the device provides (1628) a non-limited user interface for the respective application. In some embodiments, the electronic device is (1652) a portable device that is connected to a vehicle information presentation system and providing the non-limited user interface includes sending instructions to the vehicle information presentation system to output information that corresponds to the non-limited user interface. For example, the device is a portable device that is connected to an in-vehicle information presentation system, and the non-limited distraction user interface includes sending instructions to a vehicle display and/or vehicle speaker system. In some embodiments, a display and/or speakers of the device are disabled while the vehicle is either moving or is determined to be in a state consistent with moving (e.g., where the transmission is in any mode consistent with driving the vehicle). In some embodiments, the non-limited user interface is displayed while the device is connected to the vehicle information presentation system if the vehicle is moving at a speed at or below a respective speed threshold (e.g., 0, 1, 2, or 5 miles per hour) and/or if the limited-distraction user interface has been dismissed.

In some embodiments, the non-limited user interface includes (1654) a displayed user interface for performing a respective operation, whereas the limited-distraction user interface does not include (1656) a displayed user interface for performing the respective operation. While providing (1658) the limited-distraction user interface, a spoken command to perform the respective operation is received. In response to receiving the spoken command, the respective operation is performed (1660). For example, the limited-distraction user interface for sending an email message does not include a displayed user interface, a spoken command to send the email message is received, and in response to receiving the spoken command to send the email message, the email message is sent.

In some embodiments, method 1610 includes receiving a request to provide (1662) text of a message. In response to the request to provide text of the message (1664), the text of the message is provided to the user. When the limited-distraction user interface is being provided, providing (1666) the text of the message to the user includes reading the text of the message to the user without displaying the text (e.g., providing a text-to-speech translation). When the non-limited user interface is being provided, providing (1668) the text of the message to the user includes displaying the text of the message on a display (e.g., the display of the device 100, Figures 15A and 15C). Typically, the text of the message is not displayed on the display of the information presentation system (e.g., system 1740, Figure 15C) integrated into a vehicle, even when the non-limited user interface is being provided, and instead the text is displayed only on the display of the user's electronic device (e.g., device 100, shown in Figures 15A and 15C). However, in some other embodiments, the text of the message is displayed on the information presentation system (e.g., system 1740, Figure 15C) integrated into a vehicle when the non-limited user interface is being provided. In yet other embodiments, the text of the message is dictated using text-to-speech translation, but is not displayed (i.e., not displayed on the electronic device and also not displayed on the information presentation system), even when the non-limited user interface is being provided.

In some embodiments, providing (1670) the limited-distraction user interface includes displaying a first affordance for performing a respective operation in the respective application, wherein the first affordance has a size larger than a respective size. Displayed affordances are sometimes herein called user interface objects. Providing (1672) the non-limited user interface includes displaying a second affordance for performing the respective operation in the respective application, wherein the second affordance has a size equal to or smaller than the respective size. In some embodiments the limited-distraction user interface includes only displayed affordances (e.g., a "place phone call" button and/or a "listen to voicemail" button) with a size larger than the respective size (e.g., in the context of driving, so as to give the user a larger selection target that requires less attention to select, thereby reducing the likelihood of driver distraction).

In some embodiments, while the limited-distraction user interface is being provided (1674), a first operation in the respective application is performed, in response to user inputs (e.g., listening to a voicemail, placing a phone call, listening to a text message or sending a new text message). After performing (1676) the first operation, while the non-limited user interface is being provided, a second input is detected. In response to detecting the second input (1678), an indication that the first operation was performed, is displayed (e.g., the device displays a recent calls list or a messaging conversation that shows that the call or message was sent while the device was operating in the limited-distraction context).

It should be understood that the particular order in which the operations in Figures 16A-F have been described is merely exemplary and is not intended to indicate that the described order is the only order in which the operations could be performed. One of ordinary skill in the art would recognize various ways to reorder the operations described herein.

The present invention has been described in particular detail with respect to possible embodiments. Those of skill in the art will appreciate that the invention may be practiced in other embodiments. First, the particular naming of the components, capitalization of terms, the attributes, data structures, or any other programming or structural aspect is not mandatory or significant, and the mechanisms that implement the invention or its features may have different names, formats, or protocols. Further, the system may be implemented via a combination of hardware and software, as described, or entirely in hardware elements, or entirely in software elements. Also, the particular division of functionality between the various system components described herein is merely exemplary, and not mandatory; functions performed by a single system component may instead be performed by multiple components, and functions performed by multiple components may instead be performed by a single component.

In various embodiments, the present invention can be implemented as a system or a method for performing the above-described techniques, either singly or in any combination. In another embodiment, the present invention can be implemented as a computer program product comprising a nontransitory computer-readable storage medium and computer program code, encoded on the medium, for causing a processor in a computing device or other electronic device to perform the above-described techniques.

Reference in the specification to "one embodiment" or to "an embodiment" means that a particular feature, structure, or characteristic described in connection with the embodiments is included in at least one embodiment of the invention. The appearances of the phrase "in one embodiment" in various places in the specification are not necessarily all referring to the same embodiment.

Some portions of the above are presented in tetras of algorithms and symbolic representations of operations on data bits within a memory of a computing device. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention can be embodied in software, firmware and/or hardware, and when embodied in software, can be downloaded to reside on and be operated from different platforms used by a variety of operating systems.

The present invention also relates to an apparatus for performing the operations herein. This apparatus may be specially constructed for the required purposes, or it may comprise a general-purpose computing device selectively activated or reconfigured by a computer program stored in the computing device. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Further, the computing devices referred to herein may include a single processor or may be architectures employing multiple processor designs for increased computing capability.

The algorithms and displays presented herein are not inherently related to any particular computing device, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the present invention is not described with reference to any particular programming language. It will be appreciated that a variety of programming languages may be used to implement the teachings of the present invention as described herein, and any references above to specific languages are provided for disclosure of enablement and best mode of the present invention.

Accordingly, in various embodiments, the present invention can be implemented as software, hardware, and/or other elements for controlling a computer system, computing device, or other electronic device, or any combination or plurality thereof. Such an electronic device can include, for example, a processor, an input device (such as a keyboard, mouse, touchpad, trackpad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or nonportable. Examples of electronic devices that may be used for implementing the invention include: a mobile phone, personal digital assistant, smartphone, kiosk, desktop computer, laptop computer, tablet computer, consumer electronic device, consumer entertainment device; music player; camera; television; set-top box; electronic gaming unit; or the like. An electronic device for implementing the present invention may use any operating system such as, for example, iOS or MacOS, available from Apple Inc. of Cupertino, California, or any other operating system that is adapted for use on the device.

While the invention has been described with respect to a limited number of embodiments, those skilled in the art, having benefit of the above description, will appreciate that other embodiments may be devised which do not depart from the scope of the present invention as described herein. In addition, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the claims.

## Claims

1. A method comprising:
at an electronic device (60) with one or more processors (63) and memory (62,65):
determining (802), without receiving user input and without regard to whether a digital assistant has been invoked by a user, whether the device is being operated in a first context;
receiving a first input that corresponds to a request to launch a respective application; and
in response to receiving the first input:
in accordance with a determination that the device is being operated in the first context, providing (1614) a first user interface for the respective application, wherein the device being operated in the first context is determined in response to receiving the first input before launching the respective application; and
in accordance with a determination that the device is not being operated in the first context, providing (1628) a second user interface for the respective application, wherein providing the first user interface for the respective application includes providing for display fewer selectable user interface objects than are displayed in the second user interface for the respective application.

2. The method of claim 1, including:
while providing for display the first user interface, receiving (1618) a second input that corresponds to a request to dismiss the first user interface; and
in response to receiving the second input, providing (1620) for display the second user interface for the respective application.

3. The method of any of claims 1-2, wherein providing the first user interface includes:
in accordance with a determination that one or more new notifications related to the respective application have been received within a respective time period, providing (1632) the user with a first option to review the one or more new notifications and a second option to perform a predefined operation associated with the respective application; and
in accordance with a determination that no new notifications related to the respective application have been received within the respective time period, providing (1634) the user with the second option to perform a predefined operation associated with the respective application without providing the user with the first option to review new notifications.

4. The method of any of claims 1-3, wherein providing the first user interface for the respective application includes:
providing (1624) audible prompts that describe options for interacting with the first user interface; and
performing (1626) one or more operations in response to receiving one or more spoken commands.

5. The method of any of claims 1-4, including, while providing the first user interface:
receiving (1642) a second input that corresponds to a request to listen to audio corresponding to a respective communication;
playing (1644) the audio that corresponds to the respective communication; and
after playing the audio that corresponds to the respective communication, providing (1646) an audible description of a plurality of options of spoken commands for responding to the respective communication.

6. The method of any of claims 1-5, including:
receiving (1662) a request to provide text of a message; and
in response to the request to provide text of the message, providing (1664) the text of the message to the user, wherein:
when the first user interface is being provided, providing (1666) the text of the message to the user includes reading the text of the message to the user without providing the text for display; and
when the second user interface is being provided, providing (1668) the text of the message to the user includes displaying the text of the message on a display.

7. The method of any of claims 1-6, wherein:
providing (1670) the first user interface includes displaying a first affordance for performing a respective operation in the respective application; and
providing (1672) the second user interface includes displaying a second affordance for performing the respective operation in the respective application, wherein the second affordance has a size smaller than a size of the first affordance.

8. The method of any of claims 1-7, including:
while the first user interface is being provided, performing (1674) a first operation in the respective application in response to user inputs; and
after performing the first operation:
while the second user interface is being provided,
detecting (1676) a second input; and
in response to detecting the second input, displaying (1678) an indication that the first operation was performed.

9. The method of any of claims 1-8, wherein:
the electronic device is a portable device that is connected to a vehicle information presentation system; and
providing the first user interface includes sending instructions to the vehicle information presentation system to output information that corresponds to the first user interface.

10. An electronic device (60), comprising:
one or more processors (63);
memory (62,65); and
one or more programs, wherein the one or more programs are stored in the memory and configured to be executed by the one or more processors, the one or more programs including instructions for:
determining (802), without receiving user input and without regard to whether a digital assistant has been invoked by a user, whether the device is being operated in a first context;
receiving a first input that corresponds to a request to launch a respective application;
in response to receiving the first input:
in accordance with a determination that the device is being operated in the first context, providing (1614) a first user interface for the respective application, wherein the device being operated in the first context is determined in response to receiving the first input before launching the respective application ; and
in accordance with a determination that the device is not being operated in a first context, providing (1628) a second user interface for the respective application, wherein providing the first user interface for the respective application includes providing for display fewer selectable user interface objects than are displayed in the second user interface for the respective application.

11. The electronic device of claim 10, wherein providing the first user interface includes:
in accordance with a determination that one or more new notifications related to the respective application have been received within a respective time period, providing (1632) the user with a first option to review the one or more new notifications and a second option to perform a predefined operation associated with the respective application; and
in accordance with a determination that no new notifications related to the respective application have been received within the respective time period, providing (1634) the user with the second option to perform a predefined operation associated with the respective application without providing the user with the first option to review new notifications.

12. A non-transitory computer readable storage medium storing one or more programs, the one or more programs comprising instructions, which when executed by an electronic device (60) having one or more processors (63) and memory (62,65), cause the device to:
determine (802), without receiving user input and without regard to whether a digital assistant has been invoked by a user, whether the device is being operated in a first context;
receive a first input that corresponds to a request to launch a respective application;
in response to receiving the first input:
in accordance with a determination that the device is being operated in the first context, provide (1614) a first user interface for the respective application, wherein the device being operated in the first context is determined in response to receiving the first input before launching the respective application; and
in accordance with a determination that the device is not being operated in the first context, provide (1628) a second user interface for the respective application, wherein providing the first user interface for the respective application includes providing for display fewer selectable user interface objects than are displayed in the second user interface for the respective application.

13. The non-transitory computer readable storage medium of claim 12, wherein providing the first user interface includes:
in accordance with a determination that one or more new notifications related to the respective application have been received within a respective time period, providing (1632) the user with a first option to review the one or more new notifications and a second option to perform a predefined operation associated with the respective application; and
in accordance with a determination that no new notifications related to the respective application have been received within the respective time period, providing (1634) the user with the second option to perform a predefined operation associated with the respective application without providing the user with the first option to review new notifications.

14. The non-transitory computer readable storage medium of any of claims 12-13, wherein:
the respective application is a voice communication application;
the first option to review the one or more new notifications is an option to listen to one or more recently received voicemail messages; and
the second option to perform the predefined operation is an option to place a new phone call.

15. The non-transitory computer readable storage medium of any of claims 12-14, wherein:
the respective application is a text communication application;
the first option to review the one or more new notifications is an option to listen to a text-to-speech translation of one or more recently received text messages; and
the second option to perform the predefined operation is an option to dictate a new text message using speech-to-text translation.

## Patentansprüche

1. Verfahren, umfassend:
bei einer elektronischen Vorrichtung (60) mit einem oder mit mehreren Prozessoren (63) und Speicher (62, 65):
Bestimmen (802), ohne ein Empfangen einer Benutzereingabe und ohne Rücksicht darauf, ob ein digitaler Assistent durch einen Benutzer aufgerufen wurde oder nicht, ob die Vorrichtung in einem ersten Kontext betrieben wird;
Empfangen einer ersten Eingabe, die einer Anfrage entspricht, eine jeweilige Anwendung zu starten; und in Antwort auf das Empfangen der ersten Eingabe:
in Übereinstimmung mit einer Bestimmung, dass die Vorrichtung in dem ersten Kontext betrieben wird, Bereitstellen (1614) einer ersten Benutzerschnittstelle für die jeweilige Anwendung, wobei in Antwort auf das Empfangen der ersten Benutzereingabe vor dem Starten der jeweiligen Anwendung bestimmt wird, dass die Vorrichtung in dem ersten Kontext betrieben wird; und
in Übereinstimmung mit einer Bestimmung, dass die Vorrichtung nicht in dem ersten Kontext betrieben wird, Bereitstellen (1628) einer zweiten Benutzerschnittstelle für die jeweilige Anwendung, wobei das Bereitstellen der ersten Benutzerschnittstelle für die jeweilige Anwendung beinhaltet, dass der Anzeige weniger auswählbare Benutzerschnittstellenobjekte bereitgestellt werden, als sie in der zweiten Benutzerschnittstelle für die jeweilige Anwendung angezeigt werden.

2. Verfahren nach Anspruch 1, beinhaltend:
während die erste Benutzerschnittstelle zur Anzeige bereitgestellt wird, Empfangen (1618) einer zweiten Eingabe, die einer Anfrage entspricht, die erste Benutzerschnittstelle zurückzuweisen; und
in Antwort auf das Empfangen der zweiten Eingabe, die zweite Benutzerschnittstelle für die jeweilige Anwendung zur Anzeige bereitstellen (1620).

3. Verfahren nach irgendeinem der Ansprüche 1 bis 2, wobei das Bereitstellen der ersten Benutzerschnittstelle beinhaltet:
in Übereinstimmung mit einer Bestimmung, dass eine oder mehrere neue Benachrichtigungen mit Bezug zu der jeweiligen Anwendung innerhalb einer jeweiligen Zeitperiode empfangen wurden, dem Benutzer eine erste Option (1632) bereitstellen, um die eine oder die mehreren neuen Benachrichtigungen zu überprüfen, und eine zweite Option, um eine vorbestimmte Operation, die mit der jeweiligen Anwendung assoziiert ist, durchzuführen; und
in Übereinstimmung mit einer Bestimmung, dass keine neuen Nachrichten mit Bezug zu der jeweiligen Anwendung innerhalb der jeweiligen Zeitperiode empfangen wurden, dem Benutzer die zweite Option bereitstellen (1634), um eine vorbestimmte Operation, die mit der jeweiligen Anwendung assoziiert ist, durchzuführen, ohne dem Benutzer die erste Option bereitzustellen, um die neuen Benachrichtigungen zu überprüfen.

4. Verfahren nach irgendeinem der Ansprüche 1 bis 3, wobei das Bereitstellen der ersten Benutzerschnittstelle für die jeweilige Anwendung beinhaltet:
Bereitstellen (1624), von hörbaren Aufforderungen, die Optionen zum Interagieren mit der ersten Benutzerschnittstelle beschreiben; und
Durchführen (1626) von einer oder von mehreren Operationen in Antwort auf das Empfangen von einem oder von mehreren gesprochenen Befehlen.

5. Verfahren nach irgendeinem der Ansprüche 1 bis 4, beinhaltend, während dem Bereitstellen der ersten Benutzerschnittstelle:
Empfangen (1642) einer zweiten Eingabe, die einer Anfrage entspricht auf Audio entsprechend einer jeweiligen Kommunikation zu hören;
Wiedergeben (1644) des Audio, welches der jeweiligen Kommunikation entspricht; und
nach dem Wiedergeben des Audio, welches der jeweiligen Kommunikation entspricht, Bereitstellen (1646) einer hörbaren Beschreibung von einer Vielzahl von Optionen von gesprochenen Befehlen zum Antworten auf die jeweilige Kommunikation.

6. Verfahren nach irgendeinem der Ansprüche 1 bis 5, beinhaltend:
Empfangen (1662) einer Anfrage, um einen Text einer Nachricht bereitzustellen; und
in Antwort auf die Anfrage den Text der Nachricht bereitzustellen, Bereitstellen (1664) des Texts der Nachricht an den Benutzer, wobei:
wenn die erste Benutzerschnittstelle bereitgestellt wird, das Bereitstellen (1666) des Texts der Nachricht an den Benutzer ein Vorlesen des Texts der Nachricht an den Benutzer beinhaltet, ohne den Text zur Anzeige bereitzustellen; und
wenn die zweite Benutzerschnittstelle bereitgestellt ist, das Bereitstellen (1668) des Texts der Nachricht an den Benutzer ein Anzeigen des Texts der Nachricht auf einer Anzeige beinhaltet.

7. Verfahren nach irgendeinem der Ansprüche 1 bis 6, wobei:
das Bereitstellen (1670) der ersten Benutzerschnittstelle ein Anzeigen eines ersten Erfordernisses zum Durchführen einer jeweiligen Operation in der jeweiligen Anwendung beinhaltet; und
das Bereitstellen (1672) der zweiten Benutzerschnittstelle, ein Anzeigen eines zweiten Erfordernisses zum Durchführen der jeweiligen Operation in der jeweiligen Anwendung beinhaltet, wobei das zweite Erfordernis eine Größe aufweist, die kleiner ist als eine Größe des ersten Erfordernisses.

8. Verfahren nach irgendeinem der Ansprüche 1 bis 7, beinhaltend:
während die erste Benutzerschnittstelle bereitgestellt wird, Durchführen (1674) einer ersten Operation der jeweiligen Anwendung in Antwort auf Benutzereingaben; und
nach dem Durchführen der ersten Operation:
während die zweite Benutzerschnittstelle bereitgestellt wird, Detektieren (1676) einer zweiten Eingabe; und
in Antwort auf das Detektieren der zweiten Eingabe, Anzeigen (1678) einer Anzeige, dass die erste Operation durchgeführt wurde.

9. Verfahren nach irgendeinem der Ansprüche 1 bis 8, wobei:
die elektronische Vorrichtung eine tragbare Vorrichtung ist, die mit einem Fahrzeuginformationsdarstellungssystem verbunden ist; und
das Bereitstellen der ersten Benutzerschnittstelle ein Senden von Anweisungen an das Fahrzeuginformationsdarstellungssystem beinhaltet, um Informationen auszugeben, die der ersten Benutzerschnittstelle entsprechen.

10. Elektronische Vorrichtung (60), umfassend:
einen oder mehrere Prozessoren (63);
Speicher (62, 65); und
ein oder mehrere Programme, wobei das eine oder die mehreren Programme in dem Speicher gespeichert sind und konfiguriert sind, um durch den einen oder durch die mehreren Prozessoren ausgeführt zu werden, wobei das eine oder die mehreren Programme Anweisungen beinhalten zum:
Bestimmen (802), ohne ein Empfangen eine Benutzereingabe und ohne Rücksicht darauf, ob ein digitaler Assistent durch einen Benutzer aufgerufen wurde oder nicht, ob die Vorrichtung in einem ersten Kontext betrieben wird;
Empfangen einer ersten Eingabe, die einer Anfrage entspricht, eine jeweilige Anwendung zu starten; und in Antwort auf das Empfangen der ersten Eingabe:
in Übereinstimmung mit einer Bestimmung, dass die Vorrichtung in dem ersten Kontext betrieben wird, Bereitstellen (1614) einer ersten BenutzerSchnittstelle für die jeweilige Anwendung, wobei in Antwort auf das Empfangen der ersten Benutzereingabe vor dem Starten der jeweiligen Anwendung bestimmt wird, dass die Vorrichtung in dem ersten Kontext betrieben wird; und
in Übereinstimmung mit einer Bestimmung, dass die Vorrichtung nicht in einem ersten Kontext betrieben wird,
Bereitstellen (1628) einer zweiten Benutzerschnittstelle für die jeweilige Anwendung, wobei das Bereitstellen der ersten Benutzerschnittstelle für die jeweilige Anwendung beinhaltet, dass der Anzeige weniger auswählbare Benutzerschnittstellenobjekte bereitgestellt werden, als sie in der zweiten Benutzerschnittstelle für die jeweilige Anwendung angezeigt werden.

11. Elektronische Vorrichtung nach Anspruch 10, wobei das Bereitstellen der ersten Benutzerschnittstelle beinhaltet:
in Übereinstimmung mit einer Bestimmung, dass eine oder mehrere neue Benachrichtigungen mit Bezug zu der jeweiligen Anwendung innerhalb einer jeweiligen Zeitperiode empfangen wurden, dem Benutzer eine erste Option (1632) bereitstellen, um die eine oder die mehreren neuen Benachrichtigungen zu überprüfen, und eine zweite Option, um eine vorbestimmte Operation, die mit der jeweiligen Anwendung assoziiert ist, durchzuführen; und
in Übereinstimmung mit einer Bestimmung, dass keine neuen Nachrichten mit Bezug zu der jeweiligen Anwendung innerhalb der jeweiligen Zeitperiode empfangen wurden, dem Benutzer die zweite Option bereitstellen (1634), um eine vorbestimmte Operation, die mit der jeweiligen Anwendung assoziiert ist, durchzuführen, ohne dem Benutzer die erste Option bereitzustellen, um die neuen Benachrichtigungen zu überprüfen.

12. Nichtflüchtiges computerlesbares Speichermedium, dass ein oder mehrere Programme speichert, wobei das eine oder die mehreren Programme Anweisungen umfassen, welche, wenn sie durch eine elektronische Vorrichtung (60) ausgeführt werden, welche einen oder mehrere Prozessoren (63) und Speicher (62, 65) aufweist, die Vorrichtung veranlassen zum:
Bestimmen (802), ohne ein Empfangen einer Benutzereingabe und ohne Rücksicht darauf, ob ein digitaler Assistent durch einen Benutzer aufgerufen wurde oder nicht, ob die Vorrichtung in einem ersten Kontext betrieben wird;
Empfangen einer ersten Eingabe, die einer Anfrage entspricht, eine jeweilige Anwendung zu starten; und in Antwort auf das Empfangen der ersten Eingabe:
in Übereinstimmung mit einer Bestimmung, dass die Vorrichtung in dem ersten Kontext betrieben wird, Bereitstellen (1614) einer ersten BenutzerSchnittstelle für die jeweilige Anwendung, wobei in Antwort auf das Empfangen der ersten Benutzereingabe vor dem Starten der jeweiligen Anwendung bestimmt wird, dass die Vorrichtung in dem ersten Kontext betrieben wird; und
in Übereinstimmung mit einer Bestimmung, dass die Vorrichtung nicht in dem ersten Kontext betrieben wird, Bereitstellen (1628) einer zweiten Benutzerschnittstelle für die jeweilige Anwendung, wobei das Bereitstellen der ersten Benutzerschnittstelle für die jeweilige Anwendung beinhaltet, dass der Anzeige weniger auswählbare Benutzerschnittstellenobjekte bereitgestellt werden, als sie in der zweiten Benutzerschnittstelle für die jeweilige Anwendung angezeigt werden.

13. Nichtflüchtiges computerlesbares Speichermedium nach Anspruch 12, wobei das Bereitstellen der ersten Benutzerschnittstelle beinhaltet:
in Übereinstimmung mit einer Bestimmung, dass eine oder mehrere neue Benachrichtigungen mit Bezug zu der jeweiligen Anwendung innerhalb einer jeweiligen Zeitperiode empfangen wurden, dem Benutzer eine erste Option (1632) bereitstellen, um die eine oder die mehreren neuen Benachrichtigungen zu überprüfen, und eine zweite Option, um eine vorbestimmte Operation, die mit der jeweiligen Anwendung assoziiert ist, durchzuführen; und
in Übereinstimmung mit einer Bestimmung, dass keine neuen Nachrichten mit Bezug zu der jeweiligen Anwendung innerhalb der jeweiligen Zeitperiode empfangen wurden, dem Benutzer die zweite Option bereitstellen (1634), um eine vorbestimmte Operation, die mit der jeweiligen Anwendung assoziiert ist, durchzuführen, ohne dem Benutzer die erste Option bereitzustellen, um die neuen Benachrichtigungen zu überprüfen.

14. Nichtflüchtiges computerlesbares Speichermedium nach irgendeinem der Ansprüche 12 bis 13, wobei die jeweilige Anwendung eine Sprach-Kommunikations-Anwendung ist;
die erste Option zum Überprüfen der einen oder der mehreren neuen Benachrichtigungen eine Option ist, um eine oder mehrere kürzlich empfangene Sprach-Mail-Nachrichten zu hören; und
die zweite Option zum Durchführen der vorbestimmten Operation eine Option ist, um einen neuen Telefonanruf zu tätigen.

15. Nichtflüchtiges computerlesbares Speichermedium nach irgendeinem der Ansprüche 12 bis 14, wobei die jeweilige Anwendung eine Text-Kommunikations-Anwendung ist;
die erste Option zum Überprüfen der einen oder der mehreren neuen Benachrichtigungen eine Option ist, um eine Text-zu-Sprach-Übersetzung von einer oder von mehreren kürzlich empfangenen Textnachrichten zu hören; und
die zweite Option zum Durchführen der vorbestimmten Operation eine Option ist, um eine neue Textnachricht unter der Verwendung von Sprach- zu-Text-Übersetzung zu diktieren.

## Revendications

1. Un procédé comprenant :
sur un dispositif électronique (60) avec un ou plusieurs processeurs (63) et de la mémoire (62, 65) :
la détermination (802), sans recevoir d'entrée utilisateur et sans considération du point de savoir si un utilisateur a fait ou non appel à un assistant numérique, si le dispositif est ou non en train d'être utilisé dans un premier contexte ;
la réception d'une première entrée qui correspond à une requête de lancement d'une application respective ; et
en réponse à la réception de la première entrée :
à la suite d'une détermination que le dispositif est en train d'être utilisé dans le premier contexte, la présentation (1614) d'une première interface utilisateur pour l'application respective, le fait que le dispositif est utilisé dans le premier contexte étant déterminé en réponse à la réception de la première entrée avant lancement de l'application respective ; et
à la suite d'une détermination que le dispositif n'est pas en train d'être utilisé dans le premier contexte, la présentation (1628) d'une seconde interface utilisateur pour l'application respective, la présentation de la première interface utilisateur pour l'application respective incluant la présentation pour affichage de moins d'objets d'interface utilisateur sélectionnable que ceux qui sont affichés dans la seconde interface utilisateur pour l'application respective.

2. Le procédé de la revendication 1, comprenant :
pendant la présentation de la première interface utilisateur pour affichage, la réception (1618) d'une seconde entrée qui correspond à une requête de rejet de la première interface utilisateur ; et
en réponse à la réception de la seconde entrée, la présentation (1620) pour affichage de la seconde interface utilisateur pour l'application respective.

3. Le procédé de l'une des revendications 1 à 2, dans lequel la présentation de la première interface utilisateur comprend :
à la suite d'une détermination qu'une ou plusieurs nouvelles notifications relatives à l'application respective ont été reçues à l'intérieur d'une période temporelle respective, la présentation (1632) à l'utilisateur d'une première option de revoir les une ou plusieurs nouvelles notifications et d'une seconde option d'effectuer une opération prédéterminée associée à l'application respective ; et
à la suite d'une détermination qu'aucune nouvelle notification relative à l'application respective n'a été reçue à l'intérieur de la période temporelle respective, la présentation (1634) à l'utilisateur de la seconde option pour exécuter une opération prédéterminée associée à l'application respective sans présentation à l'utilisateur de la première option de revoir des nouvelles notifications.

4. Le procédé de l'une des revendications 1 à 3, dans lequel la présentation de la première interface utilisateur pour l'application respective comprend :
la présentation (1624) d'invites audibles qui décrivent des options d'interaction avec la première interface utilisateur ; et
l'exécution (1626) d'une ou plusieurs opérations en réponse à la réception d'une ou plusieurs commandes vocales.

5. Le procédé de l'une des revendications 1 à 4, comprenant, pendant la présentation de la première interface utilisateur :
la réception (1642) d'une seconde entrée qui correspond à une requête d'écoute d'audio correspondant à une communication respective ;
la restitution (1640) de l'audio qui correspond à la communication respective ; et
après restitution de l'audio qui correspond à la communication respective, la présentation (1646) d'une description audible d'une pluralité d'options de commande vocale pour répondre à la communication respective.

6. Le procédé de l'une des revendications 1 à 5, comprenant :
la réception (1662) d'une requête de présentation d'un texte d'un message ; et
en réponse à la requête de présentation du texte du message, la présentation (1664) du texte du message à l'utilisateur, dans lequel :
lorsque la première interface utilisateur est présentée, la présentation (1666) du texte du message à l'utilisateur comprend la lecture du texte du message à l'utilisateur sans présentation du texte pour affichage ; et
lorsque la seconde interface utilisateur est présentée, la présentation (1668) du texte du message à l'utilisateur inclut l'affichage du texte du message sur un afficheur.

7. Le procédé de l'une des revendications 1 à 6, dans lequel :
la présentation (1670) de la première interface utilisateur comprend l'affichage d'une première potentialité d'exécution d'une opération respective dans l'application respective ; et
la présentation (1672) de la seconde interface utilisateur comprend l'affichage d'une seconde potentialité d'exécution de l'opération respective dans l'application respective, la seconde potentialité étant de taille inférieure à une taille de la première potentialité.

8. Le procédé de l'une des revendications 1 à 7, comprenant :
pendant que la première interface utilisateur est présentée, l'exécution (1674) d'une première opération dans l'application respective en réponse à des entrées utilisateur ; et
après exécution de la première opération :
pendant que la première interface utilisateur est présentée,
la détection (1676) d'une seconde entrée ; et
en réponse à la détection de la seconde entrée, l'affichage (1678) d'une indication que la première opération a été exécutée.

9. Le procédé de l'une des revendications 1 à 8, dans lequel :
le dispositif électronique est un dispositif portable qui est connecté à un système de restitution d'informations d'un véhicule ; et
la présentation de la première interface utilisateur comprend l'envoi d'instructions au système de restitution d'informations du véhicule pour délivrer des informations qui correspondent à la première interface utilisateur.

10. Un dispositif électronique (60), comprenant :
un ou plusieurs processeurs (63) ;
de la mémoire (62, 65) ; et
un ou plusieurs programmes, les un ou plusieurs programmes étant stockés dans la mémoire et configurés pour être exécutés par les un ou plusieurs processeurs, les un ou plusieurs programmes comprenant des instructions pour :
la détermination (802), sans recevoir d'entrée utilisateur et sans considération du point de savoir si un utilisateur a fait ou non appel à un assistant numérique, si le dispositif est ou non en train d'être utilisé dans un premier contexte ;
la réception d'une première entrée qui correspond à une requête de lancement d'une application respective ;
en réponse à la réception de la première entrée :
à la suite d'une détermination que le dispositif est en train d'être utilisé dans le premier contexte, la présentation (1614) d'une première interface utilisateur pour l'application respective, le fait que le dispositif est utilisé dans le premier contexte étant déterminé en réponse à la réception de la première entrée avant lancement de l'application respective ; et
à la suite d'une détermination que le dispositif n'est pas en train d'être utilisé dans le premier contexte, la présentation (1628) d'une seconde interface utilisateur pour l'application respective, la présentation de la première interface utilisateur pour l'application respective incluant la présentation pour affichage de moins d'objets d'interface utilisateur sélectionnable que ceux qui sont affichés dans la seconde interface utilisateur pour l'application respective.

11. Le dispositif électronique de la revendication 10, dans lequel la présentation de la première interface utilisateur comprend :
à la suite d'une détermination qu'une ou plusieurs nouvelles notifications relatives à l'application respective ont été reçues à l'intérieur d'une période temporelle respective, la présentation (1632) à l'utilisateur d'une première option de revoir les une ou plusieurs nouvelles notifications et d'une seconde option d'effectuer une opération prédéterminée associée à l'application respective ; et
à la suite d'une détermination qu'aucune nouvelle notification relative à l'application respective n'a été reçue à l'intérieur de la période temporelle respective, la présentation (1634) à l'utilisateur de la seconde option pour exécuter une opération prédéterminée associée à l'application respective sans présentation à l'utilisateur de la première option de revoir des nouvelles notifications.

12. Un support de stockage non transitoire lisible par calculateur stockant un ou plusieurs programmes, les un ou plusieurs programmes comprenant des instructions qui, lorsqu'elles sont exécutées par un dispositif électronique (60) muni d'un ou plusieurs processeurs (63) et de mémoire (62, 65), font en sorte que le dispositif effectue :
la détermination (802), sans recevoir d'entrée utilisateur et sans considération du point de savoir si un utilisateur a fait ou non appel à un assistant numérique, si le dispositif est ou non en train d'être utilisé dans un premier contexte ;
la réception d'une première entrée qui correspond à une requête de lancement d'une application respective ;
en réponse à la réception de la première entrée :
à la suite d'une détermination que le dispositif est en train d'être utilisé dans le premier contexte, la présentation (1614) d'une première interface utilisateur pour l'application respective, le fait que le dispositif est utilisé dans le premier contexte étant déterminé en réponse à la réception de la première entrée avant lancement de l'application respective ; et
à la suite d'une détermination que le dispositif n'est pas en train d'être utilisé dans le premier contexte, la présentation (1628) d'une seconde interface utilisateur pour l'application respective, la présentation de la première interface utilisateur pour l'application respective incluant la présentation pour affichage de moins d'objets d'interface utilisateur sélectionnable que ceux qui sont affichés dans la seconde interface utilisateur pour l'application respective.

13. Le support de stockage non transitoire lisible par calculateur de la revendication 12, dans lequel la présentation de la première interface comprend :
à la suite d'une détermination qu'une ou plusieurs nouvelles notifications relatives à l'application respective ont été reçues à l'intérieur d'une période temporelle respective, la présentation (1632) à l'utilisateur d'une première option de revoir les une ou plusieurs nouvelles notifications et d'une seconde option d'effectuer une opération prédéterminée associée à l'application respective ; et
à la suite d'une détermination qu'aucune nouvelle notification relative à l'application respective n'a été reçue à l'intérieur de la période temporelle respective, la présentation (1634) à l'utilisateur de la seconde option pour exécuter une opération prédéterminée associée à l'application respective sans présentation à l'utilisateur de la première option de revoir des nouvelles notifications.

14. Le support de stockage non transitoire lisible par calculateur de l'une des revendications 12 à 13, dans lequel :
l'application respective est une application de communication vocale ;
la première option de revoir les une ou plusieurs notifications est une option d'écouter un ou plusieurs messages de messagerie vocale récemment reçus ; et
la seconde option d'exécuter l'opération prédéfinie est une option d'établir un nouvel appel téléphonique.

15. Le support de stockage non transitoire lisible par calculateur de l'une des revendications 12 à 14, dans lequel :
l'application respective est une application de communication par texte ;
la première option de revoir les une ou plusieurs nouvelles notifications est une option d'écouter une traduction de texte en voix d'un ou plusieurs messages texte récemment reçus ; et
la seconde option pour l'exécution de l'opération prédéfinie est une option de dictée d'un nouveau message texte en utilisant une traduction de voix en texte.
